Europäisches Patentamt

European Patent Office

Office européen des brevets

(19)

(11) **EP 1 494 232 A1**

(12) **EUROPEAN PATENT APPLICATION**
published in accordance with Art. 158(3) EPC

(43) Date of publication:
**05.01.2005 Bulletin 2005/01**

(51) Int Cl.⁷: **G11B 20/12**, G11B 27/00,
H04N 5/91

(21) Application number: **03745889.0**

(22) Date of filing: **03.04.2003**

(86) International application number:
**PCT/JP2003/004252**

(87) International publication number:
**WO 2003/085666 (16.10.2003 Gazette 2003/42)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **05.04.2002 JP 2002103282**

(71) Applicant: **MATSUSHITA ELECTRIC INDUSTRIAL
CO., LTD.**
**Kadoma-shi, Osaka 571-8501 (JP)**

(72) Inventors:
• **KUROSAWA, Yasuyuki**
  **Katano-shi, Osaka 576-0041 (JP)**

• **NAKAMURA, Tadashi**
  **Nara-shi, Nara 631-0056 (JP)**
• **ITO, Masanori**
  **Moriguchi-shi, Osaka 570-0096 (JP)**
• **SHIMOTASHIRO, Masafumi**
  **Katano-shi, Osaka 576-0012 (JP)**

(74) Representative: **Grünecker, Kinkeldey,
Stockmair & Schwanhäusser Anwaltssozietät
Maximilianstrasse 58
80538 München (DE)**

(54) **RECORDING MEDIUM**

(57)     Extended information capable of defining the reproduction sequence of still images is provided in the management information of program information for defining the reproduction sequence of animated images recorded on an information recording medium, whereby a program in which animated images and still images are mixed is attained. Recording of a program including only still images is attained, and a user-defined program in which the user defines reproduction sequence for the program including mixed still images is also attained.

When still images are recorded, Section Markers in which the display periods of the still images, the file names of the still images, etc. can be described are set in the management information of the program.

When still images are recorded, the same still images as the still images are MPEG-encoded and recorded, just like animated image data, and Section Markers in which the display periods of the still images, the file names of the still images, etc. can be described are set in the management information of the program.

Fig. 33

## Description

TECHNICAL FIELD

The present invention relates to a readable/writable recording medium and more particularly to a recording medium on which multimedia data including data having various formats, such as animated image data, still image data, audio data and data for data broadcasting, is recorded.

BACKGROUND ART

In the field of rewritable optical disks having an upper limit capacity of about 650 MB, a phase-change disk DVD-RAM having a capacity of several GBytes has been developed. Combined with the practical use of MPEG (MPEG2) used as a digital AV data coding standard, the DVD-RAM is expected to be a recording/reproducing medium not only for computers but also for the audio/video (AV) technical field.

A DVD disk, DVD recorder and DVD player, that is, embodiments of a conventional information recording medium, recording apparatus and reproducing apparatus, will be described below in the following sequence. 1. General description of the system of the DVD recorder apparatus; 2. General description of the functions of the DVD recorder apparatus; 3. General description of the DVD disk; 4. General description of AV information to be reproduced; 5. General description of management information and reproduction control for AV information; 6. Basic operations of reproduction function; and 7. Basic operations of recording function (1. General description of the system of the DVD recorder apparatus)

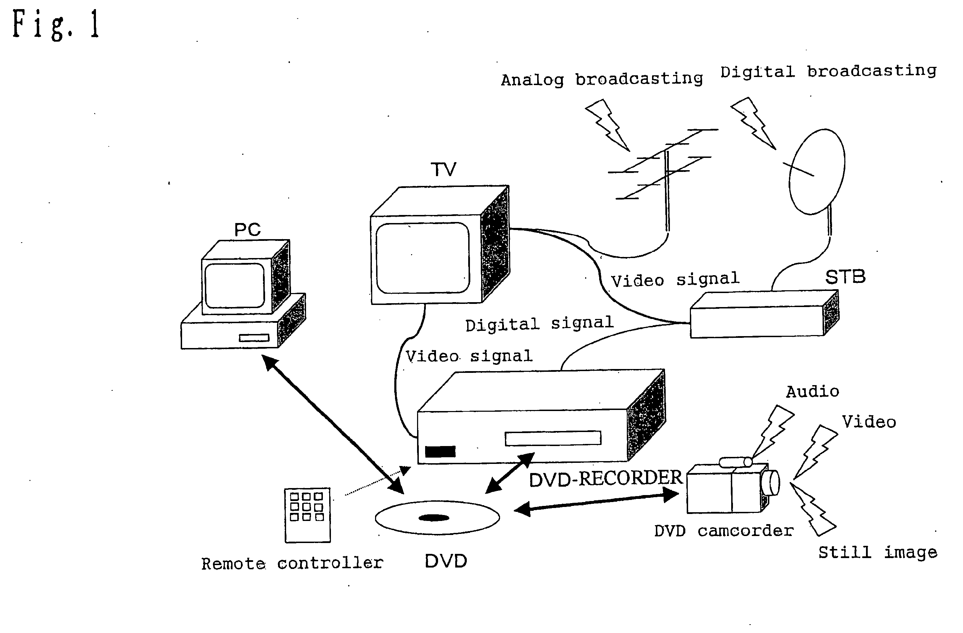

FIG. 1 is a view illustrating the outer appearance of a DVD recorder apparatus and an example of an interface between the DVD recorder apparatus and related apparatuses. As shown in FIG. 1, a DVD disk serving as an optical disk is loaded into the DVD recorder, and video information is recorded/reproduced. The operations are generally carried out by remote control.

Both analog and digital signals are available as video information to be input to the DVD recorder; analog broadcasting is available as analog signals, and digital broadcasting is available as digital signals. Generally, analog broadcasting is received and demodulated by a receiver built in a TV set and input to the DVD recorder as an analog video signal of NTSC or the like; and digital broadcasting is demodulated by an STB (Set Top Box) serving as a receiver to a digital signal and input to the DVD recorder and recorded.

On the other hand, video information recorded on a DVD disk is reproduced by the DVD recorder and output to the outside. Both analog and digital signals are also available for output, just as in the case of input; the analog signal is directly input to a TV set, and the digital signal passes through the STB, is converted into an analog signal, input to the TV set and displayed on the TV set as images.

Furthermore, in some cases, video information is recorded/reproduced on a DVD disk by a DVD camcorder or a personal computer, other than the DVD recorder. Even in the case of a DVD disk on which video information has been recorded by an apparatus other than the DVD recorder, when it is loaded into the DVD recorder, it is played back by the DVD recorder.

The video information of the above-mentioned analog broadcasting and digital broadcasting is usually accompanied by audio information. The accompanied audio information is also recorded/reproduced by the DVD recorder similarly. Although video information is generally formed of animated images, the information may be formed of still images in some cases. For example, this applies to the case wherein still images are recorded by the photographing functions of a DVD camcorder.

The digital I/F between an external apparatus, such as the DVD recorder and the STB, can be IEEE1394, ATAPI, SCSI, USB, Ethernet, etc.

Although NTSC, that is, a composite video signal, is exemplified as a signal used between the DVD recorder and the TV set, component signals for individually transmitting a luminance signal and color difference signals may be used. Furthermore, research and development is being promoted to replace an analog I/F for the video transition I/F between an AV apparatus and a TV set with a digital I/F, such as DVI, whereby it is naturally expected that the DVD recorder can be connected to the TV set via a digital I/F.

(2. General description of the functions of the DVD recorder apparatus)

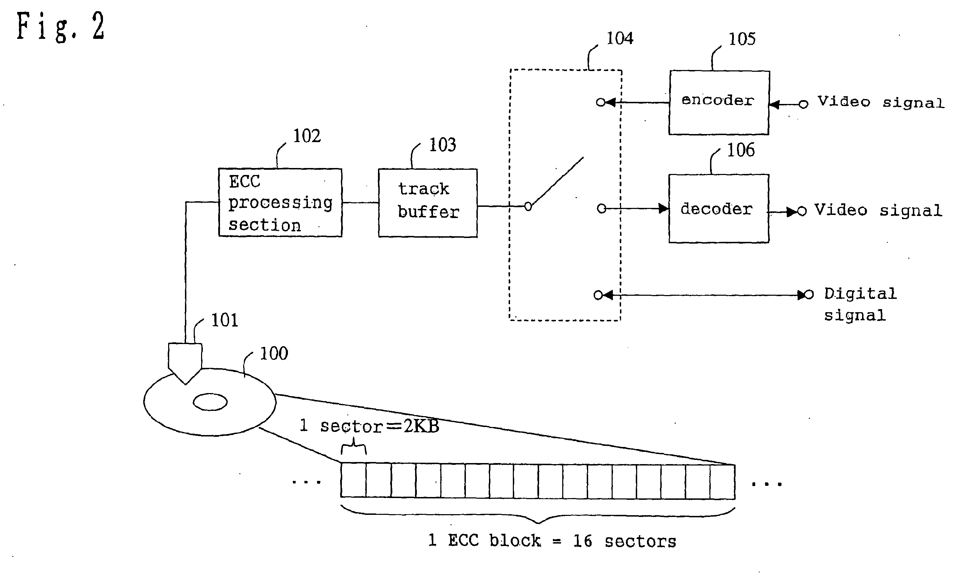

FIG. 2 is a block diagram showing the functions of the DVD recorder apparatus. The drive apparatus thereof comprises an optical pickup 101 that reads the data of a DVD-RAM disk 100, an ECC (Error Correcting Code) processing section 102, a track buffer 103, a switch 104 that switches the input/output of the track buffer 103, an encoder section 105 and a decoder section 106. As shown in the figure, data is recorded on the DVD-RAM disk 100 by using 1 sector = 2 KB as the minimum unit. In addition, the ECC processing section 102 carries out error correction processing by using one ECC block as a unit, that is, 16 sectors = 1 ECC block.

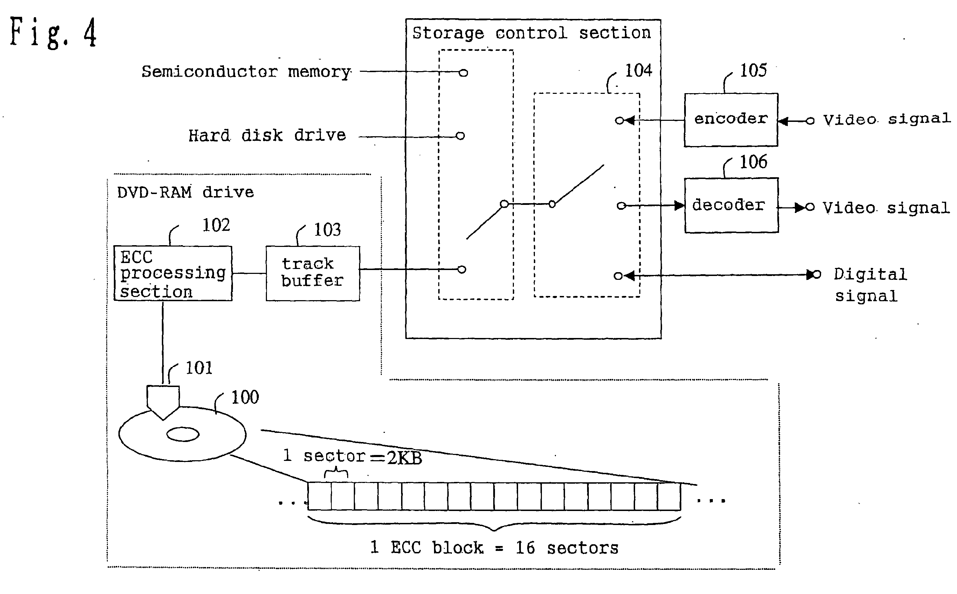

The DVD recorder apparatus may be provided with a semiconductor memory card and a hard disk drive apparatus as a data storage medium, in addition to the DVD-RAM disk. FIG. 4 is a block diagram showing a DVD recorder provided with a semiconductor memory card and a hard disk drive apparatus. One sector may have 512 B, 8 KB, etc. Furthermore, the ECC block may have 1 sector, 16 sectors, 32 sectors, etc. It is expected that the size of the sector and the number of sectors constituting the ECC block increase as the amount of recordable information increases.

The track buffer 103 is a buffer that is used to record AV data at a variable bit rate (VBR) so that the AV data is more efficiently recorded on the DVD-RAM disk 100. Although the read/write rate (Va) to the DVD-RAM disk 100 is a fixed rate, since the bit rate (Vb) changes depending on the complexity of the contents (images in the case of a video signal) of the data, the buffer is used to absorb the difference in this bit rate.

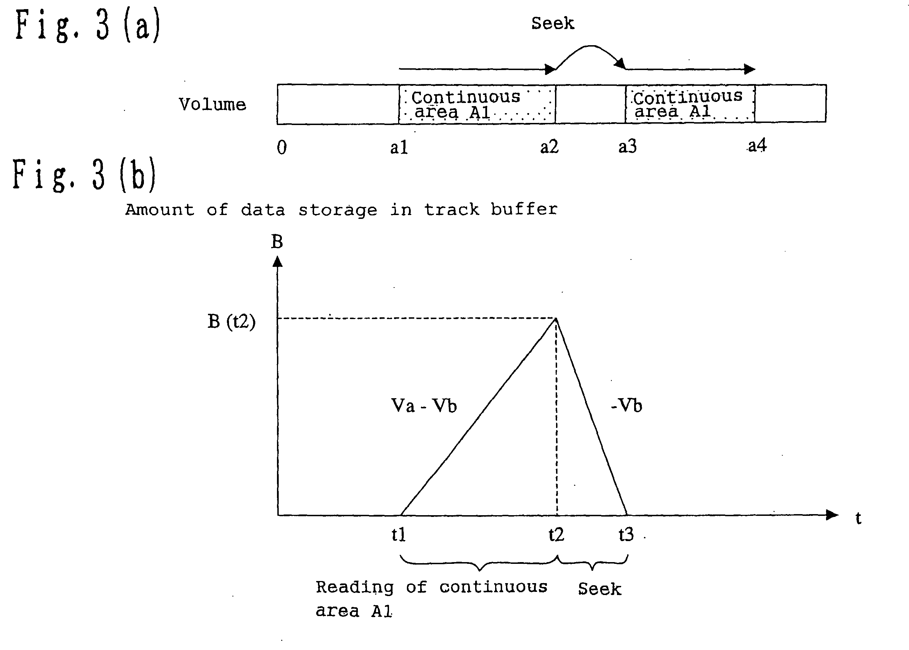

By further effectively using this track buffer 103, the AV data can be scatteringly located on the DVD-RAM disk 100. This will be described by using FIG. 3. FIG. 3 (a) is a view showing address space on the disk. In the case when AV data is separately recorded in a continuous area of [a1, a2] and a continuous area of [a3, a4] as shown in FIG. 3 (a), while seek is carried out from a2 to a3, by supplying the data stored in the track buffer to the decoder section 106, the AV data can be reproduced continuously. The condition obtained at this time is shown in FIG. 3 (b).

The AV data started to be read at position a1 is input to the track buffer 103 at time t1, and data output from the track buffer 103 starts. Hence, the amount of the data corresponding to the rate difference (Va - Vb) between the rate (Va) of input to the transfer buffer and the rate (Vb) of output from the transfer buffer is begun to be stored. This condition continues until the retrieval area a2 is reached, that is, until time t2 is reached. When it is assumed that the amount of the data stored in the transfer buffer 103 in this period is B (t2), the amount B (t2) stored in the transfer buffer 103 should only be consumed and supplied continuously to the decoder 106 in the period from time t2 to time t3 when data reading from the area a3 starts.

In other words, if the amount of data ([a1, a2]) to be read before seek, having been obtained, is a constant amount or more, even in the case when seek has occurred, continuous supply of the AV data is possible. The size of the continuous area wherein the continuous supply of the AV data is possible is represented by the following equation when converted into the number of ECC blocks (N_ecc). In the equation, N_sec is the number of sectors constituting an ECC block, S_size is the size of a sector, and Tj is seek performance (maximum seek time).

$$N\_ecc = Vb * Tj/$$

$$((N\_sec * 8 * S\_size) * (1 - Vb/Va))$$

In addition, a defective sector may occur in the continuous area. When this case is considered, the continuous area is represented by the following equation. In the equation, dN_ecc is the size of an allowable defective sector, and Ts is the time required for skipping the defective sector in the continuous area. This size is also represented by the number of ECC blocks.

$$N\_ecc = dN\_ecc + Vb * (Tj + Ts)/$$

$$((N\_sec * 8 * S\_size) * (1 - Vb/Va))$$

The case wherein data is read, namely, reproduced, from a DVD-RAM disk has been explained herein as an example; however, the case wherein data is written, namely, recorded, onto the DVD-RAM disk can also be considered similarly. As described above, if data having a constant amount or more has been recorded continuously on the DVD-RAM disk, continuous reproduction/recording is possible even if AV data is scatteringly recorded on the disk. This continuous area on the DVD disk is referred to as CDA. (3. General description of the DVD disk)

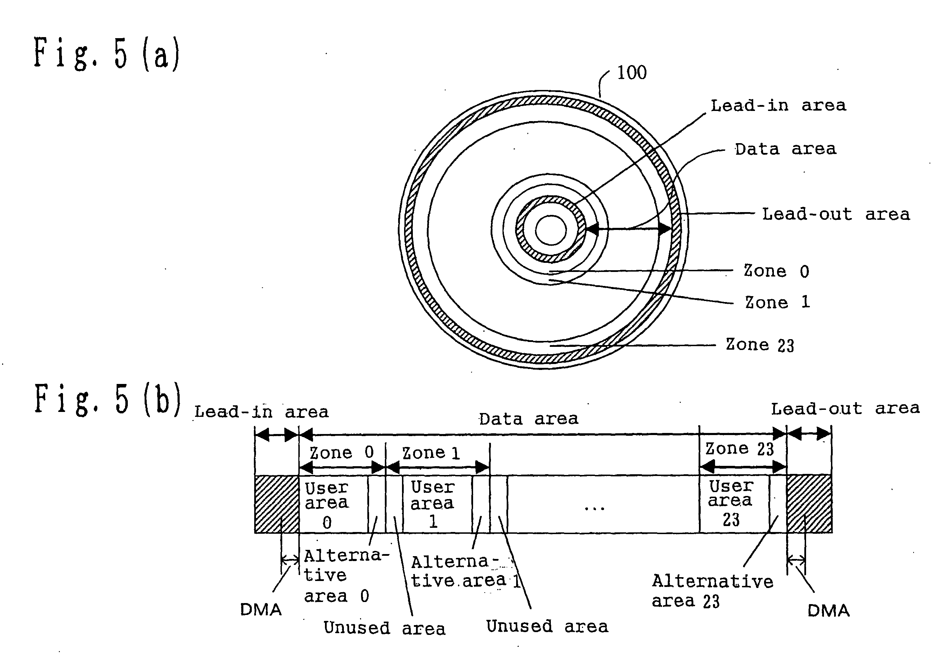

FIG. 5 is a view showing the outer appearance and the physical structure of the DVD-RAM disk serving as a recordable optical disk. The DVD-RAM disk is loaded into a DVD recorder in a state of being generally accommodated in a cartridge. This is done to protect the recording face thereof. However, when the protection of the recording face is done by another configuration or when nonuse of the cartridge is allowable, a configuration wherein the disk can be directly loaded into the DVD recorder without being accommodated in a cartridge is also possible as a matter of course.

Data is recorded on the DVD-RAM disk by the phase-change system. The data recorded on the disk is managed in sector units and accompanied by access-use addresses. Sixteen sectors become an error-correction unit, and an error-correction code is attached thereto; the sectors are referred to as an ECC block.

FIG. 5 (a) is a view showing the recording area of a DVD-RAM disk serving as a recordable optical disk. As shown in the figure, on the DVD-RAM disk, a lead-in area is located in the innermost circumference thereof, a lead-out area is located in the outermost circumference thereof, and a data area is located therebetween. In the lead-in area, reference signals required for stabilizing servo control during the access time of the optical pickup, signals for discrimination from other media, etc. have been recorded. Also in the lead-out area, reference signals similar to those in the lead-in area and the like are recorded. The data area is divided into sectors (one sector has 2048 bytes), one sector being the minimum access unit.

In addition, the data area of the DVD-RAM disk is divided into plural zone areas to attain rotation control referred to as Z-CLV (Zone Constant Linear Velocity) during recording/reproduction.

FIG. 5 (a) is a view showing plural zone areas provided concentrically on the DVD-RAM disk. As shown in the figure, the DVD-RAM disk is divided into 24 zone areas, zone 0 to zone 23. The rotational angular velocity of the DVD-RAM disk is set for each zone area so that the velocity is higher as the zone is located nearer to the inner interference side; the velocity is maintained constant when the optical pickup gains access in one zone. Hence, the recording density of the DVD-RAM disk is raised, and rotation control during recording/reproduction is made easy.

FIG. 5 (b) is a view in which the lead-in area, the lead-out area and the zone areas 0 to 23 shown concentrically in FIG. 5 (a) are illustrated in a lateral direction. The lead-in area and the lead-out area have a defect management area (DMA: Defect Management Area) therein. The defect management area is an area wherein position information indicating the positions of sectors having defects and the alternative position information indicating which of the above-mentioned alternative areas have sectors alternative to the defective sectors.

Each zone area has a user area therein and also has an alternative area and an unused area at the boundary section. The user area is an area that can be used as a recording area by a file system. The alternative area is an area that is used alternatively when a defective sector is present. The unused area is an area not used for data recording. About two tracks are provided for the unused area. Although a sector address is recorded at the same position as those of the sector addresses on adjacent tracks in a zone, since the recording positions of the sector addresses on tracks adjacent to the boundary of the zone are different in the Z-CLV system, the unused area is provided to prevent improper discrimination of sector addresses due to the difference.

As described above, sectors not used for data recording are present in the zone boundaries. Hence, on the DVD-RAM disk, logical sector numbers (LSN: Logical Sector Number) are assigned to the physical sectors of the user areas sequentially from the inner circumference so that only the sectors for data recording are indicated continuously.

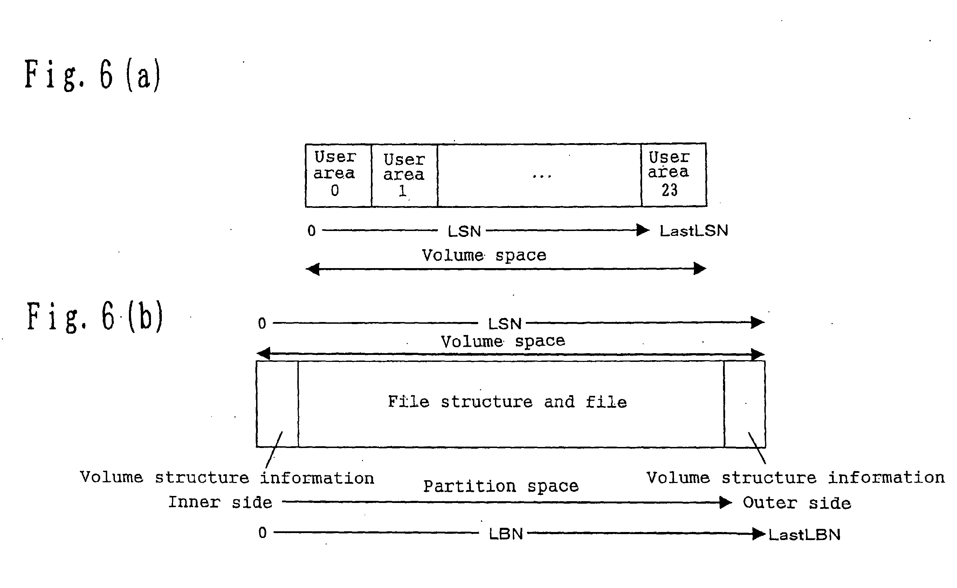

FIG. 6 shows the logical data space of the DVD-RAM disk formed of logical sectors. The logical data space is referred to as a volume space in which user data is recorded. In the volume area, recorded data is controlled by the file system. In other words, information for managing a group of sectors for data storage as a file and information for managing a group of files as a directory are recorded in partition spaces in the volume space, and volume structure information for managing partition spaces and the like is recorded at the head and end of the volume area. The file system in accordance with this embodiment is referred to as UDF conforming to the ISO13346.

The sectors in the above-mentioned group of sectors are not necessarily located continuously but located partially scatteringly in the volume space. Hence, among groups of sectors constituting files, the file system manages a group of sectors located continuously in the volume space as an extent and manages a file as a set of extents.

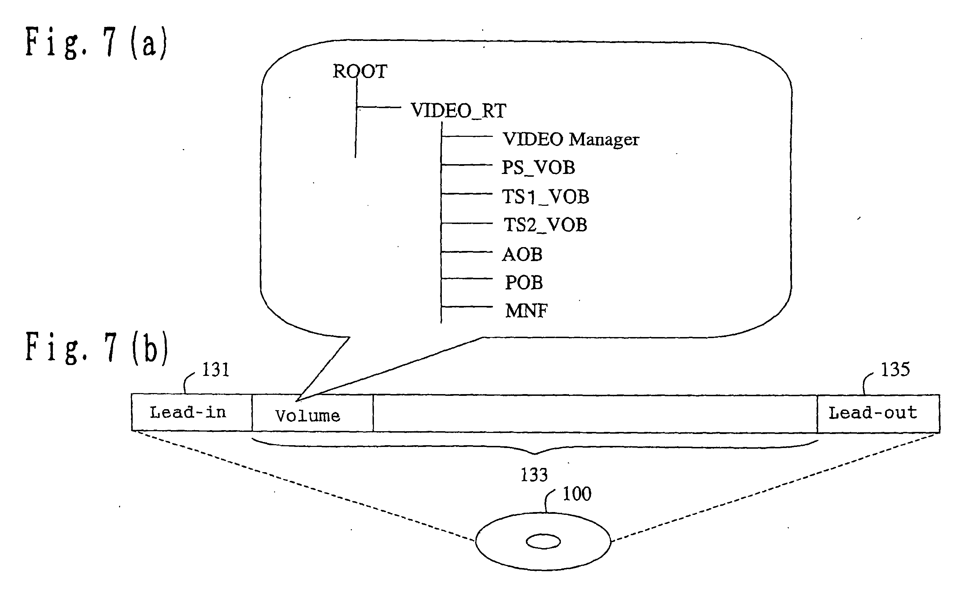

FIG. 7 shows the structures of the directories and files of animated image data recorded on the DVD-RAM disk. Under the root, a VIDEO_RT directory is present, and under this, the files of various objects serving as data for reproduction and VIDEO Manager files serving as management information indicating the reproduction sequence and various attributes of these are stored.

The objects are data conforming to the MPEG standard and available as PS_VOB, TS1_VOB, TS2_VOB, AOB, POB and MNF.

PS_VOB, AOB and POB are program streams (PS) of MPEG, and TS1_VOB and TS2_VOB are transport streams (TS). A program stream has a data structure formed in consideration of storing AV information on a package medium; on the other hand, a transport stream has a data structure formed in consideration of communication media.

Generally, each of PS_VOB, TS1_VOB and TS2_VOB is an object having both video information and audio information, and mainly composed of video information. In principle, among these, TS1_VOB is an object that is encoded by a DVD recorder and its internal picture structure is managed minutely, and TS2_VOB is an object that is encoded by an apparatus other than the DVD recorder, and its data structure, such as its internal picture structure, is partially unknown.

Typically, TS1_VOB is an object that is obtained when an analog video signal input externally is encoded to a transport stream by the DVD recorder, and TS2_VOB is an object that is obtained when a digital video signal input externally is directly recorded on the disk without being encoded.

AOB and POB are program streams of MPEG; AOB is an object mainly composed of audio information, and POB is an object mainly composed of still images. MNF is a file inherent to a manufacturer, and additional information for supporting the operations of a recording/reproducing apparatus is stored therein.

Not all of these PS_VOB, POB, AOB, TS1_VOB and TS2_VOB are required to be recorded.

The fact that information is mainly composed of video information or audio information described above means that bit-rate assignment is large. VOB is used for applications such as movies, and AOB is used for music applications.

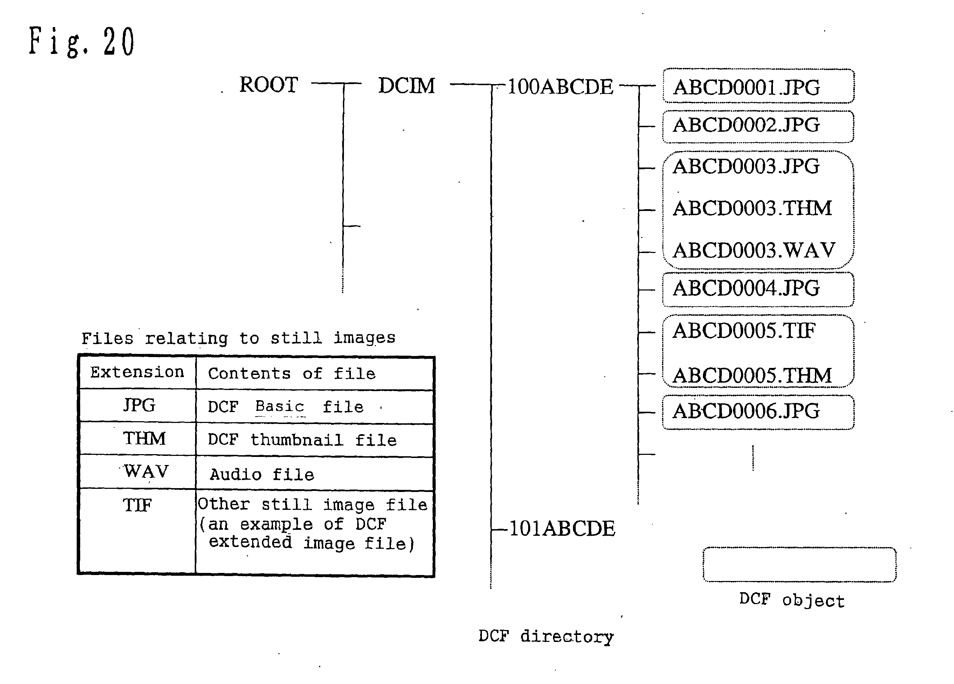

FIG. 20 shows the structure of the directories and files of still image data to be recorded on the DVD-RAM disk. The structure of directories and files conforming to the DCF standard is taken as an example and explained herein.

Under the root directory, a DCF image root directory (directory name: DCIM) is present, and DCF directories for image storage are present thereunder.

Under the DCF directory, DCF objects serving as reproduction data are stored.

The DCF objects are a group of files recorded in conformity with DCF and includes DCF Basic files, DCF extended image files, DCF thumbnail files, etc.

The DCF Basic file is recorded directly under the DCF directory, has a DCF file name and an extension "JPG," conforms to the Exif standard and is an image file having the data structure determined by the DCF standard.

The DCF extended image file is recorded directly under the DCF directory and has a DCF file name, but is an image file having an extension and a data structure different from those of the DCF Basic file.

The DCF thumbnail file is a compressed file for recording the thumbnails of the DCF extended image file.

Not all the DCF Basic files, DCF extended image files and DCF thumbnail files are required to be recorded.

The above-mentioned DCF Basic files and DCF extended image files have begun to be recorded as still image data with very high definition, thanks to the progress of image input apparatuses, such as CCD, in recent years.

(4. General descriptions of AV information to be reproduced)

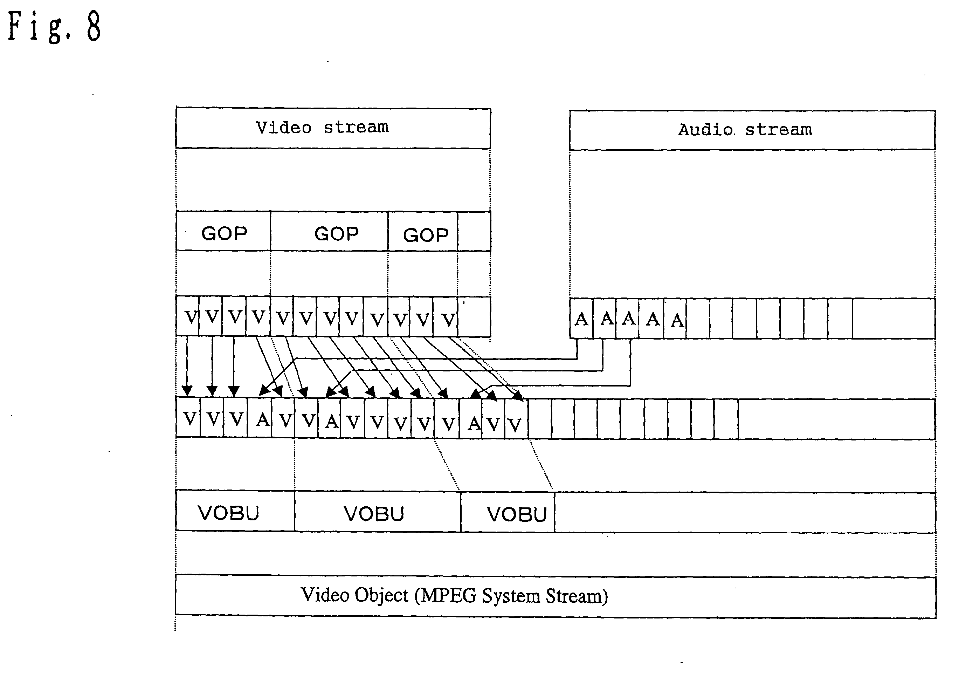

FIG. 8 is a view showing the structure of MPEG data to be recorded as various AV objects on the DVD disk. As shown in FIG. 8, a video stream and an audio stream are divided and multiplexed individually. In the MPEG standard, a stream obtained after multiplexing is referred to as a system stream. In the case of the DVD disk, a system stream in which information inherent to the DVD disk has been set is referred to as VOB (Video Object). The unit of division is referred to as a pack packet having a data amount of about 2 KBytes.

The video stream is encoded in conformity with the MPEG standard and compressed at a variable bit rate; a complicated image, such as an image with quick motion or the like, has a high bit rate. In the MPEG standard, video pictures are classified into I-, P- and B-pictures and encoded. Among these, the I-picture has been subjected to space-wise compression encoding that is completed within a frame, and the P- and B-pictures have been subjected to time-wise compression encoding that is carried out by utilizing the correlation between frames. In MPEG, at least a zone including an I-picture is managed as GOP (Group of Picture). GOP becomes an access point during special reproduction, such as fast-forward reproduction. This is because it has an I-picture compressed within a frame. On the other hand, for the encoding of an audio stream, AC3 or LPCM encoding is used in addition to MPEG audio AAC and MP3, in the case of DVD.

As shown in FIG. 8, the unit of data including video information formed of GOPs and audio information attached thereto after multiplexing is referred to as VOBU (Video Object Unit). In some cases, information for managing the animated image zones is included as header information in VOBU. A program stream (PS) and a transport stream (TS) are available as the system stream illustrated in FIG. 8. The former has a data structure obtained in consideration of package media, and the latter has a data structure obtained in consideration of communication media.

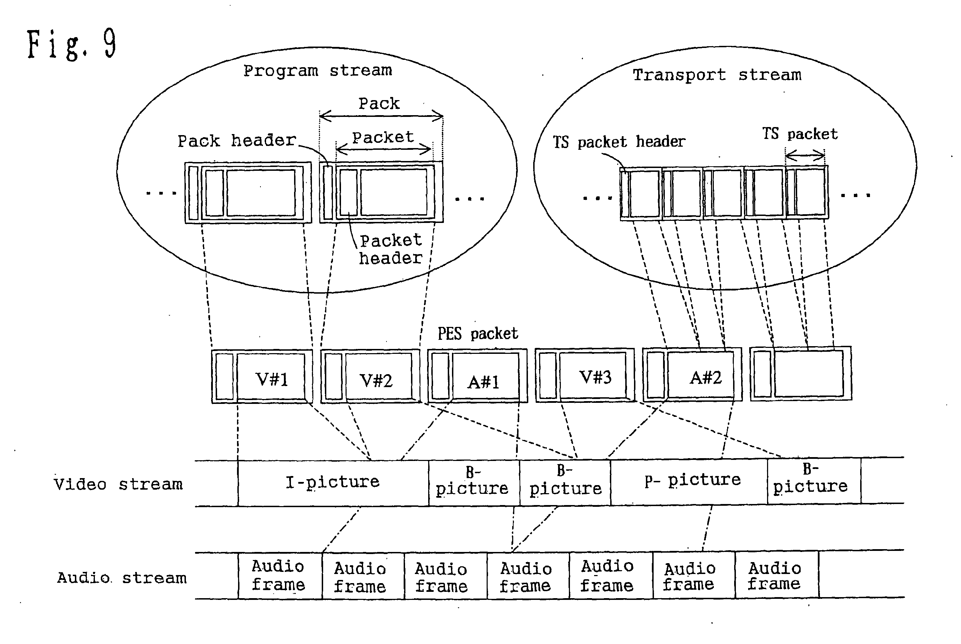

FIG. 9 is a view illustrating the general descriptions of the data structures of the program stream and the transport stream. The program stream is formed of packs, each having a fixed length and serving as the minimum unit for transmission and multiplexing, and the pack has one or more packets. Both the pack and the packet have a header portion and a data portion. In MPEG, the data portion is referred to as a payload. In the case of DVD, the fixed length of the pack is 2 KB so as to be matched with the sector size. A pack can have plural packets; however, a pack for storing video and audio information of DVD has only one packet; therefore, 1 pack = 1 packet is established, except for special cases.

On the other hand, the unit of transmission and multiplexing of a transport stream is formed of a TS packet having a fixed length. The size of the TS packet is 188 B so as to be matched with the ATM transmission serving as a communication standard. One or more TS packets being gathered constitute a PES packet. The PES packet is based on a concept being common in the program stream and transport stream, and their data structures are common. Packets stored in the packs of the program stream directly constitute a PES packet, and one or more gathered TS packets of the transport stream constitute a PES packet.

In addition, the PES packet is the minimum unit of encoding, and video information and audio information being common in encoding are respectively stored therein. In other words, video information and audio information being different in encoding are not stored in a mixed state in one PES packet. However, in the case of the same encoding system, it is not necessary to.guarantee picture and audio frame boundaries. As shown in FIG. 9, it is possible to have cases wherein one I-picture is stored in plural PES packets and plural pieces of picture data are stored in one PES packet.

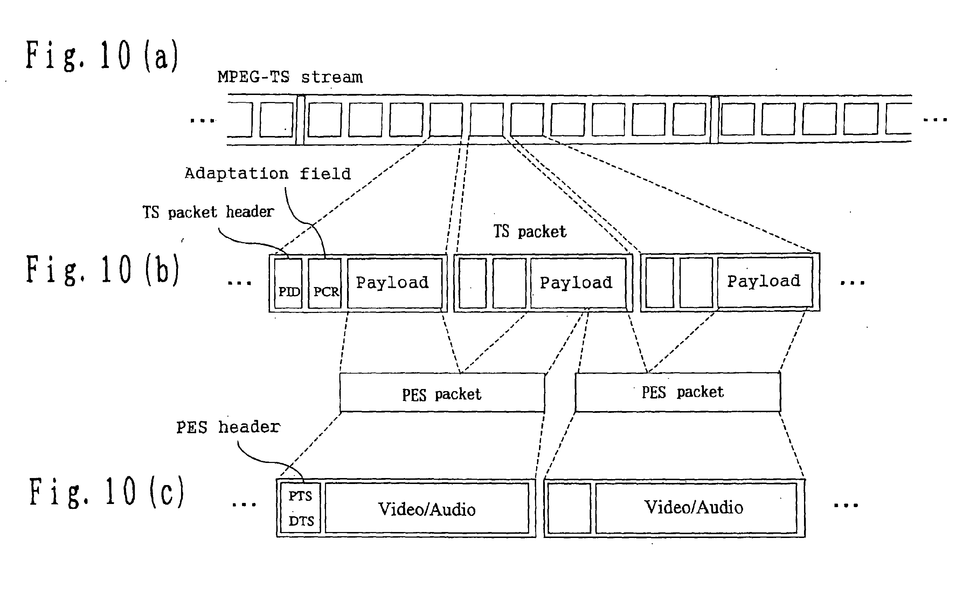

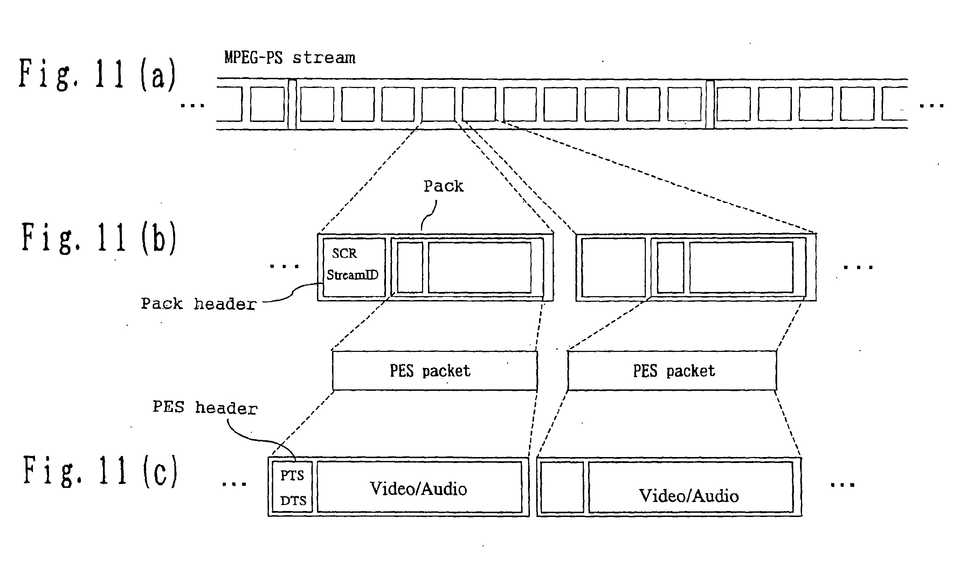

FIGS. 10 and 11 show the data structures of the transport stream and the program stream individually. As shown in FIGS. 10 and 11, the TS packet is formed of a TS packet header, an adaptation field and a payload section. PID (Packet Identifier) is stored in the TS packet header, whereby each type of streams, such as a video stream or an audio stream, to which the TS packet belongs, is identified.

PCR (Program Clock Reference) is stored in the adaptation field. PCR is the reference value of the standard clock (STC) for an apparatus that is used to decode streams. The apparatus demultiplexes the system stream at the timing of PCR and restructures each type of stream, such as a video stream.

DTS (Decoding Time Stamp) and PTS (Presentation Time Stamp) are stored in a PES header. DTS indicates the decoding timing of a picture/audio frame to be stored in the PES packet, and PTS indicates the presentation timing of video/audio output or the like. Not all PES packet headers are required to have PTS and DTS; if PTS and DTS are present in the PES packet wherein the head data of an I-picture is begun to be stored, decoding and output are carried out without hindrance.

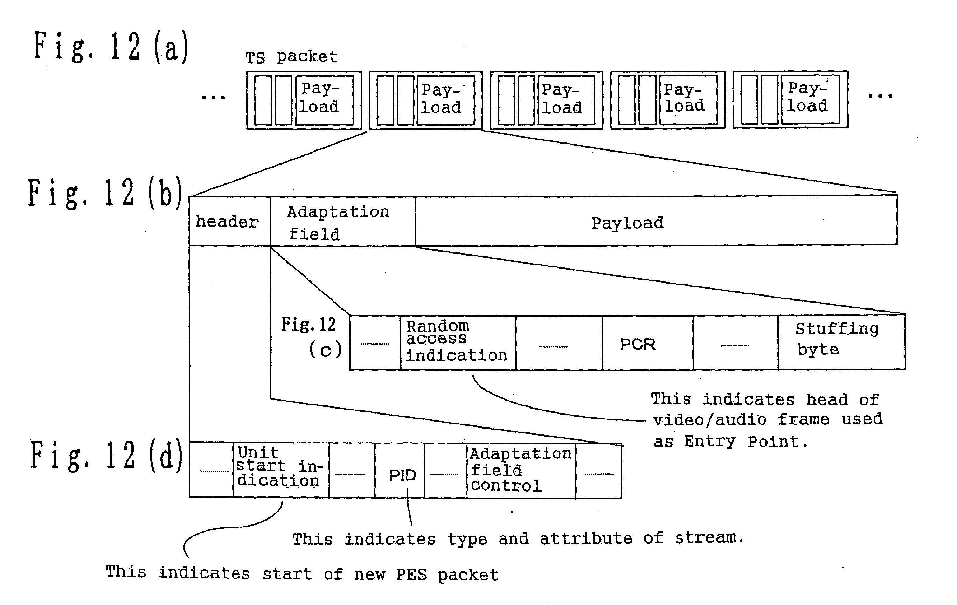

The details of the TS packet are shown in FIG. 12. As shown in FIG. 12, in addition to PCR, a random access indication flag is stored in the adaptation field, and the flag indicates as to whether the data located at the video/audio frame head having a possibility of becoming an access point is stored or not in the corresponding payload section. Furthermore, in addition to the above-mentioned PID, a unit start indication flag indicating the start of a PES packet and adaptation field control information indicating as to whether the adaptation field follows or not are also stored in the header section of the TS packet.

FIG. 11 shows the structures of packs constituting a program stream. The pack has SCR and Stream ID in the pack header thereof. SCR is substantially identical to PCR of the transport stream, and Stream ID is also substantially identical to PID. Still further, since the data structure of the PES packet is common to that of the transport stream, PTS and DTS are stored in the PES header.

One of the great differences between the program stream and the transport stream is that multi-programs are allowed to be used for the transport stream. In other words, in the case of the program stream, only one program can be transmitted when transmission is carried out in program units; however, in the case of the transport stream, it is assumed that plural programs are transmitted simultaneously. Hence, in the case of the transport stream, it is necessary for a reproducing apparatus to identify whether the stream for forming each program is a video stream or an audio stream.

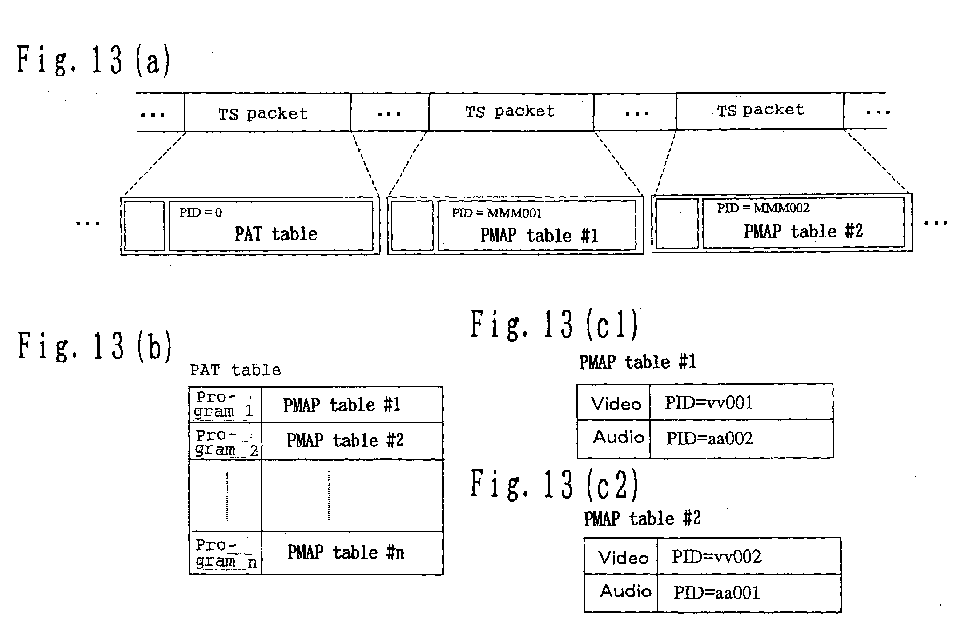

FIG. 13 shows a PAT table and PMAP tables for transmitting the configuration information of an audio stream and a video stream forming a program. As shown in FIG. 13, information regarding the combination of a video stream and an audio stream used for each program is stored in the PMAP table, and information regarding the combination of a program and a PMAP table is stored in the PAT table. The reproducing apparatus can detect the video stream and the audio stream for forming the program requested to be output by the PMAP table.

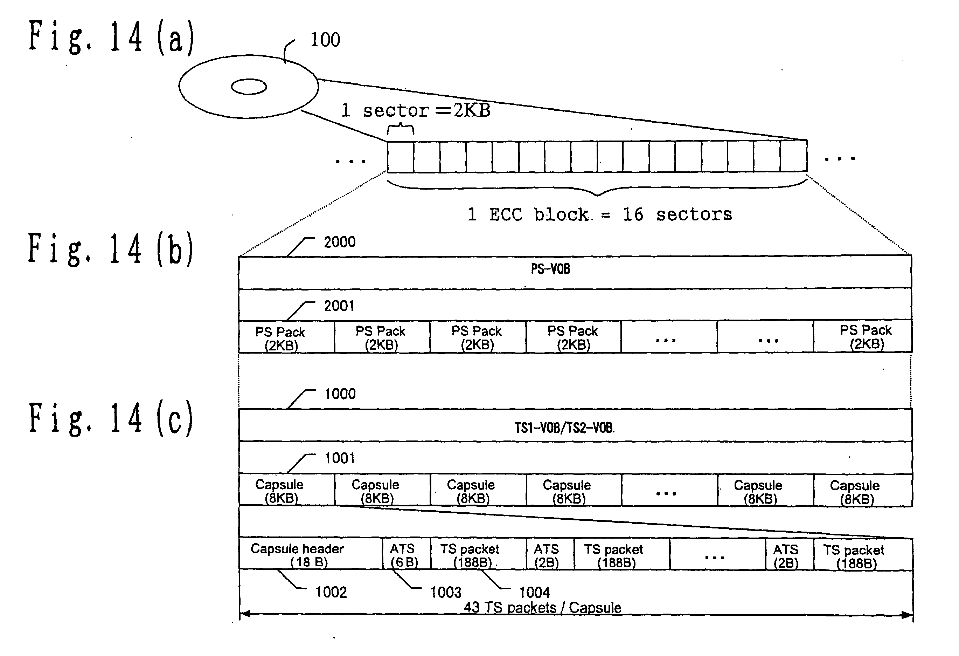

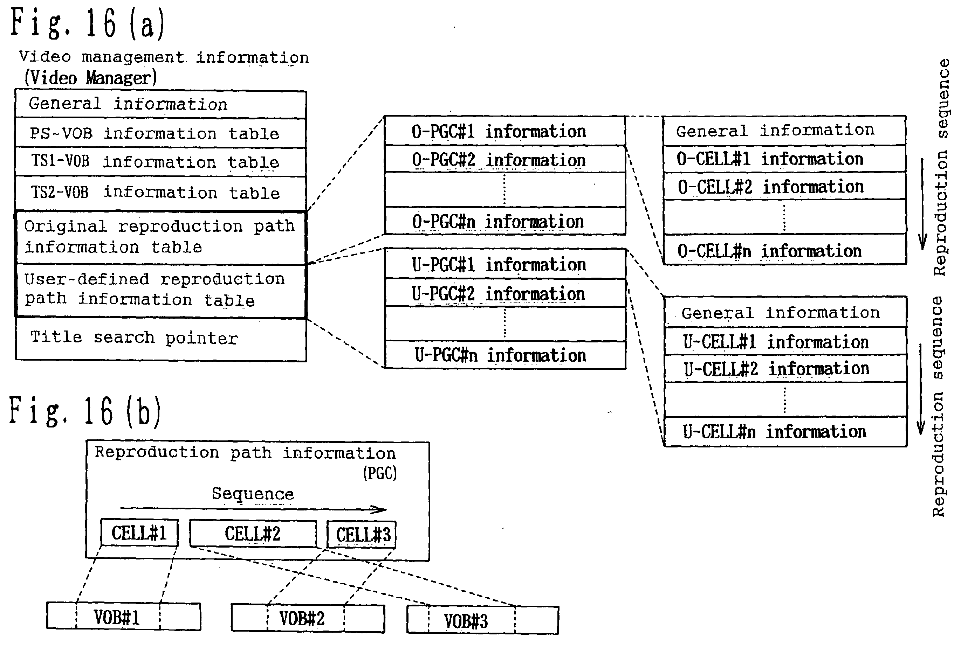

Next, the locations of the packs of the program stream and the TS packets of the transport stream described above will be described by using FIG. 14. As shown in FIG. 14 (a), 16 sectors constitute an ECC block. The packs (PS Packs) constituting a video object (PS_VOB) having the form of a program stream are located depending on the sector boundaries as shown in FIG. 14 (b). This is because both the size of the pack and the size of the sector are 2 KB.

On the other hand, the video objects (TS1-VOB/TS2-VOB) having the form of a transport stream are located in the ECC block in units of 8 KB size referred to as a capsule. The capsule has a header area of 18 B, and 43 TS packets, to which ATS information has been added, are located in the data area. The ATS information (Arrival Time Stamp Information) is information that is generated and added by the DVD recorder and indicates timing transmitted to the DVD recorder from the outside.

In the above-mentioned explanation, it is described that 43 MPEG transport packets are stored in an 8 KB capsule; however, the present invention is not limited to this; recording may be carried out by a method of forming TS1-VOB/TS2-VOB in a format wherein one ATS (having a fixed byte length) and one MPEG transport packet form a pair.

(5. General description of management information and reproduction control for AV information)

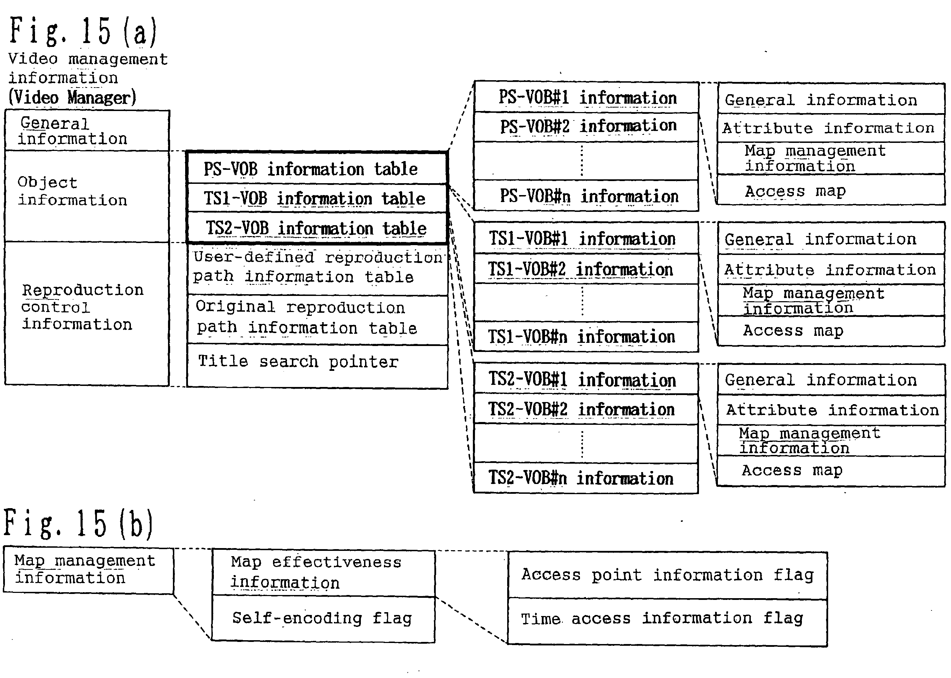

FIGS. 15 and 16 are views showing the data structure of a file referred to as video management information (Video Manager) shown in FIG. 7. The video management information has object information indicating management information, such as the recording position of each object on a disk, and reproduction control information indicating the reproduction sequence and the like of the objects.

FIG. 15 shows a case wherein PS-VOB#1 to PS-VOB#n, TS1-VOB#1 to TS1-VOB#n and TS2-VOB#1 to TS2-VOB#n are available as objects to be recorded on a disk. As shown in FIG. 15, depending on the types of these objects, the information table for PS-VOB, the information table for TS1-VOB and the information table for TS2-VOB are present individually, and each information table has the VOB information of each object.

The VOB information has the general information of the corresponding object, the attribute information of the object, an access map of converting the reproduction time of the object into an address on a disk and management information of the access map. The general information has the identification information of the corresponding object, the recording time of the object, manufacturer's ID, etc.; and the attribute information comprises video stream information (V_ATR) including the coding mode of the video stream, the number of audio streams (AST_Ns), and audio stream information (A_ATR) including the coding mode of the audio stream.

There are two reasons why the access map is required. The first is to prevent reproduction path information from directly making reference to the recording position of an object on a disk by using a sector address or the like so that the reference can be carried out indirectly by using the reproduction time of the object. In the case of a RAM medium, the recording position of an object may be changed by editing or the like in some cases; however, in the case when the reproduction path information directly makes reference to the recording position of the object by using a sector address or the like, the amount of the reproduction path information to be renewed increases. On the other hand, in the case when the reference is carried out indirectly by using the reproduction time, it is not necessary to renew the reproduction path information; the access map should only be renewed.

The second reason is that the AV stream generally has two references based on time axis and data (bit string) axis and that there is no complete correlation between these two references. For example, in the case of the MPEG-2 video, the international standard for video streams, the method of using variable bit rate (the method of changing the bit rate depending on the complexity of image quality) is going to be mainstream; in this case, random access based on time axis cannot be carried out since there is no proportional relationship between the amount of data from the head and reproduction time. To solve this problem, the object information has the access map for carrying out conversion between the time axis and the data (bit string) axis.

As shown in FIG. 15, the reproduction control information has a user-defined reproduction path information table, an original reproduction path information table and a title search pointer.

As shown in FIG. 16, there are two types of reproduction paths: original defined reproduction path information that is automatically generated to indicate all objects recorded by the DVD recorder during object recording and user-defined reproduction path information wherein the user can define reproduction sequence as desired. In DVD, the reproduction path is consistently referred to as PGC information (Program Chain Information); furthermore, the user-defined reproduction path information is referred to as U-PGC information, and the original reproduction path information is referred to as O-PGC information.

Each of the O-PGC information and the U-PGC information is information wherein cell information serving as information indicating cells used as reproduction zones of an object is listed in a table form. The reproduction zone of the object indicated by the O-PGC information is referred to as an original cell (O-CELL), and the reproduction zone of the object indicated by the U-PGC information is referred to as a user cell (U-CELL).

The cell indicates a reproduction zone of the object by using the reproduction start time and the reproduction end time of the object, and the reproduction start time and the reproduction end time are converted into the recording position information of the object on an actual disk by the above-mentioned access map.

As shown in FIG. 16 (b), the cells indicated by the PGC information form a reproduction sequence that is reproduced sequentially in accordance with the sequence of table entry.

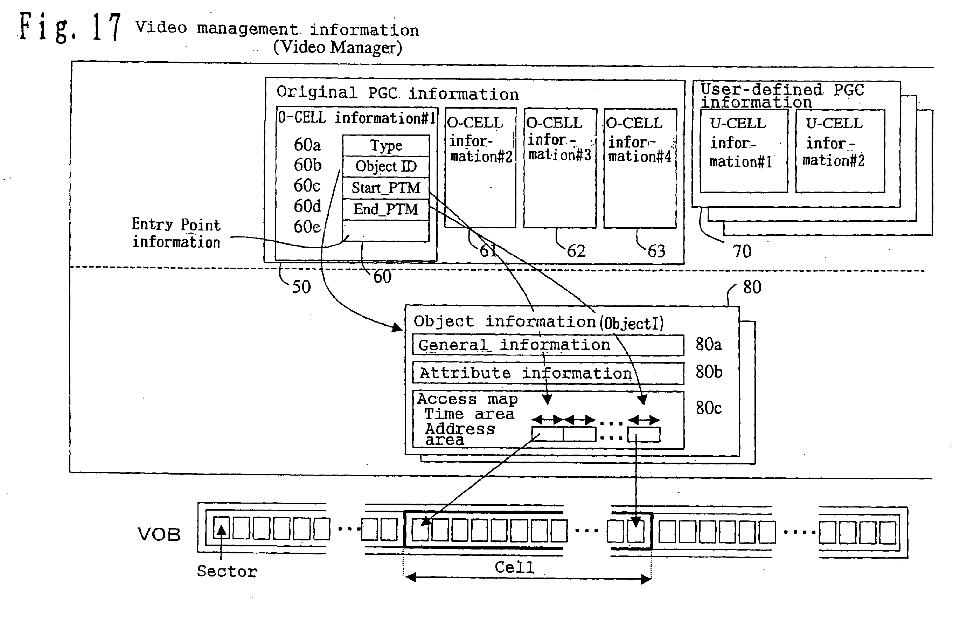

FIG. 17 is a view specifically illustrating the relationship among object, cell, PGC and access map. As shown in FIG. 17, original PGC information 50 includes at least one piece of cell information 60, 61, 62 and 63. The cell information 60 designates an object to be reproduced and also designates the type of the object and the reproduction zone of the object. The cell information recording sequence in the PGC information 50 indicates reproduction sequence at the time when the object designated by each cell is reproduced.

One piece of cell information 60 includes type information (Type) 60a indicating the type of the object designated thereby, object ID (Object ID) 60b serving as the identification information of the object, start time information (Start_PTM) 60c inside the object on the time axis, end time information (End_PTM) 60d inside the object on the time axis, and Entry Point information (EPI) 60e. EPI is stipulated by time information and plays a role as a bookmark, for example. The number of Entry Points in a cell is recorded in the cell information although not shown in the figure. In addition, EPI comprises PTM of the Entry Point thereof, the type information of the Entry Point, etc.

During data reproduction, the cell information 60 in the PCG information 50 is read out sequentially, and an object designated by each cell is reproduced; the amount to be reproduced corresponds to the reproduction zone designated by the cell.

An access map 80c converts the start time information and the end time information indicated by the cell information into the position information of the object on the disk.

The above-mentioned map information is generated and recorded at the time when the object is recorded. To generate the map, it is necessary to analyze the picture structures in object data. More specifically, it is necessary to detect the position of the I-picture shown in FIG. 9 and to detect time stamp information, such as PTS serving as the reproduction time of the I-picture, shown in FIGS. 10 and 11.

Now, problems occurring at the time when the map information of PS-VOB, TS1-VOB and TS2-VOB is generated will be described below. As described by referring to FIG. 1, PS-VOB and TS1-VOB are mainly generated when received analog broadcasting is encoded to MPEG streams by a DVD recorder. Hence, the I-picture and various time stamp information are self-generated; since the data structures in the streams are obvious for the DVD recorder, the generation of the map information is attained without causing problems.

Next, with respect to TS2-VOB, as described by referring to FIG. 1, received digital broadcasting is mainly recorded directly on the disk, without being encoded by the DVD recorder. Hence, unlike the case of PS-VOB, the position of the I-picture and the time stamp information are not self-generated; therefore, the data structures in the streams are not obvious for the DVD recorder; it is thus necessary to detect such information from digital streams to be recorded. Therefore, as described below, the DVD recorder detects the I-picture and time stamp with respect to the TS2-VOB map information wherein streams encoded outside the DVD recorder are recorded.

First, the detection of the I-picture is carried out by detecting the random access indication information of the adaptation field of the TS packet shown in FIG. 12. In addition, the detection of the time stamp is carried out by detecting PTS of the PES header. With respect to the time stamp, PCR of the adaptation field or ATS serving as the timing of the arrival of a TS packet transmitted to the DVD recorder is used instead of PTS in some cases. In any case, without analyzing the data structure of the video layer of the MPEG stream, the DVD recorder detects the position of the I-picture in accordance with the information of the system layer that is a layer higher than that. This is because the load to the system becomes large if the analysis is carried out up to the video layer to generate map information.

Furthermore, the detection of the system layer is impossible in some cases; in such a case, no map information can be generated, whereby it is necessary to indicate that no effective map information is present. These are indicated by the map management information shown in FIG. 15 (b) by the DVD recorder. As shown in FIG. 15 (b), the map management information has map effectiveness information and a self-encoding flag. The self-encoding flag indicates that the object is self-encoded by the DVD recorder, that the internal picture structure is definite and that the time stamp information, the position information of the I-picture, etc. of the map information are accurate. In addition, the map effectiveness information indicates as to whether an effective access map is present or not.

As examples wherein the detection of the system layer is impossible, it may be able to think of a case wherein no adaptation field is set or the digital stream is not the MPEG transport stream in the first place. Since various systems of digital broadcasting can be established in various countries of the world, it is expected as a matter of course that there is a case wherein the DVD recorder records objects from which no map can be generated. For example, in the case when a DVD recorder that is assumed to be used for digital broadcasting of Japan is used in the U.S.A. to record digital broadcasting of the U.S.A., there is a case wherein objects from which no map can be generated are recorded.

However, the DVD recorder can sequentially reproduce even an object from which no map information can be generated, from its head. In this case, the recorded digital stream is output to STB corresponding to the stream via a digital I/F, whereby this can be subjected to image reproduction.

(6. Basic operations of reproduction function)

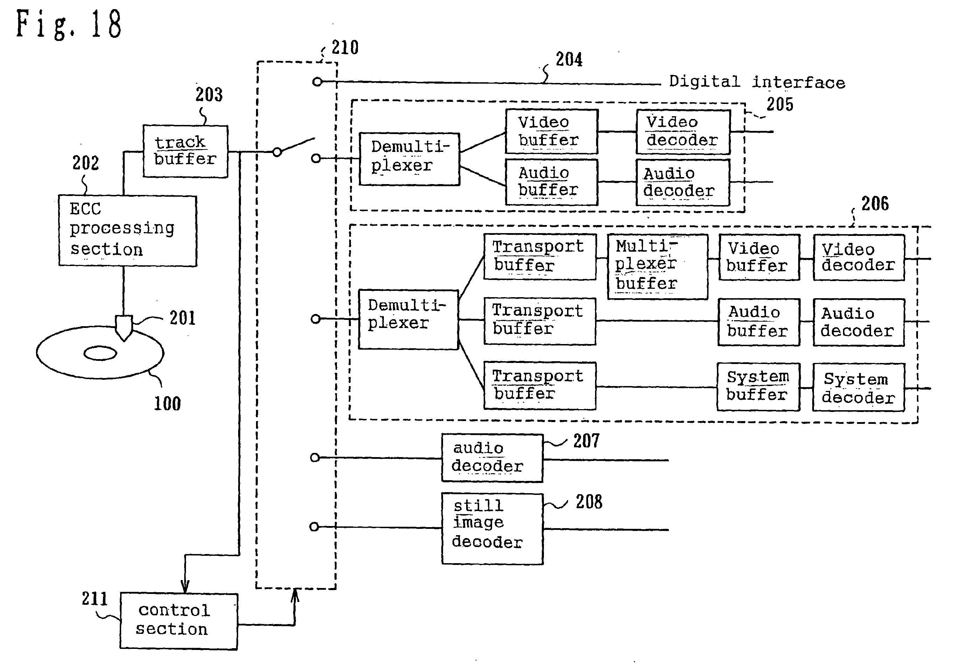

Next, the reproduction operation of the DVD recorder player that plays back the above-mentioned optical disk will be described below by using FIG. 18. As shown in FIG. 18, the player comprises an optical pickup 201 that reads data from a DVD-RAM disk 100, an ECC processing section 202 that carries out processing, such as error correction of readout data, a track buffer 203 that temporarily stores error-corrected readout data, a PS decoder 205 that reproduces program streams, such as animated image objects (PS_VOB), a TS decoder 206 that reproduces the transport streams of digital broadcasting objects (TS1_VOB), an audio decoder 207 that reproduces audio objects (AOB), a still image decoder 208 that decodes still image objects (POB), a switch 210 that switches data input to the decoders 205 and 206, and a control section 211 that controls the respective sections of the player.

The data recorded on the DVD-RAM disk 100 is read by the optical pickup 201 and stored in the track buffer 203 via the ECC processing section 202. The data stored in the track buffer 203 is input to the PS decoder 205, the TS decoder 206, the audio decoder 207 or the still image decoder 208, and then decoded and output.

At this time, the control section 211 determines data to be read on the basis of the reproduction sequence indicated by the reproduction path information (PGC) shown in FIG. 16. In other words, in the case of the example shown in FIG. 16, the control section 211 carries out control, that is, first reproduces the zone (CELL#1) of VOB#1, then reproduces the zone (CELL#2) of VOB#3, and finally reproduces VOB#2 ((CELL#3).

In addition, in accordance with the cell information of the reproduction path information (PGC) shown in FIG. 17, the control section 211 can obtain the type of the cell to be reproduced, the corresponding object, and the reproduction start time and reproduction end time of the object. The control section 211 inputs the data in the object zone specified by the cell information to an applicable decoder.

At this time, by using the Object ID of the cell information, the control section 211 specifies the object to be reproduced. Besides, the control section 211 specifies the cell serving as the reproduction zone of the specified object by converting StartPTM and EndPTM of the cell information into the addresses of the disk information in accordance with the access map of the corresponding VOB information.

Furthermore, the player of this embodiment is further provided with a digital interface 204 that supplies AV streams to the outside. Hence, AV streams can also be supplied to the outside via communication means, such as IEEE1394, IEC958, etc. In particular, in the case of TS2-VOB that is not self-encoded, no corresponding decoder may be present inside the player; hence, TS2-VOB can be directly output to an external STB via the digital interface 204 without being decoded and can be reproduced by the STB.

When digital data is directly output to the outside, the control section 211 makes a judgment as to whether random access reproduction is possible or not, on the basis of the map management information shown in FIG. 15 (b). If the access point information flag is effective, the access map has the position information of I-picture. Hence, if the request for fast-forward reproduction or the like is issued from an external apparatus, the control section 211 can output digital data including the I-picture to the external apparatus via the digital I/F, depending on this request. In addition, if the time access information flag is effective, time access is possible. Hence, the control section 211 can output digital data including the corresponding picture data to the external apparatus via the digital I/F at a designated reproduction time depending on the time access request from the external apparatus.

(7. Basic operations of recording function)

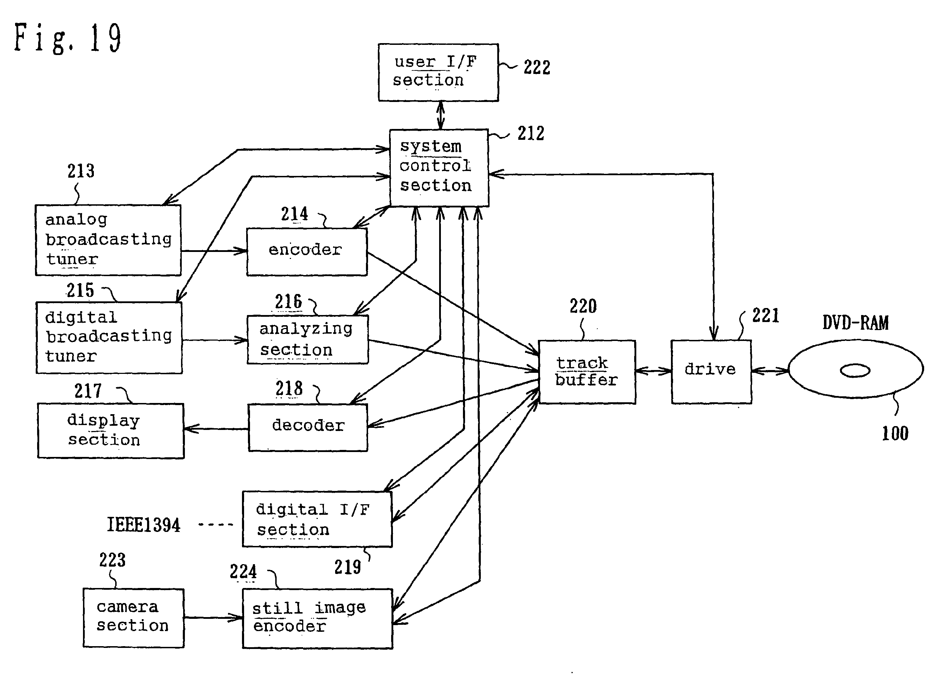

Next, by using FIG. 19, the configuration and operations of the DVD recorder in accordance with the present invention that carries out recording and reproduction on the above-mentioned optical disk will be described. As shown in FIG. 19, the DVD recorder comprises a user I/F section 222 that accepts display to the user and accepts requests from the user, a system control section 212 that carries out the overall management and control of the DVD recorder, an analog broadcasting tuner 213 that receives VHF and UHF, an encoder 214 that converts analog signals into digital signals and encodes them to MPEG program streams, a digital broadcasting tuner 215 that receives digital satellite broadcasting, an analyzing section 216 that analyzes MPEG transport streams being sent by a digital satellite, a display section 217, such as a TV set and a speaker, and a decoder 218 that decodes AV streams.

In addition, in the case when the recorder is a DVD camcorder, it is provided with a camera section 223 that inputs images and a still image encoder 224 that encodes the AV signal sent from the camera section 223 to JPEG streams.

The decoder 218 comprises the first and second decoders and the like shown in FIG. 18. Furthermore, the DVD recorder comprises a digital I/F section 219, a track buffer 220 that temporarily stores written data, and a drive 221 that writes data on the DVD-RAM disk 100. The digital I/F section 219 is an interface, such as IEEE1394 or USB, which outputs data to an external apparatus via communication means.

In the DVD recorder configured as described above, the user I/F section 222 first receives a request from the user. The user I/F section 222 transmits the request from the user to the system control section 212, and the system control section 212 interprets the request from the user and issues a processing request to each module.

Self-encoding wherein digital data to be input is self-encoded, and outside encoding wherein encoded digital data is recorded on a disk without being encoded are available for image recording.

(7.1 Image recording operation by self-encoding)

First, with respect to image recording by self-encoding, operation wherein analog broadcasting is encoded to PS-VOB and recorded will be described below specifically. The system control section 212 requests the analog broadcasting tuner 213 to carry out reception and requests the encoder section 214 to carry out encoding. The encoder section 214 carries out video encoding, audio encoding and system encoding for AV data being sent from the analog broadcasting tuner 213 and carries out transmission to the track buffer 220.

Immediately after the start of the encoding, the encoder section 214 transmits time stamp information included in the head data of the MPEG program stream being encoded as reproduction start time (PS_VOB_V_S_PTM) to the system control section 212, and then transmits information necessary for creating an access map to the system control section 212 concurrently with the encoding. This value is set in Start_PTM of the cell information shown in FIG. 17, which is generated later. PTS is generally used as the time stamp information, but SCR may be used instead.

Next, the system control section 212 issues a recording request to the drive 221, and the drive 221 fetches the data stored in the track buffer 220 and records the data on the DVD-RAM disk 100. At this time, the above-mentioned continuous areas (CDA) are retrieved from the recordable area on the disk, and the data is recorded in the retrieved continuous areas. The end of the image recording is instructed by a stop request from the user. The image recording stop request from the user is transmitted to the system control section 212 via the user I/F section 222, and the system control section 212 issues a stop request to the analog broadcasting tuner 213 and the encoder section 214.

The encoder 214 receives the encoding stop request from the system control section 212, stops encoding, and finally transmits the time stamp information included in the end data of the encoded MPEG program stream as a reproduction end time (PS_VOB_V_E_PTM) to the system control section 212. This value is set in End_PTM of the cell information shown in FIG. 17. PTS is usually set as the time stamp information, but SCR may be used instead.

After the end of the encoding, on the basis of the information received from the encoder 214, the system control section 212 generates VOB information (PS-VOBI) for PS-VOB shown in FIG. 15 and reproduction control information. The VOB information generated at this time includes an access map adapted for the type of the object and map management information. The system control section 212 effectively sets the map effectiveness information of the map management information and sets the self-encoding flag at ON.

In addition, as the reproduction control information, the original reproduction path (O-PGC information) shown in FIG. 16, wherein an object to be recorded is one target to be reproduced. The generated O-PGC information is additionally written in the original reproduction path table. The original reproduction path (O-PGC information) has cell information. "PS-VOB" is set as the type information of the cell information.

Finally, to the drive 221, the system control section 212 issues a request that the recording of the data stored in the track buffer 220 should be ended and also issues a request that the VOB information for PS-VOB (PS_VOBI) and reproduction control information should be recorded, and the drive 221 records the remaining data of the track buffer 220 and these information on the DVD-RAM disk 100, whereby the image recording is ended.

Analog broadcasting may be encoded to TS1-VOB as a matter of course. In this case, the encoder 214 is required to be an encoder that converts an analog signal into a digital signal and encodes the signal to an MPEG transport stream; the type information in the cell information is set in "TS1-VOB." In this case, PTS or PCR may be used for Start_PTM and End_PTM. (7.2 Image recording operation by outside encoding)

Next, image recording by outside encoding will be described below specifically through operation for image recording of digital broadcasting. In this case, the type of objects to be recorded becomes TS2-VOB. A digital broadcasting recording request by the user is transmitted to the system control section 212 via the user I/F section 222. The system control section 212 requests the digital broadcasting tuner 215 to carry out reception and requests the analyzing section 216 to carry out data analysis.

The MPEG transport stream transmitted from the digital broadcasting tuner 215 is transferred to the track buffer 220 via the analyzing section 216. As the information required for the generation of the VOB information (TS2_VOBI) of the encoded MPEG transport stream (TS2-VOB) received first as digital broadcasting, the analyzing section 216 extracts the time stamp information included in the head data of the transport stream as start time information (TS2_VOB_V_E_PTM) and transmits the information to the system control section 212. The start time information is set in Start_PTM of the cell information shown in FIG. 17, which is generated later. This time stamp information becomes PCR or PTS. In addition, ATS serving as the timing of the transmission of an object to the DVD recorder may also be used instead.

Furthermore, the analyzing section 216 analyzes the system layer of the MPEG transport stream and detects information required for access map creation. The position of the I-picture in an object is detected on the basis of the random access indicator (random_access_indicator) in the adaptation field (adaptation_field) in the TS packet header as described above.

Next, the system control section 212 outputs a recording request to the drive 221, and the drive 221 fetches the data stored in the track buffer 220 and records the data on the DVD-RAM disk 100. At this time, the system control section 212 additionally gives an instruction to the drive 221 as to the recording position on the disk in accordance with the allocation information of the file system. At this time, the above-mentioned continuous areas (CDA) are retrieved from the recordable area on the disk, and data is recorded in the retrieved continuous areas.

The end of the image recording is instructed by a stop request from the user. The image recording stop request from the user is transmitted to the system control section 212 via the user I/F section 222, and the system control section 212 issues a stop request to the digital broadcasting tuner 215 and the analyzing section 216.

The analyzing section 216 receives the analysis stop request from the system control section 212 and stops analysis, and finally transmits the time stamp information included in the data in the end zone of the analyzed MPEG transport stream as an indication end time (TS2_VOB_V_E_PTM) to the system control section 212. This value is set in End_PTM of the cell information shown in FIG. 17. This time stamp information becomes PCR or PTS. In addition, ATS serving as the timing of the transmission of an object to the DVD recorder may be used instead.

After the end of the digital broadcasting reception, on the basis of the information received from the analyzing section 216, the system control section 212 generates VOB information for TS2-VOB (TS2_VOBI) shown in FIG. 15 and reproduction control information. The VOB information generated at this time includes an access map adapted for the type of the object and map management information. The system control section 212 effectively sets the map effectiveness information of the map management information in the case when the position of the I-picture in the object and the like can be detected and an effective access map is generated.

In addition, the self-encoding flag is set at OFF. In the case when no effective access map can be generated, the map effectiveness information is set invalid. It is considered that the case wherein no effective access map can be generated corresponds to a case wherein non-adaptable digital broadcasting is received, a case wherein random access information is not present in the adaptation field, and the like. In addition, in the case when information is directly input from the digital I/F, the information may not be an MPEG transport stream; in this case, the map effectiveness information is also set invalid as a matter of course.

Furthermore, as the reproduction control information, the original reproduction path (O-PGC information) shown in FIG. 16, wherein an object to be recorded is one object to be reproduced. The generated O-PGC information is additionally written in the original reproduction path table. The original reproduction path (O-PGC information) has cell information. "TS2-VOB" is set as the type information of the cell information.

Finally, to the drive 221, the system control section 212 issues a request that the recording of the data stored in the track buffer 220 should be ended and also issues a request that the VOB information for TS2-VOB (TS2-VOBI) and reproduction control information should be recorded, and the drive 221 records the remaining data of the track buffer 220 and these information on the DVD-RAM disk 100, whereby the image recording is ended.

The operation has been described above on the basis of the recording start and end requests from the user; however, in the case of timer image-recording used for VTRs, for example, instead of the user, the system control section just automatically issues the image-recording start and end requests; therefore; hence, inherently, there is no difference in the operation of the DVD recorder.

With respect to the recording of still images, self-encoding wherein an AV signal to be input is self-encoded and outside encoding wherein encoded digital data (a still image file) is recorded on a disk without being encoded are available.

(7.3 Still image recording operation by self-encoding)

With respect to still image recording, operation wherein AV data transmitted from the camera section 223 is JPEG-encoded and recorded will be described below specifically.

The system control section 212 requests the camera section 223 to output the AV data and requests the still image encoder section 224 to carry out encoding. The still image encoder section 224 JPEG-encodes the AV data transmitted from the camera section 223 and transmits the data to the track buffer 220.

Next, the system control section 212 issues a recording request to the drive 221, and the drive 221 fetches the data stored in the track buffer 220 and records the data on the DVD-RAM disk 100.

At this time, the system control section 212 creates a DCF image root directory and a DCF directory as necessary from the information of the file system, gives them names so that the names do not coincide with the file names of DCF objects having been recorded already and records a still image file on the DVD-RAM disk 100.

After one still image file is recorded, the image recording is ended. Or, in the case when continuous photographing is instructed from the user, the recording is ended by a stop request from the user or after a predetermined number of still image files are recorded.

The image recording stop request from the user is transmitted to the system control section 212 via the user I/F section 222, and the system control section 212 issues a stop request to the camera section 223 and the still image encoder section 224.

(7.4 Still image recording operation by outside encoding)

With respect to still image recording, operation wherein a still image file is input from the digital I/F section 219 and recorded will be described below specifically.

The DCF object transmitted from the digital I/F section 219 is transmitted to the track buffer 220.

Next, the system control section 212 outputs a recording request to the drive 221, and the drive 221 fetches the data stored in the track buffer 220 and records the data on the DVD-RAM disk 100.

At this time, the system control section 212 creates a DCF image root directory and a DCF directory as necessary from the information of the file system, gives them names so that the names do not coincide with the file names of DCF objects having been recorded already and records a still image file on the DVD-RAM disk 100.

In the case when the DVD recorder is connected to a PC via SCSI, ATAPI or the like and when still images are transmitted from the PC to the DVD recorder, the operation of the file system information on the DVD-RAM disk 100 (the creation of the DCF directory, the setting of the DCF object name and the like) on the PC side is carried out in some cases.

After one still image file is recorded, the image recording is ended. In the case when continuous photographing is instructed by the user, the image recording is ended by a stop request from the user or after a predetermined number of still image files are recorded.

The image recording stop request from the user is transmitted to the system control section 212 via the user I/F section 222, and the system control section 212 issues a stop request to the digital I/F section 219.

In the case when the DVD recorder described above imports many pieces of still image data having been recorded on a memory card via a memory card I/F section, it is requested that the imported still images can be retrieved and browsed quickly. WO 02/23898 is available as a recording format of the DVD-RAM disk, which makes the quick retrieval and browsing of the imported still images possible. The recording format of WO 02/23898 will be described below.

The entire disclosure of WO 02/23898 are incorporated herein by reference in its entirely.

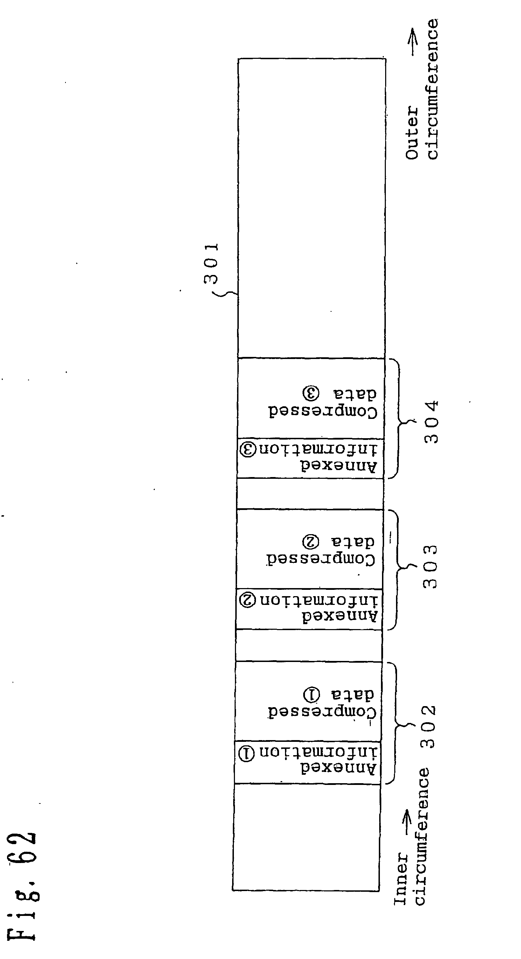

FIG. 62 shows a DVD-RAM disk 301 in which plural still image files (DSC objects) 302, 303 and 304 are stored. The left side on the page corresponds to the inner circumference side of the DVD-RAM disk 301, and the right side corresponds to the outer circumference side of the DVD-RAM disk 301. In FIG. 62, the three still image files 302, 303 and 304 are recorded; however, in reality, it is assumed that many still image files 302, 303 and 304 have been recorded.

Each of the still image files 302, 303 and 304 is formed of a set of annexed information and compressed data. The compressed data is, for example, data of photographed JPEG images. In addition, the annexed information includes thumbnail image data that is used in the case when the JPEG image data undergoes thumbnail display and also includes metadata, such as date information, aperture and shutter speed, for retrieving the still image files 302, 303 and 304.

In the case when the still image files 302, 303 and 304 stored on the DVD-RAM disk 301 shown in FIG. 62 undergoes thumbnail display, it is necessary to access each of the still image files 302, 303 and 304 and to read the thumbnail image data of each of the annexed information. However, the reproducing apparatus requires many seek operations to read the thumbnail image data of each of the annexed information. Hence, the thumbnail display has a problem of taking a time.

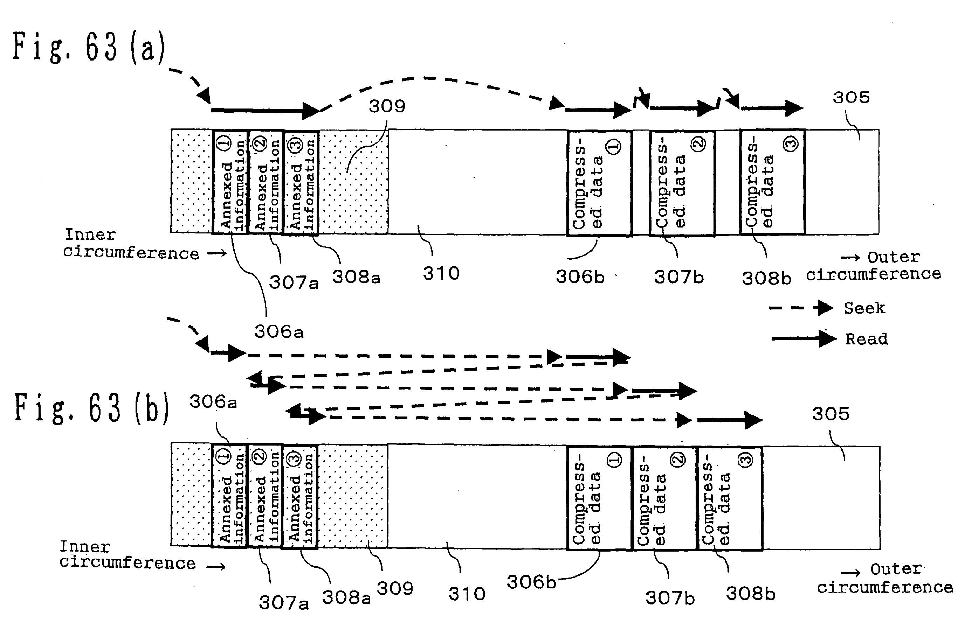

WO 02/23898 was proposed to solve this kind of problem. In other words, FIG. 63 (a) shows a DVD-RAM disk 305 on which still image files (DSC objects) are recorded by the method of WO 02/23898. In FIG. 63 (a), the left side on the page corresponds to the inner circumference side of the DVD-RAM disk 305, and the right side corresponds to the outer circumference side of the DVD-RAM disk 305. The annexed information portion and the compressed data portion of each still image file have been recorded at respectively different recording areas on the DVD-RAM disk 305.

In other words, in the area 309 on the inner circumference side of the DVD-RAM disk 305, pieces of annexed information constituting a still image file are recorded collectively, and in the area 310 on the outer circumference side of the DVD-RAM disk 305, the compressed data constituting the still image files is recorded. For example, the annexed information (306a) and the compressed data 306b of a still image file comprising the annexed information (306a) and the compressed data 306b are respectively recorded in the area 309 on the inner circumference side and the area 310 on the outer circumference side of the DVD-RAM disk 305 separately.

Thumbnail display by using the DVD-RAM disk 305 is carried out by only sequentially reading the annexed information (306a), annexed information (307b) and annexed information (308a) stored in the area 309 on the inner circumference side of the DVD-RAM disk 305 in the direction from the inner circumference side to the outer circumference side of the disk, for example. Hence, long-time seek operation in the case of the DVD-RAM disk 301 shown in FIG. 62 does not generate. As described above, in the method of WO 02/23898, thumbnail display can be attained quickly even if large amounts of still image files have been recorded on the DVD-RAM disk 305. Furthermore, in the case when the still image files are retrieved by using the date information and the like stored in the annexed information portion, as indicated by the arrows shown in FIG. 63 (a), just as in the case of thumbnail display, each piece of the annexed information can be accessed by fewer seek operations, whereby the retrieval can be carried out quickly.

However, in the configuration of WO 02/23898, in the case when one still image is reproduced, since the header portion and the following portion of the still image file are physically separated from each other, a seek operation definitely occurs between the header portion and the following portion. Hence, this causes a problem of generating a delay time in the display processing. Even if the header portion was located on the memory of the DVD recorder, it was difficult to locate all the JPEG header portions of numerous still images on the memory. On a DVD-RAM disk having a capacity of 4.7 GBytes, 9400 still images, each having 500 KBytes, can be recorded. Hence, in the case when such numerous still images are recorded, the delay time generating at the time of display processing becomes not negligible.

FIG. 63 (b) shows the operation in the case when the still images of a still image file are displayed. In the case when the still images of the still image file are displayed, it is necessary to access both the annexed information and compressed data constituting the still image file. In this case, for example, after the annexed information (306)a recorded in the area 309 on the inner circumference side of the DVD-RAM disk 305 is accessed, it is necessary to access the compressed data 306b recorded in the area 310 on the outer circumference side of the DVD-RAM disk 305; a seek operation is thus generated as shown in FIG. 63 (b). As described above, in the case when both the annexed information and the compressed data constituting a still image file are accessed, just like the operation in the case when still images are displayed, a problem of generating a long-time seek operation occurs.

In addition, in the case of recording AV data on this kind of DVD-RAM disk, it is desirable that the coordination between animated image data and still image data can be carried out smoothly. For example, the recording sequence of the animated image data and still image data recorded in different data formats is stored, it is reproduced during reproduction, or images are reproduced in a format adapted for animated images, such as MPEG, in an animated image zone; on the other hand, high-precision JPEG data images are subjected to display or the like in a still image reproduction zone.

Furthermore, in coordination between animated image data and still image data, even in the case of coordinated reproduction of animated image data and still image data by using an apparatus other than the apparatus used for recording, it is necessary to attain reproduction of AV data without confusing the user.

DISCLOSURE OF THE INVENTION

In consideration of the above-mentioned problems, the present invention is intended to provide a recording medium capable of increasing processing speed at the time when a still image is retrieved by designating aperture, shutter speed, etc. during recording.

In addition, in consideration of the above-mentioned problems, the present invention is intended to provide a recording medium capable of increasing thumbnail index display speed.

Furthermore, in consideration of the above-mentioned problems, the present invention is intended to provide a recording medium capable of increasing still image file importing speed.

Furthermore, in consideration of the above-mentioned problems, the present invention is intended to provide a recording medium capable of increasing still image file displaying speed.

Still further, in consideration of the above-mentioned problems, the present invention is intended to provide a recording medium capable of attaining smooth coordinated reproduction of animated image data and still image data recorded on a DVD-RAM disk.

Furthermore, in consideration of the above-mentioned problems and in coordination between animated image data and still image data, the present invention is intended to provide a recording medium capable of attaining reproduction of AV data without confusing the user even in the case of coordinated reproduction of animated image data and still image data by using an apparatus other than the apparatus used for recording.

To solve the above problems, a first invention of the present invention is a recording medium on which plural image files having image information and annexed information relating to said image information are recorded, wherein

said plural image files are recorded in a first area, and

the whole copy or plural partial copies of said annexed information respectively corresponding to said plural image files are recorded in a second area different from said first area.

A second invention of the present invention is a recording medium in accordance with the first invention of the present invention, wherein

said annexed information includes at least the thumbnail image information of said image information or retrieval information for retrieving said image information, and

the whole copy or partial copies of said annexed information include at least the copies of the thumbnail image information of said image information or the whole copy or partial copies of the retrieval information for retrieving said image information.

A third invention of the present invention is a recording medium in accordance with the first invention to the present invention, wherein

said first area is a user area in which data used by the user can also be recorded, and

said second area is a management area in which management information for managing said data is recorded.

A fourth invention of the present invention is a recording medium in accordance with the third invention of the present invention, wherein only said annexed information is recorded in said second area.

A fifth invention of the present invention is a recording medium in accordance with the first invention of the present invention, wherein

said image file is an Exif image file,

said image information is an Exif Primary image and EOI (end of image) included in said Exif image file,

said annexed information is APP1 (application data segment 1) and SOI (start of image) included in said Exif image file, and

the whole copy or partial copies of said annexed information are said APP1 and SOI, or said APP1, or the portion obtained by excluding the first two bytes from said APP1, or the portion obtained by excluding the first four bytes from said APP1.

A sixth invention of the present invention is a recording medium in accordance with the first invention of the present invention, wherein

said image file is a DCF Basic file,

said image information is an Exif Primary image and EOI (end of image) included in said DCF Basic file,

said annexed information is APP1 (application data segment 1) and SOI (start of image) included in said DCF Basic file, and

the whole copy or partial copies of said annexed information are said APP1 and SOI, or said APP1, or the portion obtained by excluding the first two bytes from said APP1, or the portion obtained by excluding the first four bytes from said APP1.

A seventh invention of the present invention is a recording medium in accordance with the first invention of the present invention, wherein

said image file is a TIFF file conforming to the Exif standard and a DCF thumbnail file serving as reduced image information corresponding to said TIFF file

said image information is TIFF image information included in said TIFF file, and

said annexed information is annexed information conforming to the Exif standard and included in said TIFF file, and said DCF thumbnail file.

Furthermore, an eighth invention is a recording apparatus comprising:

input means of inputting plural image files comprising image information and annexed information relating to said image information, and

recording means of recording said plural image files in a first area of a recording medium, and recording the whole copy or plural partial copies of said annexed information respectively corresponding to said plural image files in a second area different from said first area of said recording means.

Still further, a ninth invention is a recording apparatus in accordance with the eighth invention, wherein

said annexed information includes at least the thumbnail image information of said image information or retrieval information for retrieving said image information, and

the whole copy or partial copies of said annexed information include at least the copies of the thumbnail image information of said image information or the whole copy or partial copies of the retrieval information for retrieving said image information.

Still further, a tenth invention is a recording apparatus in accordance with the eighth invention, wherein

said first area is a user area in which data used by the user can also be recorded, and

said second area is a management area in which data used by said user cannot be recorded.

Still further, an eleventh invention is a reproducing apparatus of reproducing said image information and said annexed information recorded by the recording apparatus in accordance with the eighth invention and stored on a recording medium,
comprising:

reading means of reading said one or plural image files stored in said first area in the case when one or plural pieces of said image information are reproduced, or reading one or plural copies of said annexed information stored in said second area in the case when one or plural pieces of said annexed information are reproduced, and
output means of outputting said image files or said annexed information having been read.

Still further, a twelfth invention is a reproducing apparatus in accordance with the eleventh invention, wherein

said annexed information includes at least the thumbnail image information of said image information or retrieval information for retrieving said image information, and

the whole copy or partial copies of said annexed information include at least the copies of the thumbnail image information of said image information or the whole copy or partial copies of the retrieval information for retrieving said image information.

Still further, a thirteenth invention is a reproducing apparatus in accordance with the eleventh invention, wherein

said first area is a user area in which data used by the user can also be recorded, and

said second area is a management area in which data used by said user cannot be recorded.

Still further, a fourteenth invention is a recording method comprising:

an input step of inputting plural image files comprising image information and annexed information relating to said image information, and
a recording step of recording said plural image files in a first area of a recording medium, and recording the whole copies or plural partial copies of said annexed information respectively corresponding to said plural image files in a second area different from said first area of said recording means.

Still further, a fifteenth invention is a reproducing method of reproducing said image information and said annexed information recorded by the recording method in accordance with the fourteenth invention and stored on a recording medium,

comprising:

a reading step of reading said one or plural image files stored in said first area in the case when one or plural pieces of said image information are reproduced, or reading one or plural copies of said annexed information stored in said second area in the case when one or plural pieces of said annexed information are reproduced, and
an output step of outputting said image files or said annexed information having been read.

Still further, a sixteenth invention is a recording medium on which video objects, management information for managing said video objects and external objects different from said video objects, wherein

extended information corresponding to the functions of a recording apparatus and a reproducing apparatus is recorded, and

said extended information includes reference information to said external objects and the display time information of said external objects.

Still further, a seventeenth invention is a recording medium in accordance with the sixteenth invention, wherein said extended information includes information for reproducing the sequence in which said video objects and said external objects are recorded.

Still further, an eighteenth invention is a recording medium in accordance with the sixteenth invention, wherein data stored in the zones of said video objects corresponding to the display time information of said external objects is data obtained by encoding predetermined data in accordance with the same encoding method as that for said video objects.

Still further, a nonteenth invention is a recording medium in accordance with the eighteenth invention, wherein said predetermined data is data obtained by encoding the same image data as said external objects in accordance with the same encoding method as that for said video objects.

Still further, a twentieth invention is a recording medium in accordance with the sixteenth invention, wherein said external information includes annexed information for designating the display method for said external objects.

Still further, a twenty-first invention is a recording medium in accordance with the sixteenth invention, wherein said management information includes pointer information to thumbnail information in addition to reference information to said external objects.

Still further, a twenty-second invention is a recording apparatus of recording information on the recording medium in accordance with the sixteenth invention, comprising:

first recording means of recording video objects and management information for managing reproduction of said video objects and external objects different from said video objects, and
second recording means of recording said extended information corresponding to the functions of a recording apparatus and a reproducing apparatus.

Still further, a twenty-third invention is a recording apparatus of recording information on the recording medium in accordance with the seventeenth invention, comprising:

first recording means of recording video objects and management information for managing reproduction of said video objects and external objects different from said video objects,
extended information generating means of automatically generating information for reproducing the sequence in which said video objects and said external objects are recorded as extended information, and
second recording means of recording said extended information corresponding to the functions of a recording apparatus and a reproducing apparatus.

Still further, a twenty-fourth invention is a reproducing apparatus of carrying out reproduction on the recording medium in accordance with the sixteenth invention, comprising:

management information reading means of reading said management information,
video object reading means of reading said video objects on the basis of said management information having been read,
extended information reading means of reading said extended information,
external object reading means of reading said external objects, and
reproducing means of reproducing said video objects and said external objects having been read, on the basis of said video object management information having been read and said extended information having been read.

Still further, a twenty-fifth invention is a recording method of recording information on the recording medium in accordance with the sixteenth invention, comprising:

a first recording step of recording video objects and management information for managing reproduction of said video objects and external objects different from said video objects, and
a second recording step of recording extended information corresponding to the functions of a recording apparatus and a reproducing apparatus.

Still further, a twenty-sixth invention is a recording method of recording information on the recording medium in accordance with the seventeenth invention, comprising:

a first recording step of recording video objects and management information for managing reproduction of said video objects and external objects different from said video objects,
an extended information generating step of automatically generating information for reproducing the sequence in which said video objects and said external objects are recorded as extended information, and
a second recording step of recording said extended information corresponding to the functions of a recording apparatus and a reproducing apparatus.

Still further, a twenty-seventh invention is a reproducing method of carrying out reproduction on the recording medium in accordance with the sixteenth invention, comprising:

a management information reading step of reading said management information,
a video object reading step of reading said video objects on the basis of said management information having been read,
an extended information reading step of reading said extended information,
an external object reading step of reading said external objects, and
a reproducing step of reproducing said video objects and said external objects having been read, on the basis of said video object management information having been read and said extended information having been read.

Still further, a twenty-eighth invention is a program of operating a computer as

input means of inputting plural image files comprising image information and annexed information relating to said image information, and
recording means of recording said plural image files in a first area of a recording medium, and recording the whole copy or plural partial copies of said annexed information respectively corresponding to said plural image files in a second area different from said first area of said recording means, of the recording apparatus in accordance with the eighth invention.

Still further, a twenty-ninth invention is a program of operating a computer as

reading means of reading said one or plural image files stored in said first area in the case when one or plural pieces of said image information are reproduced, or reading one or plural copies of said annexed information stored in said second area in the case when one or plural pieces of said annexed information are reproduced, and
output means of outputting said image files or said annexed information having been read, of the reproducing apparatus in accordance with the 11th invention.

Still further, a thirteenth invention is a recording medium having the program in accordance with the twenty-eighth or twenty-ninth invention and being processable by a computer.

BRIEF DESCRIPTION OF DRAWINGS

FIG. 1 is a view illustrating the outer appearance of a DVD recorder apparatus and an example of an interface between the DVD recorder apparatus and related apparatuses;

FIG. 2 is a block diagram showing the drive apparatus of the DVD recorder;

FIG. 3 is a view illustrating continuous areas on a disk and the amount of data storage in a track buffer;

FIG. 4 is a block diagram showing a DVD recorder provided with a semiconductor memory card and a hard disk drive apparatus;

FIG. 5 is a view illustrating the outer appearance and the physical structure of a disk;

FIG. 6 is a view illustrating the logical data space of the disk;

FIG. 7 is a view illustrating the structures of the directories and files of the disk;

FIG. 8 is a view showing the configuration of a video object;

FIG. 9 is a view illustrating an MPEG system stream;

FIG. 10 is a view illustrating an MPEG-TS stream;

FIG. 11 is a view illustrating an MPEG-PS stream;

FIG. 12 is a view illustrating a TS packet;

FIG. 13 is a view illustrating a PAT table;

FIG. 14 is a view illustrating the locations of video objects on the disk;

FIG. 15 is a view illustrating the data structure of video management information;

FIG. 16 is a view illustrating the data structure of video management information;

FIG. 17 is a view illustrating the relationship between PGC information and object information of video management information and objects;

FIG. 18 is a block diagram showing the configuration of the functions of a reproducing apparatus;

FIG. 19 is a block diagram showing the configuration of the functions of a recording apparatus;

FIG. 20 is a view illustrating the structures of the directories and files of still image data;

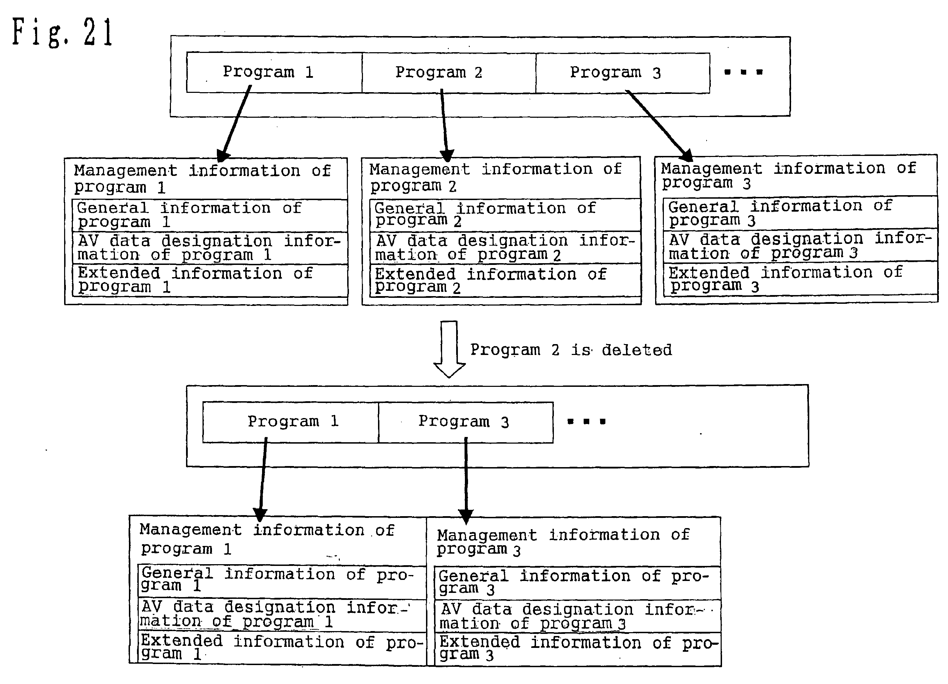

FIG. 21 is a view illustrating the data structure of program management information;

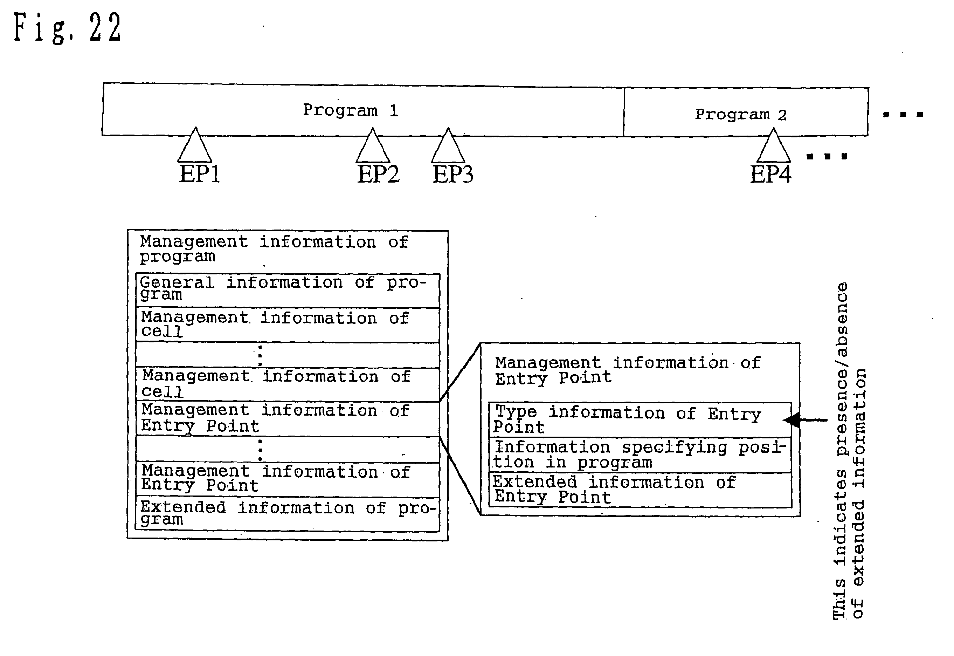

FIG. 22 is a view showing a data structure in the case when Entry Point management information has extended information;

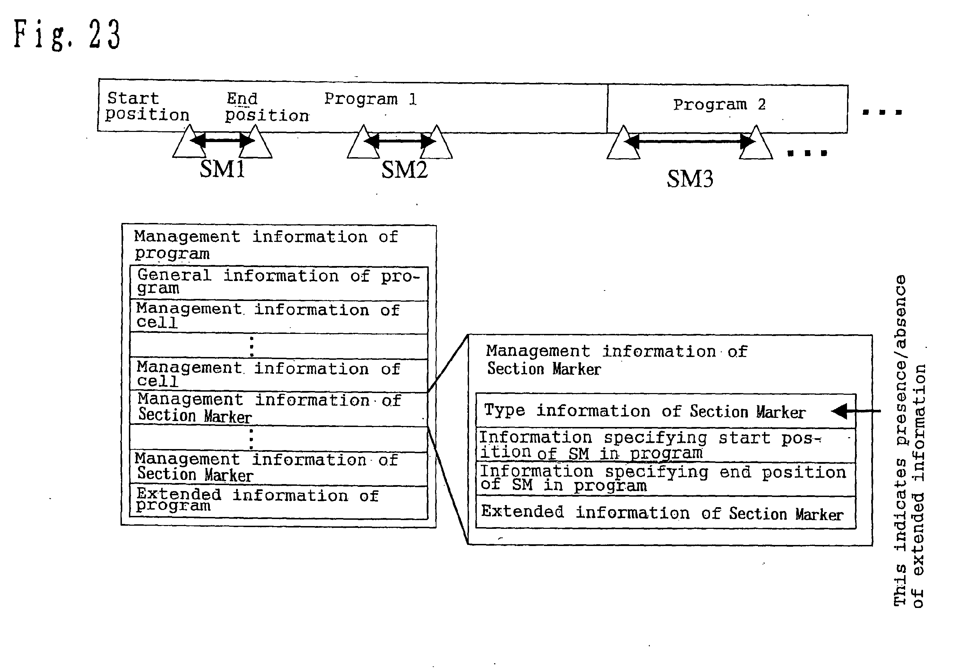

FIG. 23 is a view showing a data structure in the case when Section Marker management information has extended information;

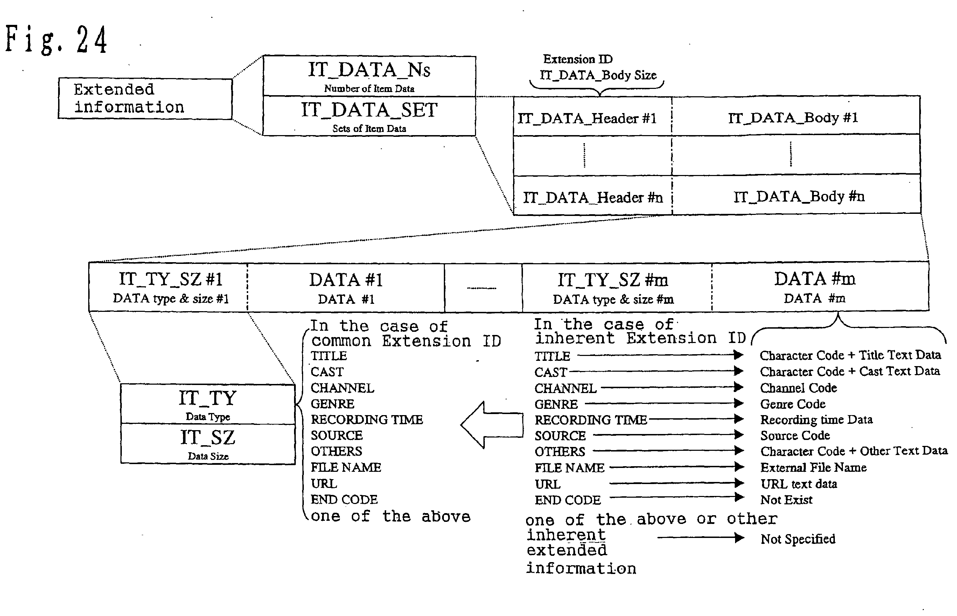

FIG. 24 is a view showing the data structure of extended information;

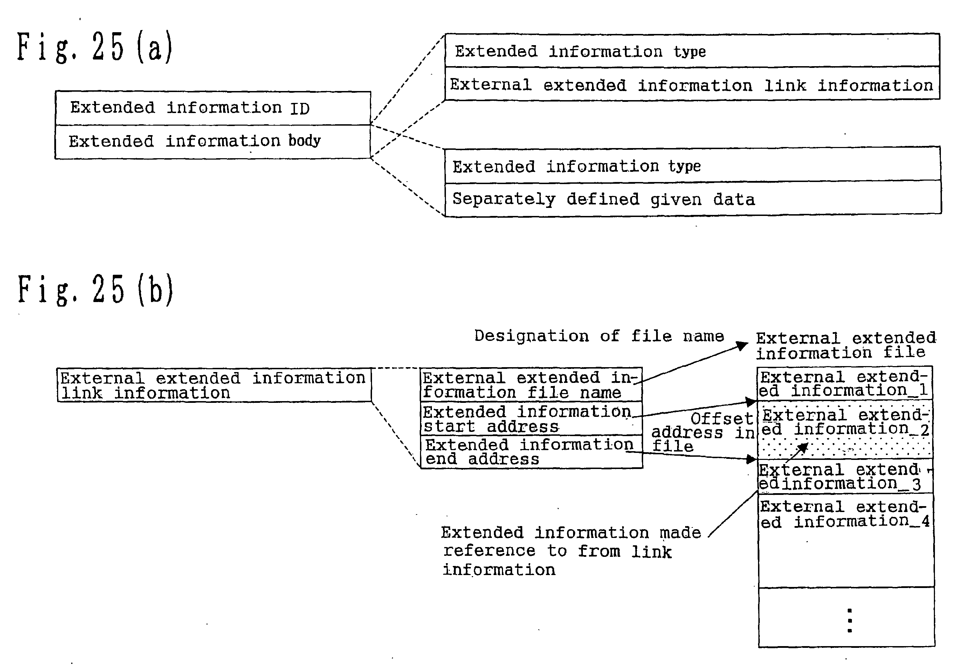

FIG. 25 is a view showing a data structure (1) in the case when link information to external extended information is described in extended information;

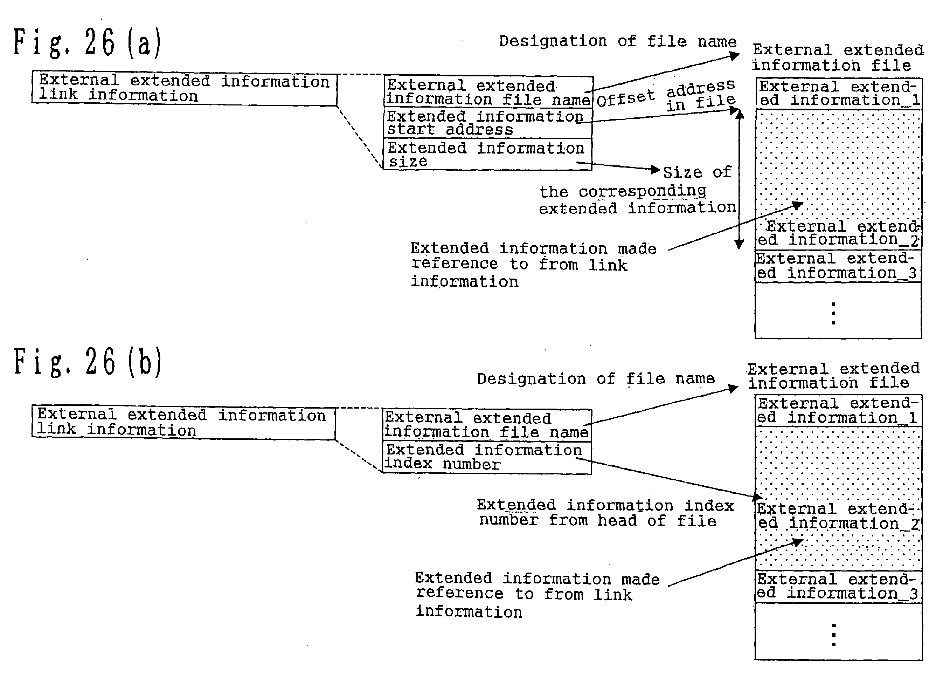

FIG. 26 is a view showing a data structure (2) in the case when link information to external extended information is described in extended information;

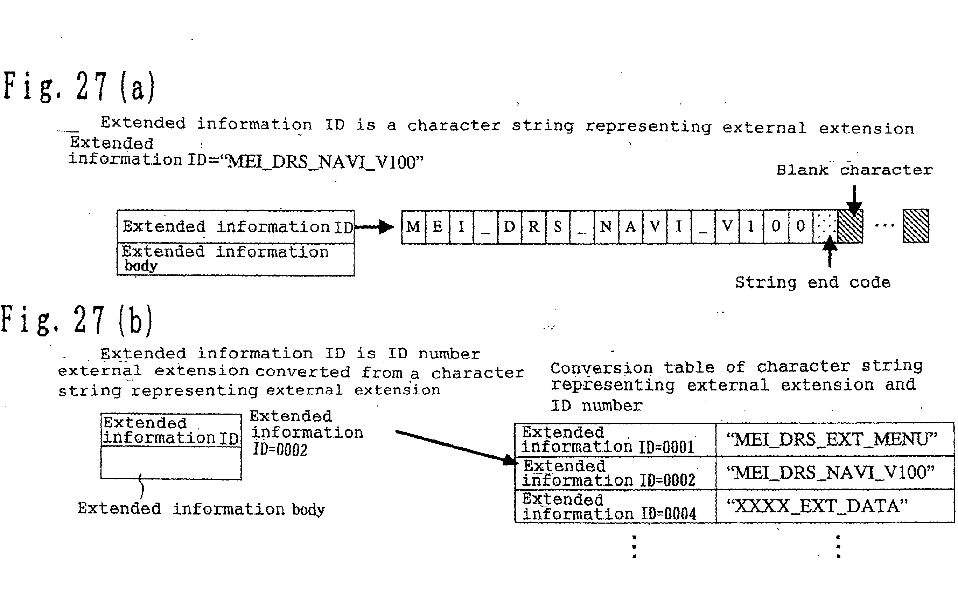

FIG. 27 is a view showing the data structure of an extended information ID;

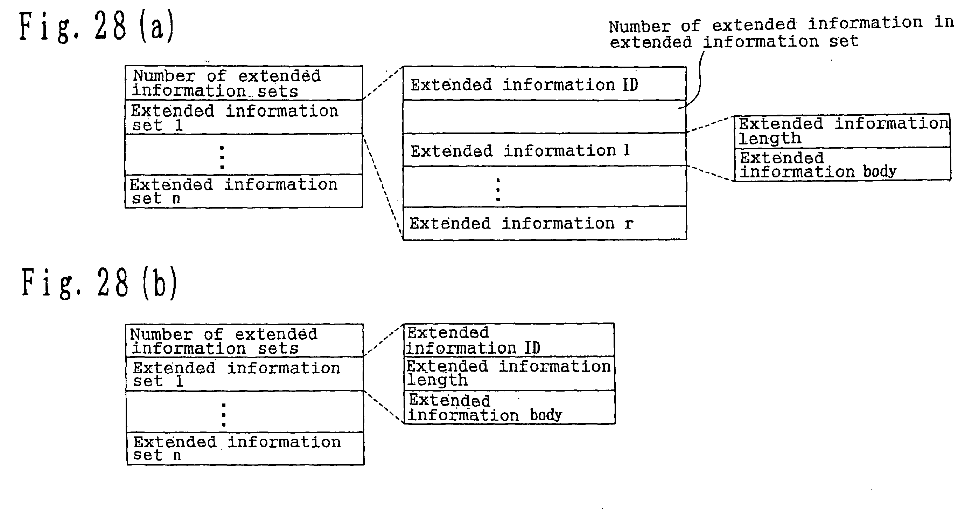

FIG. 28 is a view showing the data structure (1) of an extended information set;

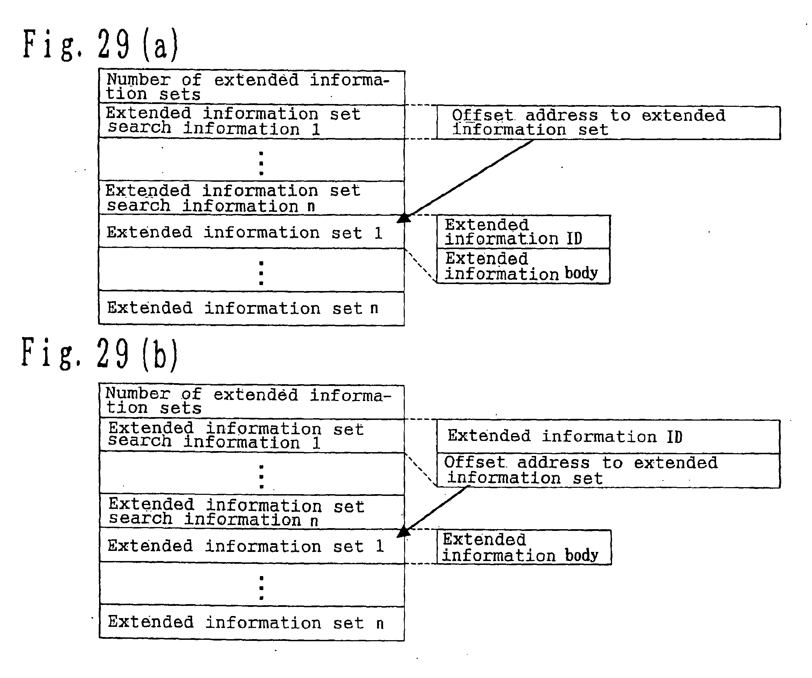

FIG. 29 is a view showing the data structure (2) of an extended information set;

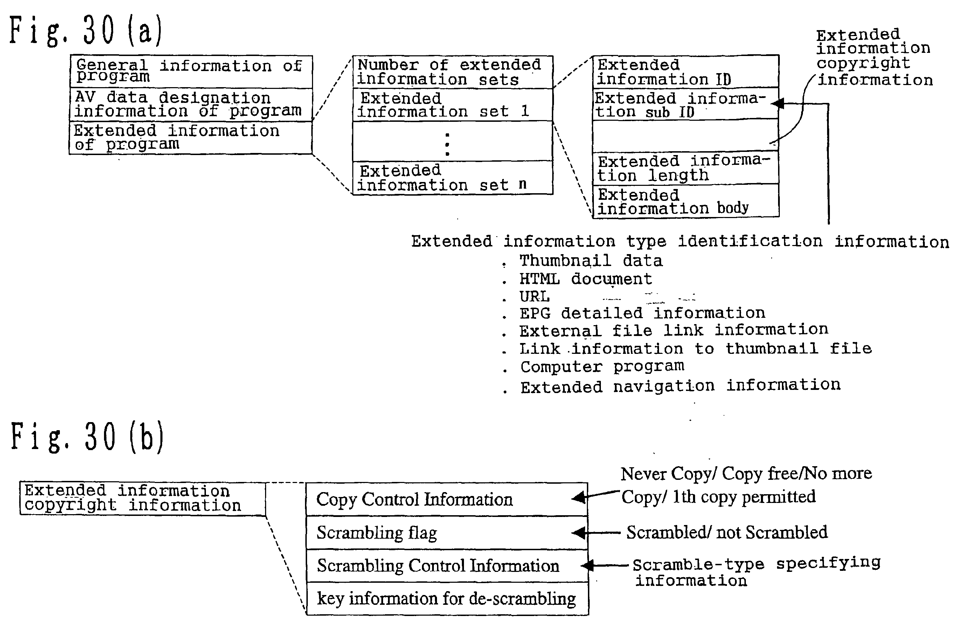

FIG. 30 is a view showing the data structures of extended information sub_ID and copyright management information;

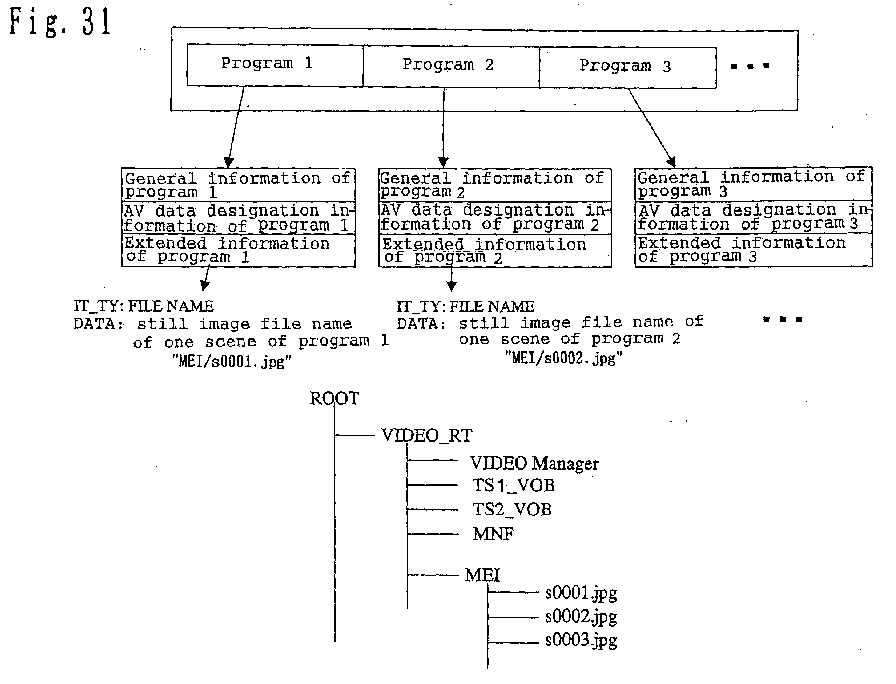

FIG. 31 is a view showing a data structure in the case when pointers to thumbnail data are described in extended information;

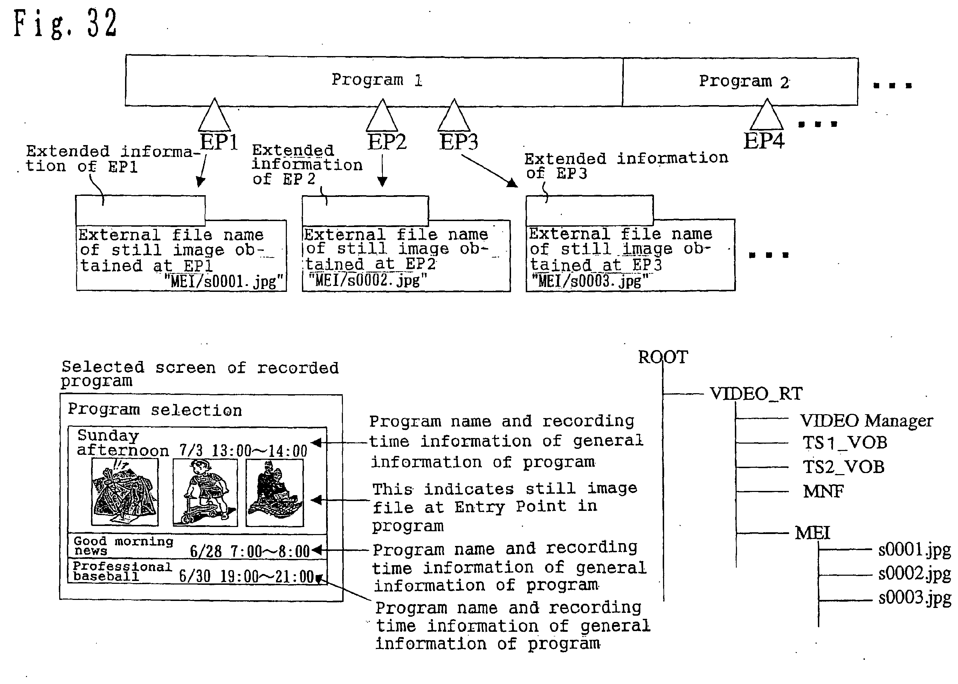

FIG. 32 is a view showing a data structure in the case when pointers to thumbnail data are described in Entry Point extended information;

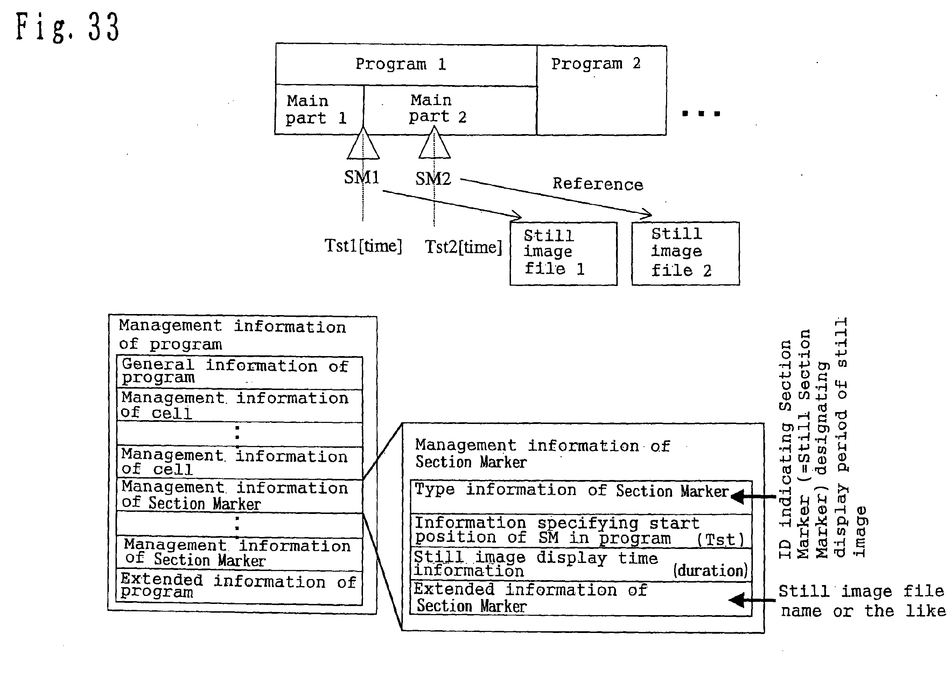

FIG. 33 is a view showing a data structure (1) in the case when link information to still image files is described in extended information;

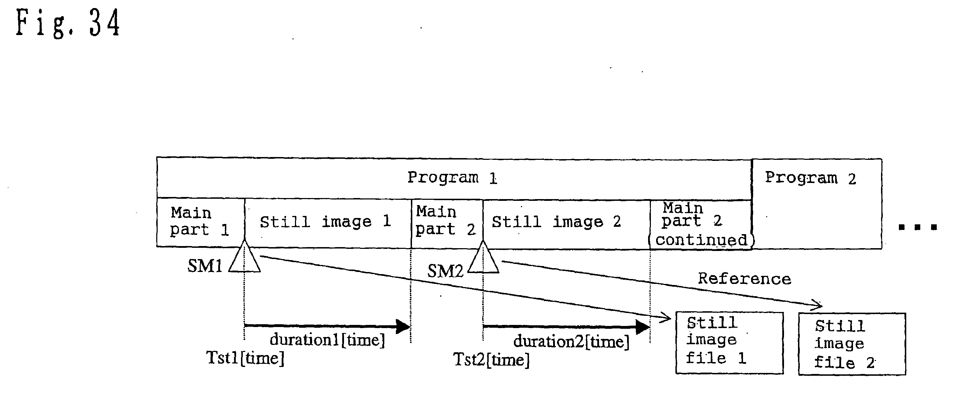

FIG. 34 is a view illustrating the reproduction sequence of programs to which Still Section Markers are added;

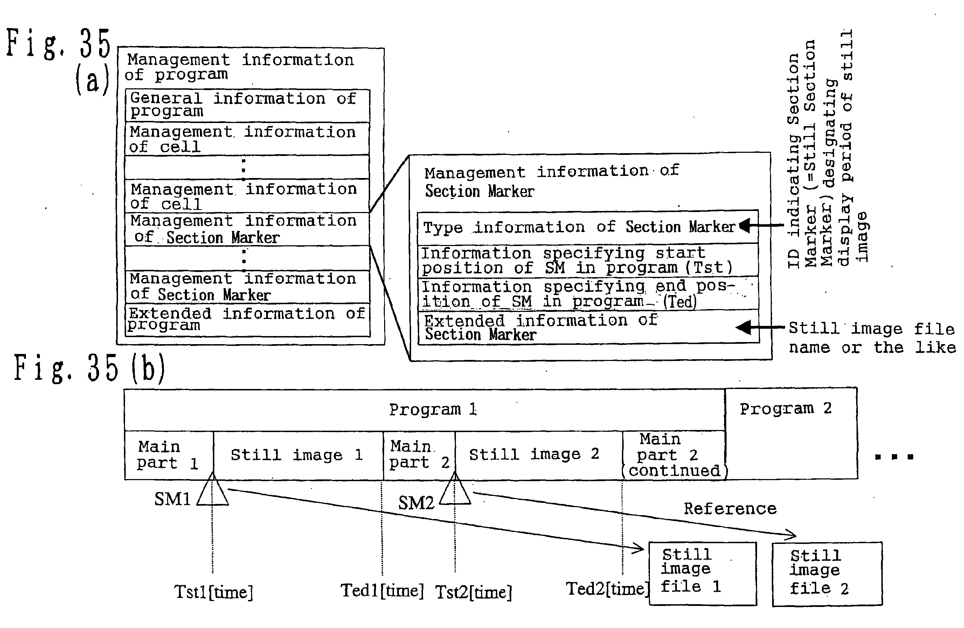

FIG. 35 is a view showing a data structure (2) in the case when link information to still image files is described in extended information;

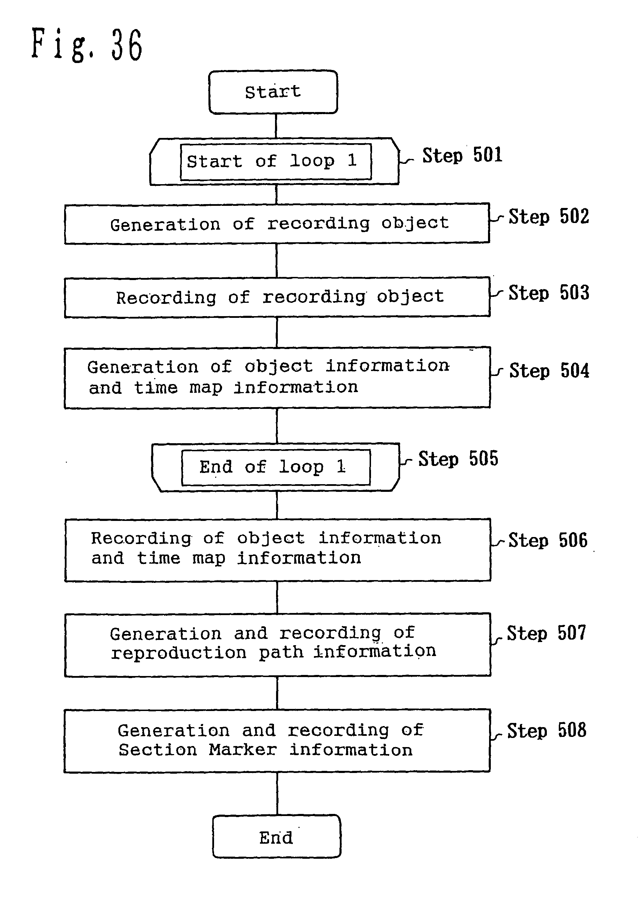

FIG. 36 is a flowchart showing the operations of the apparatus during recording of animated and still images';

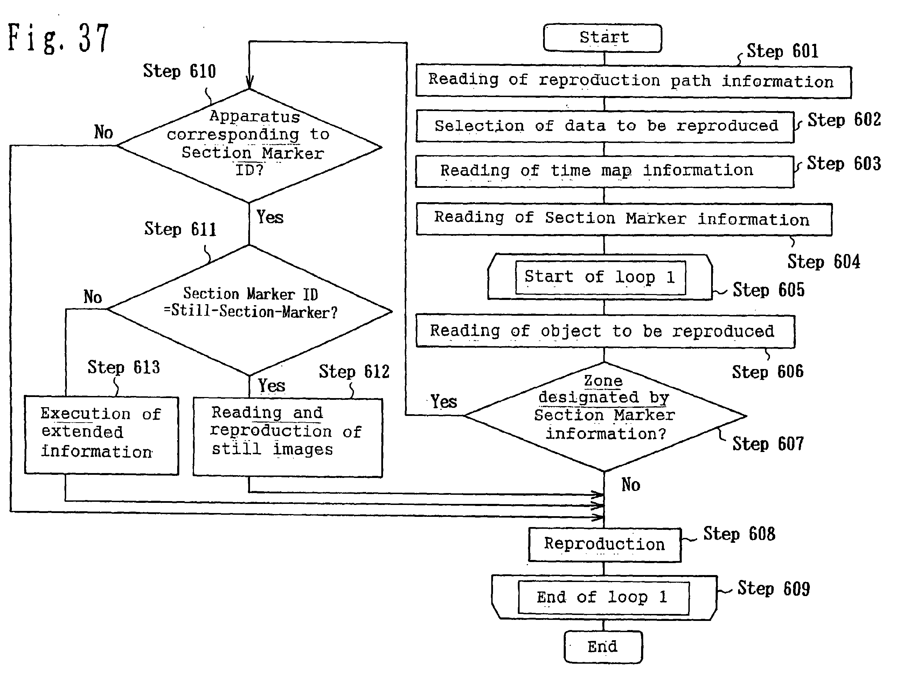

FIG. 37 is a flowchart showing the operations of the apparatus during reproduction of animated and still images;

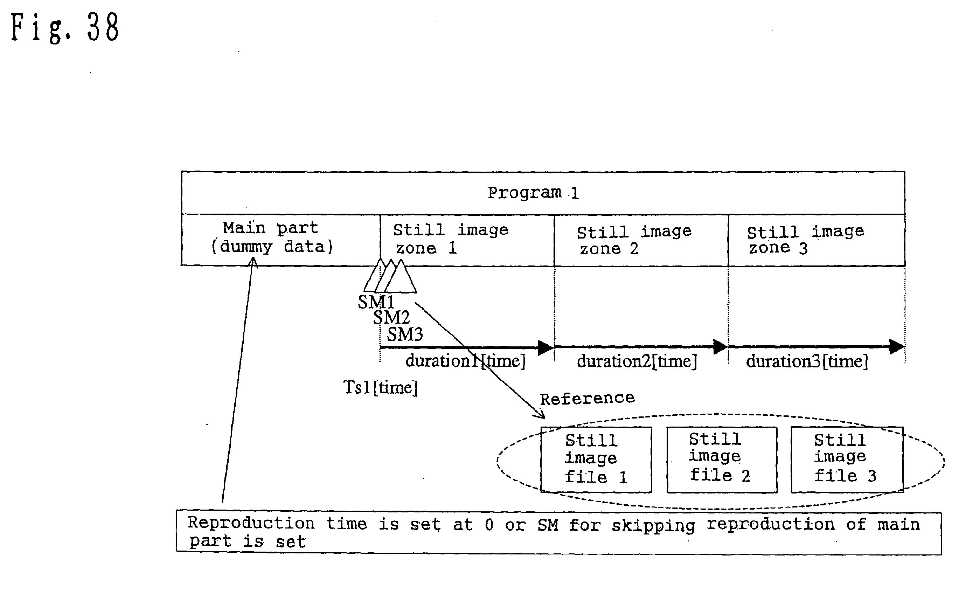

FIG. 38 is a view illustrating a method of forming a program including only still images by using Section Markers;

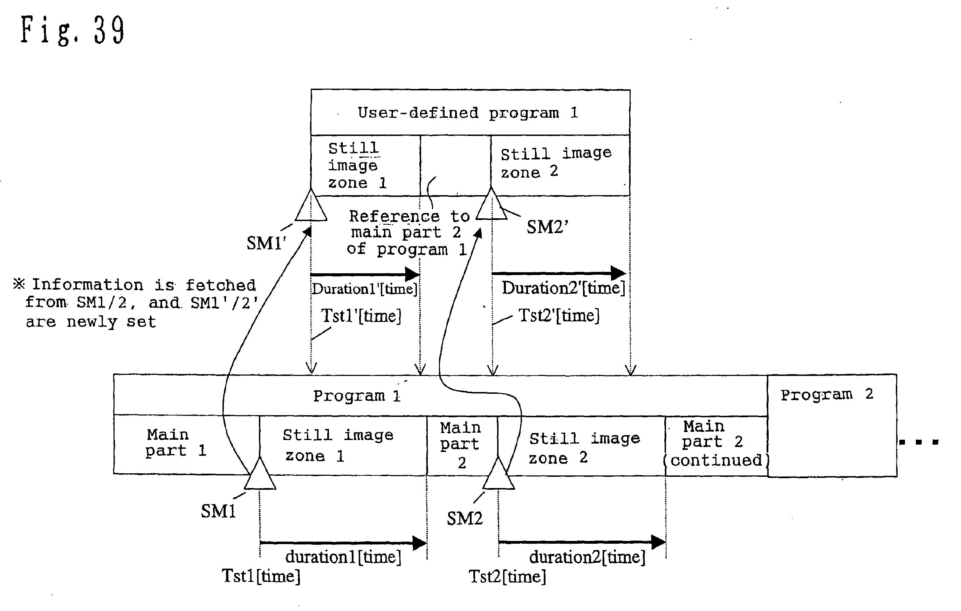

FIG. 39 is a view (1) illustrating a method of forming a user-defined program;

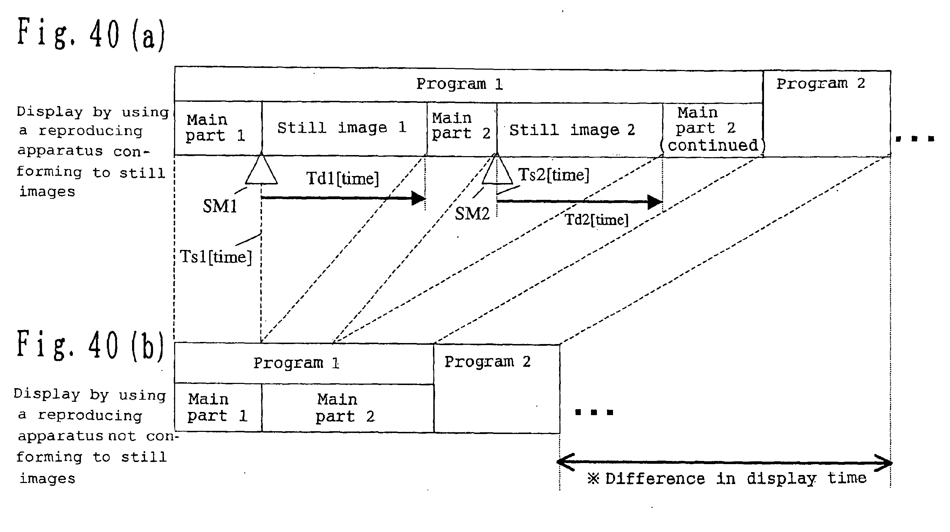

FIG. 40 is a view (1) illustrating the difference between display by using a reproducing apparatus conforming to still images and display by using a reproducing apparatus not conforming to still images;

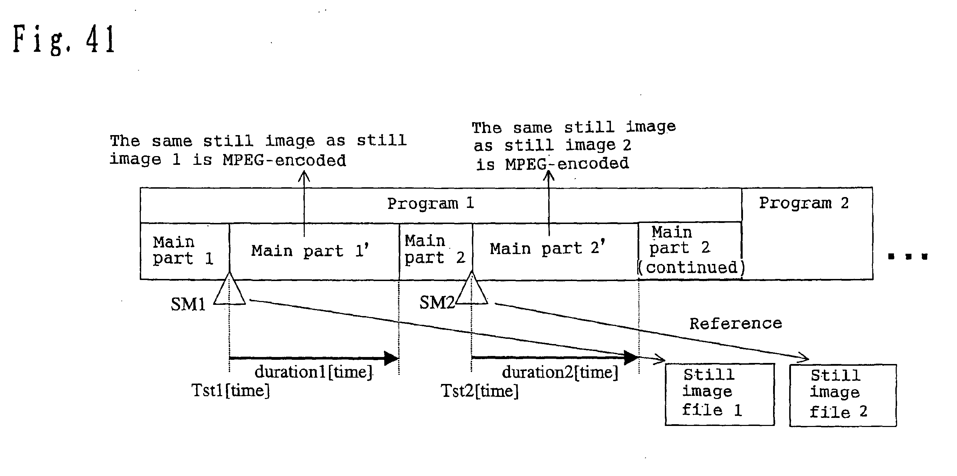

FIG. 41 is a view illustrating a method of describing link information to still image files in extended information and recording MPEG-encoded still image data in main parts;

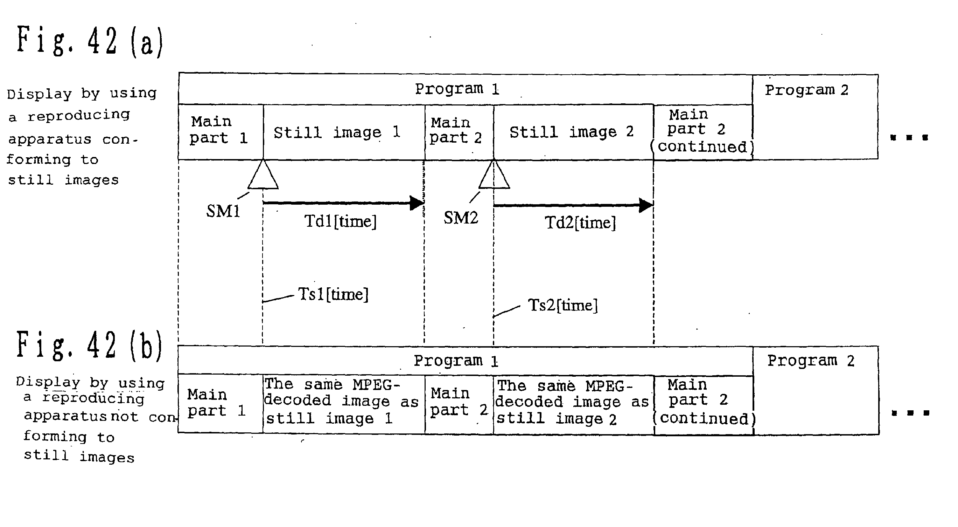

FIG. 42 is a view (2) illustrating the difference between display by using the reproducing apparatus conforming to still images and display by using the reproducing apparatus not conforming to still images;

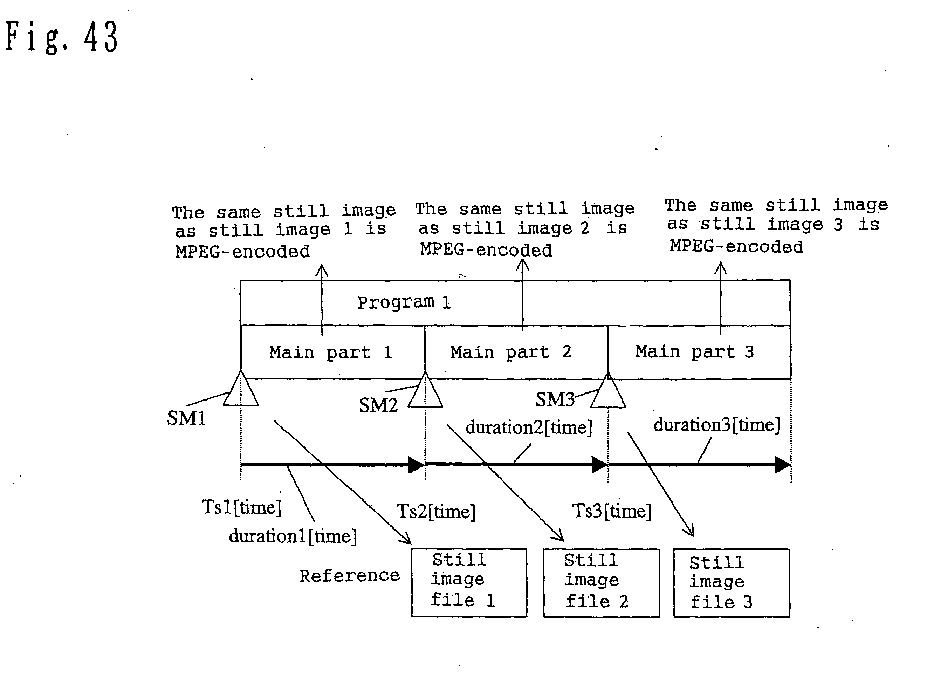

FIG. 43 is a view illustrating a method of forming a program including only still images by obtaining still images by combining MPEG-encoded main parts with Section Markers;

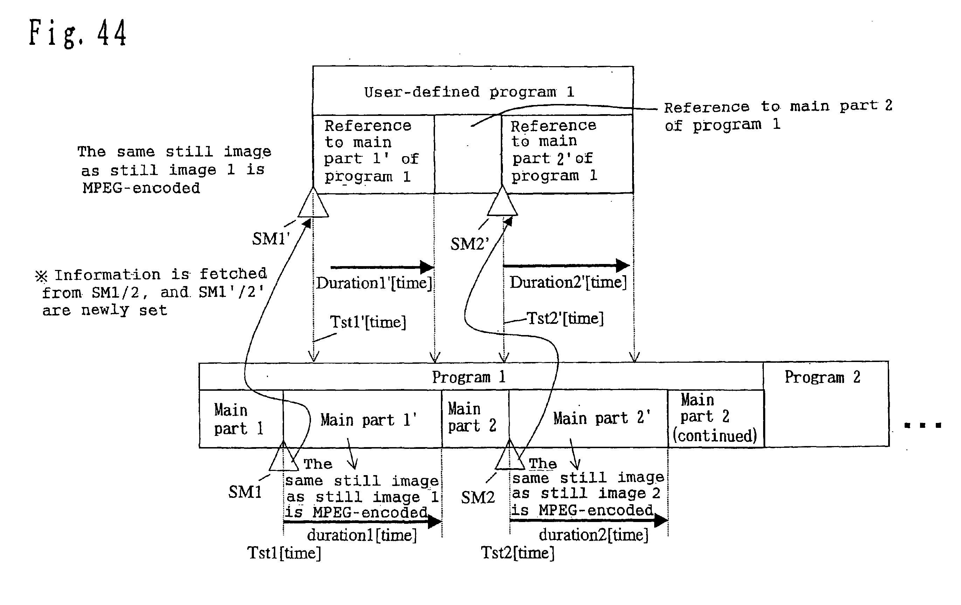

FIG. 44 is a view (2) illustrating a method of forming a user-defined program;

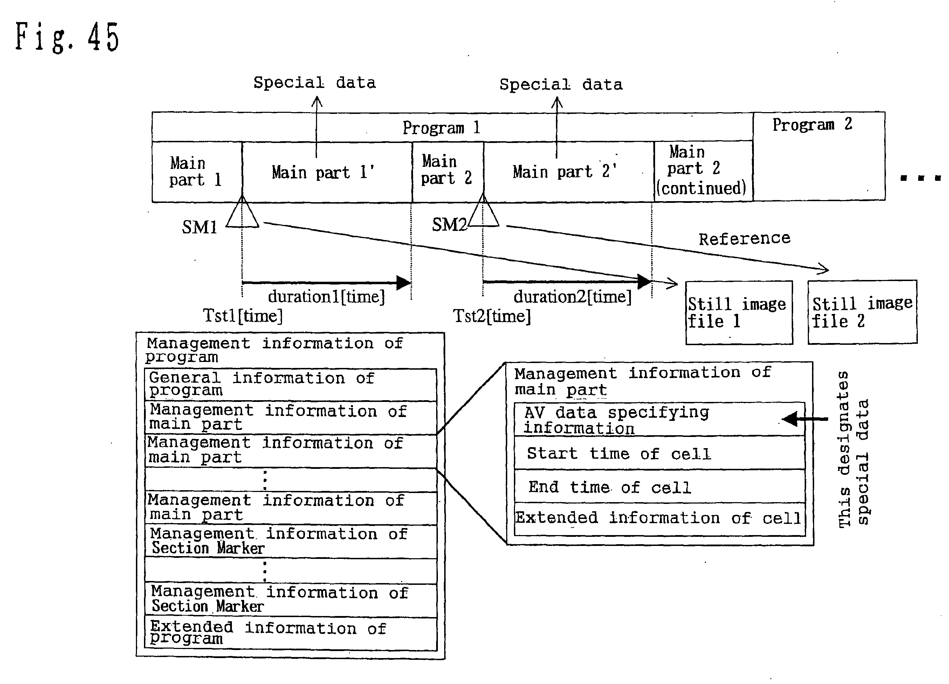

FIG. 45 is a view illustrating a method of describing link information to still image files in extended information and recording special data in main parts;

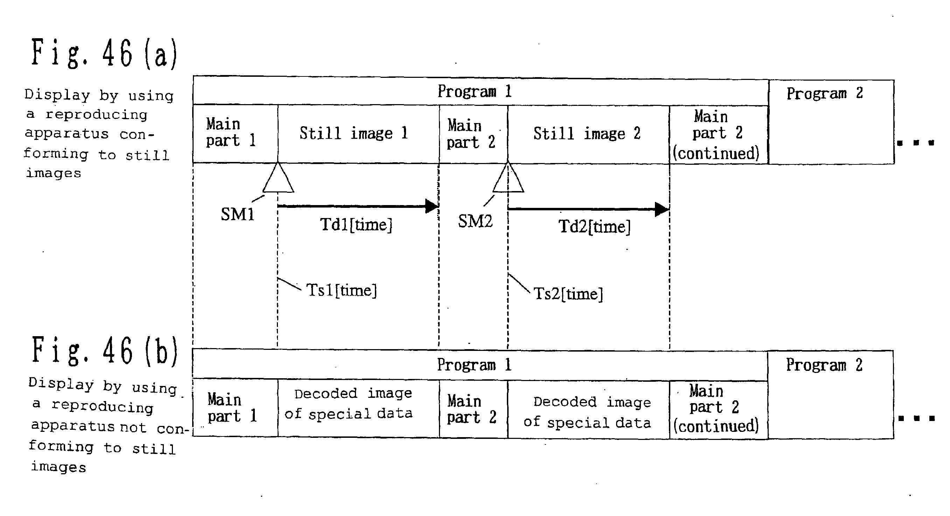

FIG. 46 is a view (3) illustrating the difference between display by using the reproducing apparatus conforming to still images and display by using the reproducing apparatus not conforming to still images;

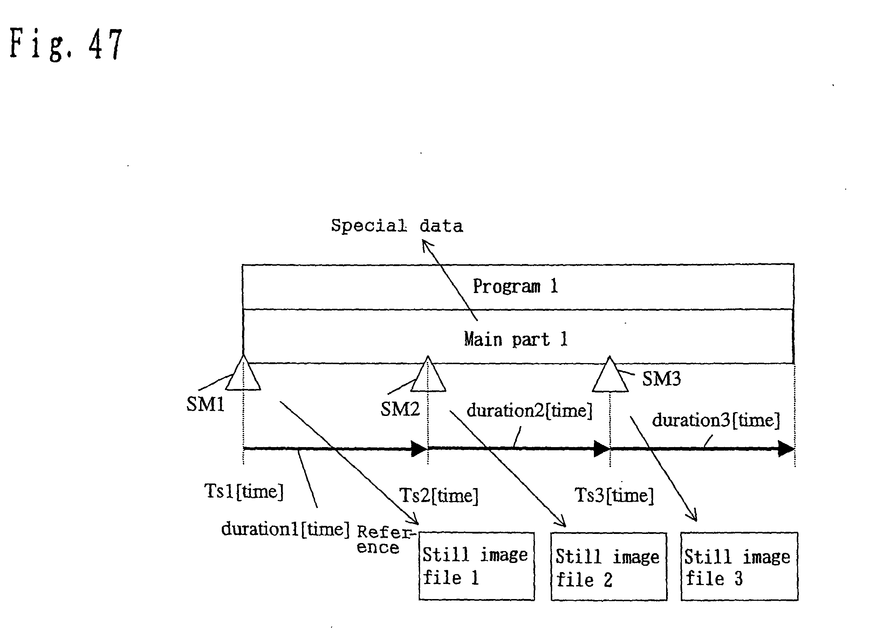

FIG. 47 is a view illustrating a method of forming a program including only still images by combining special data with Section Markers;

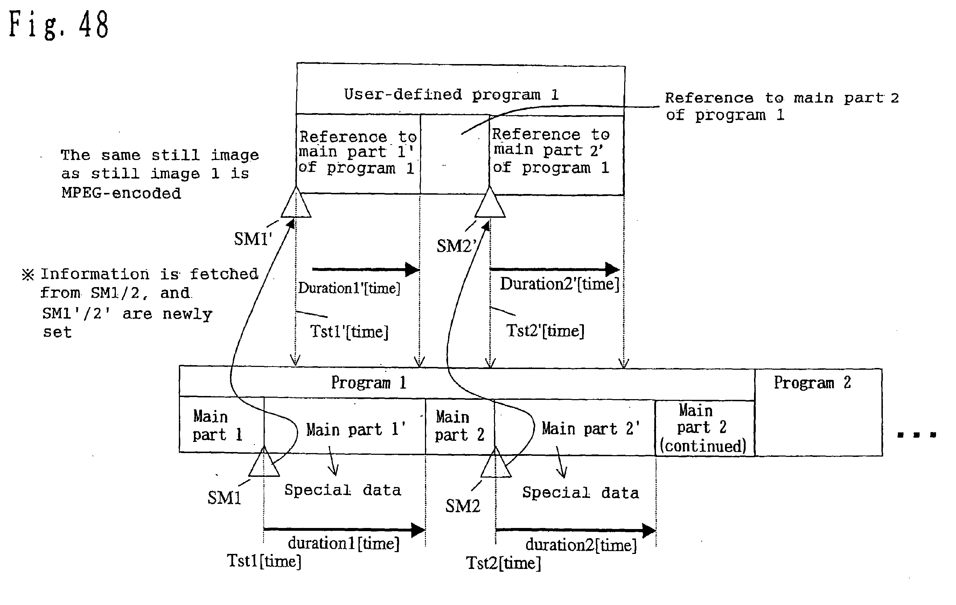

FIG. 48 is a view (3) illustrating a method of forming a user-defined program;

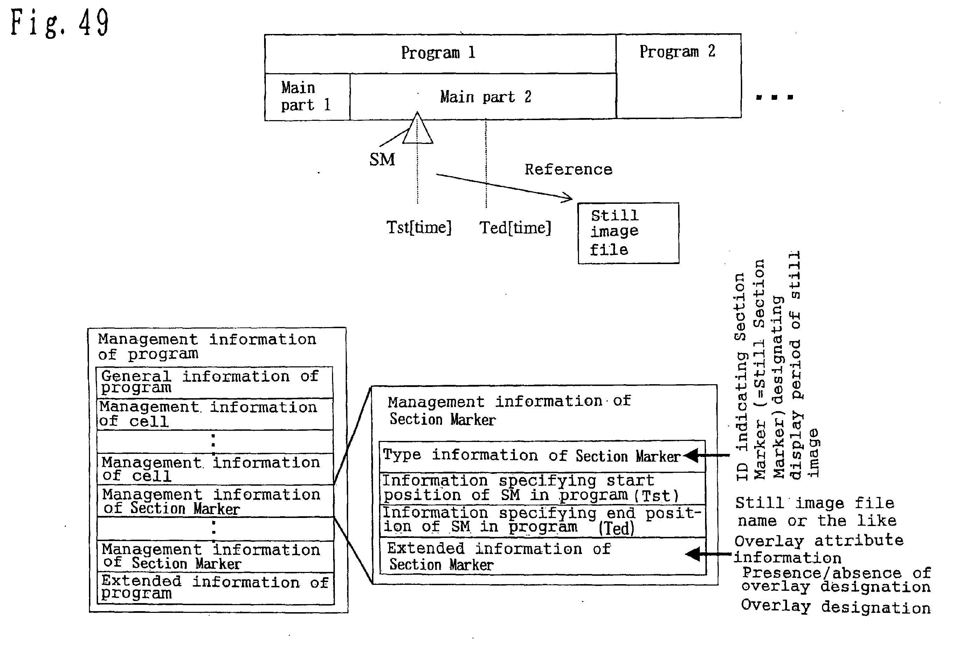

FIG. 49 is a view illustrating the data structure of a Section Marker having overlay attribute information;

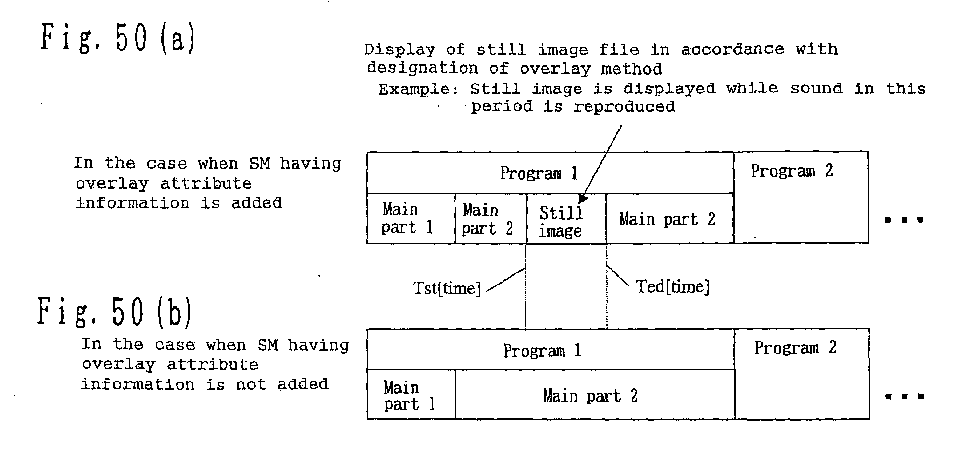

FIG. 50 is a view illustrating the difference in display between the case when a Section Marker having overlay attribute information is added and the case when not added;

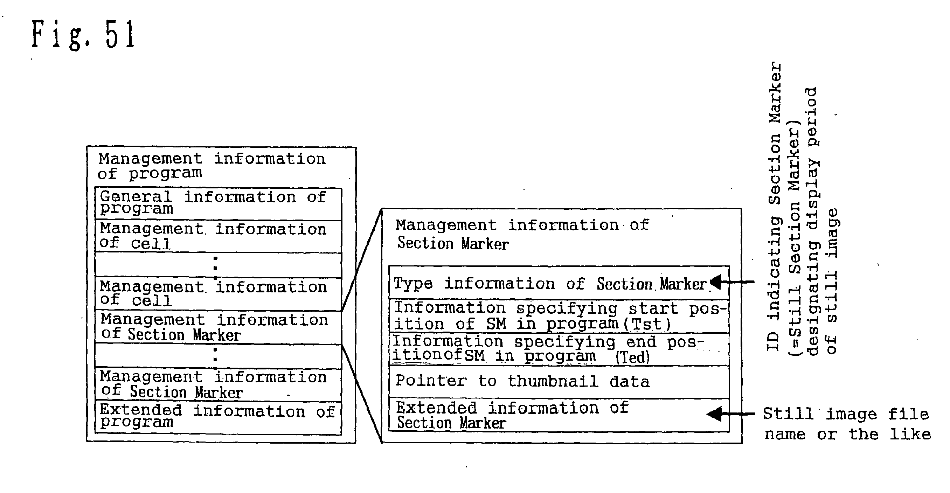

FIG. 51 is a view showing the data structure of a Section Marker having a pointer to thumbnail data;

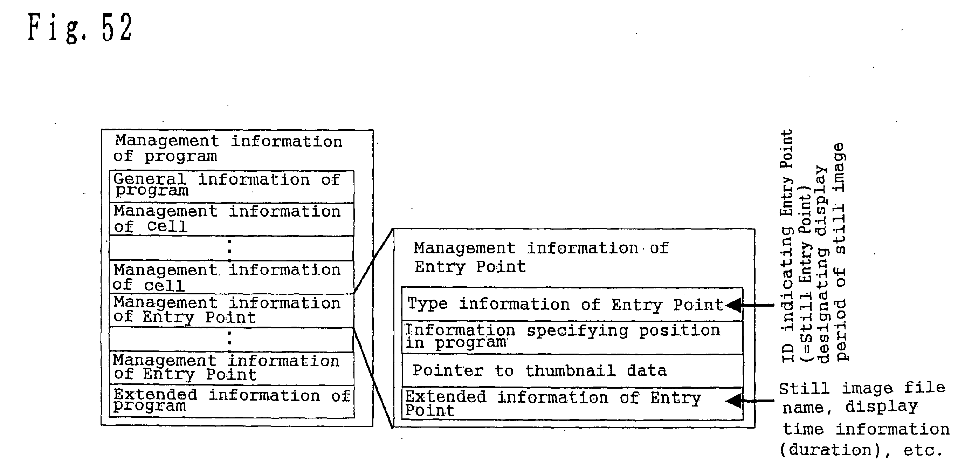

FIG. 52 is a view showing the data structure of an Entry Point having a pointer to thumbnail data;

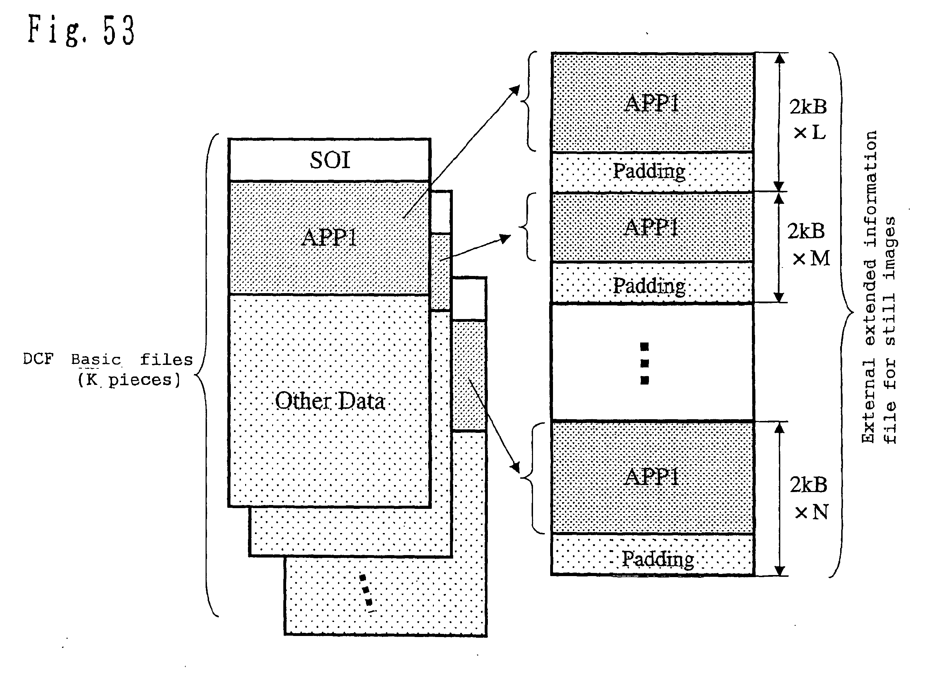

FIG. 53 is a view showing the configuration of an external extended information file for still images;

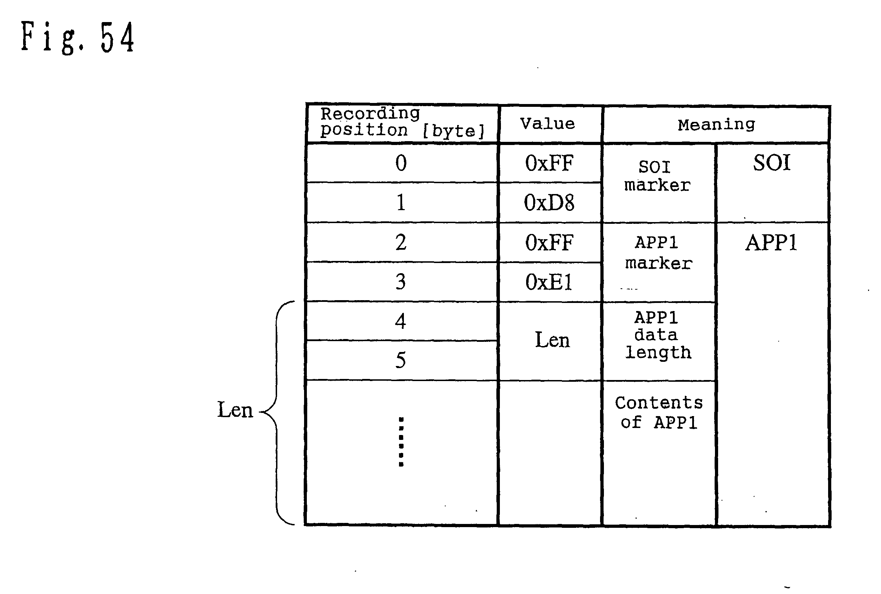

FIG. 54 is a view showing the data structure of the head portion of a DCF Basic file;

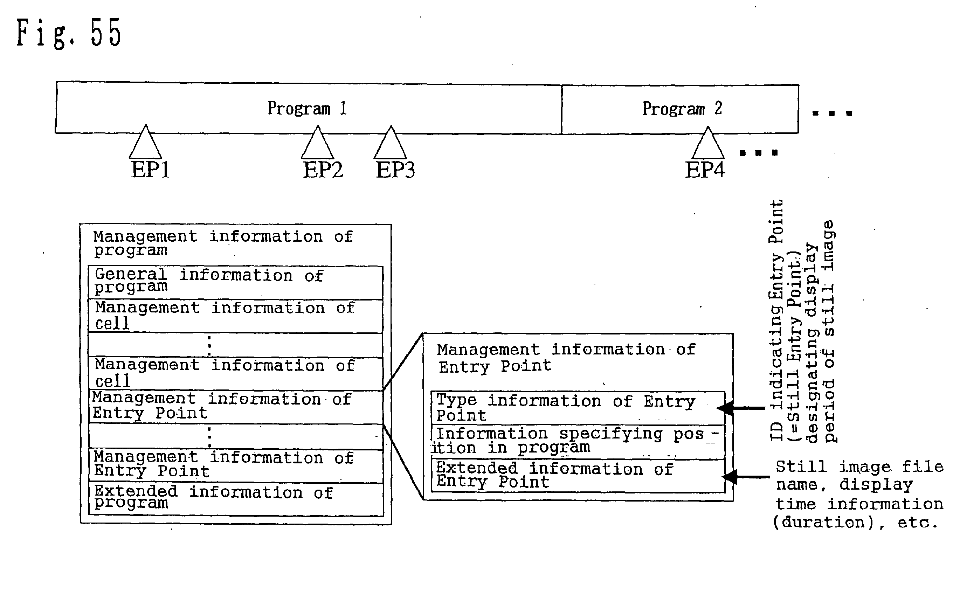

FIG. 55 is a view showing a data structure in the case when reference to a still image file is recorded in the extended information area of Entry Point management information;

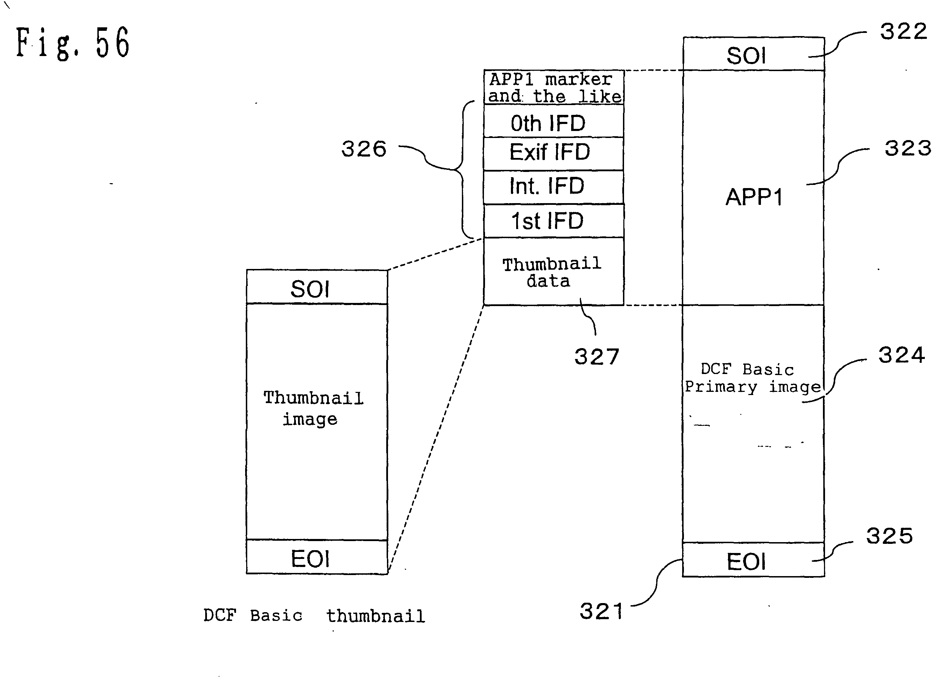

FIG. 56 is a view showing the detailed data structure of a DCF Basic file;

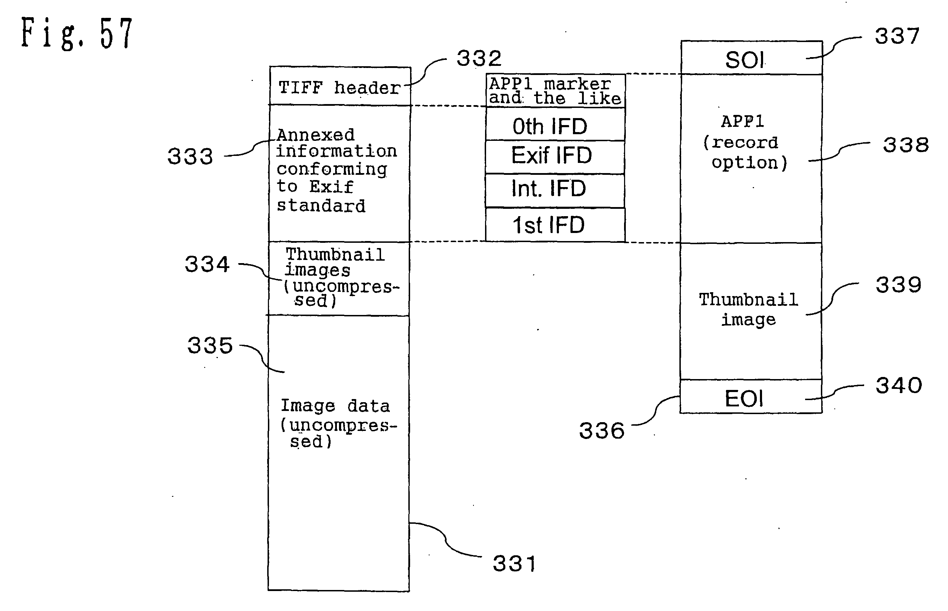

FIG. 57 is a view showing the detailed data structure of a TIFF file conforming to the Exif standard;

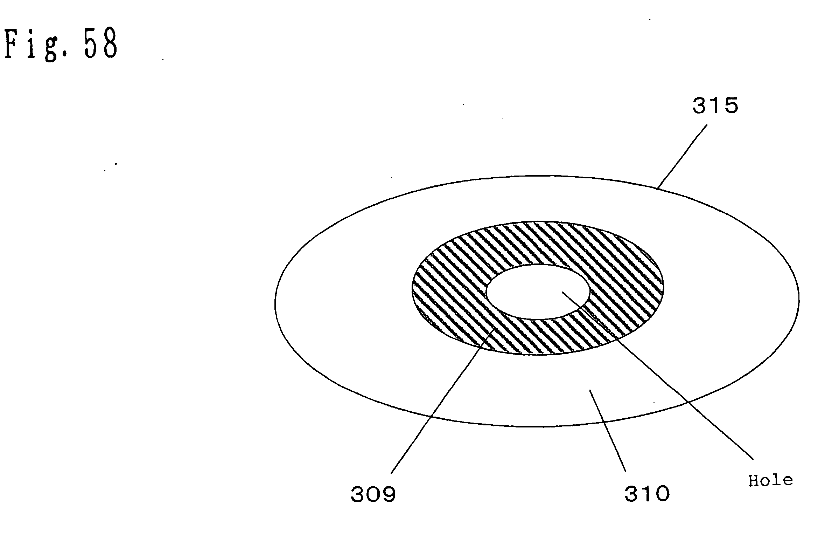

FIG. 58 is a view showing the physical locations of data on a DVD-RAM disk;

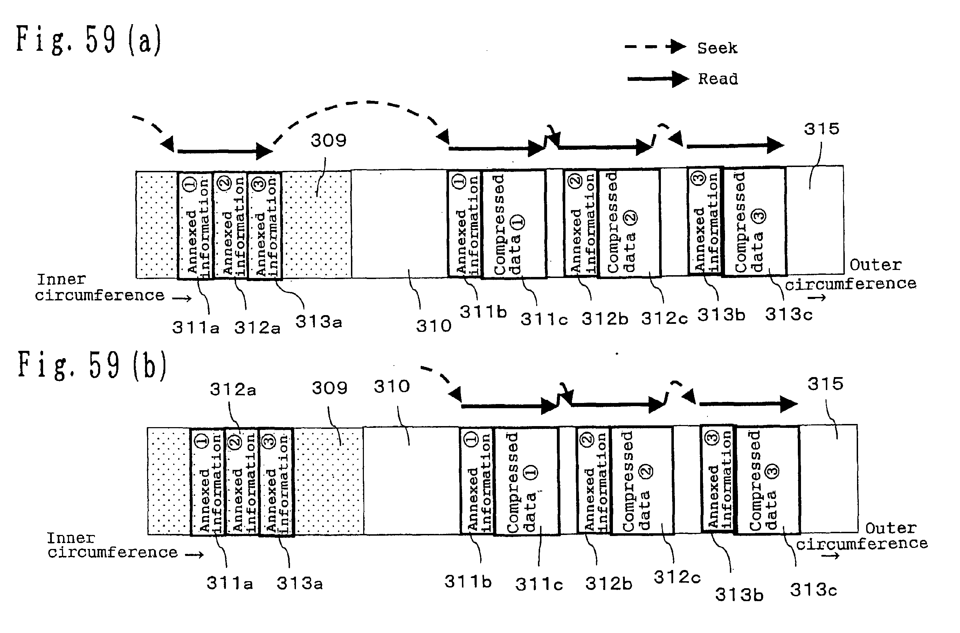

FIG. 59 (a) is a view showing a DVD-RAM disk on which DCF Basic files are recorded and also showing operation at the time when thumbnail display or DCF Basic file retrieval is carried out by reading the DVD-RAM disk;

FIG. 59 (b) is a view showing the DVD-RAM disk on which DCF Basic files are recorded and also showing operation at the time when image display is carried out by reading the DVD-RAM disk;

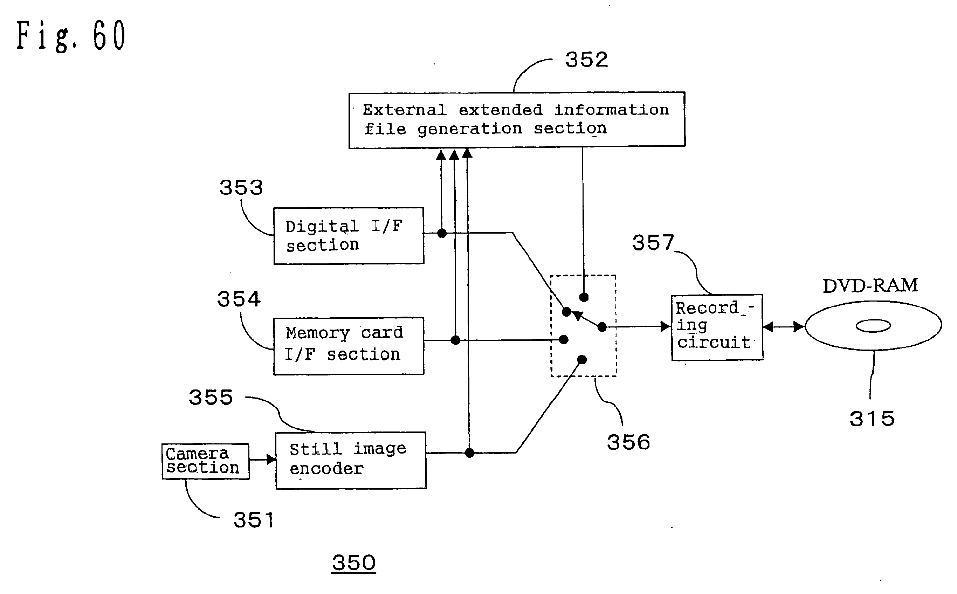

FIG. 60 is a view showing the configuration of a DVD camcorder;

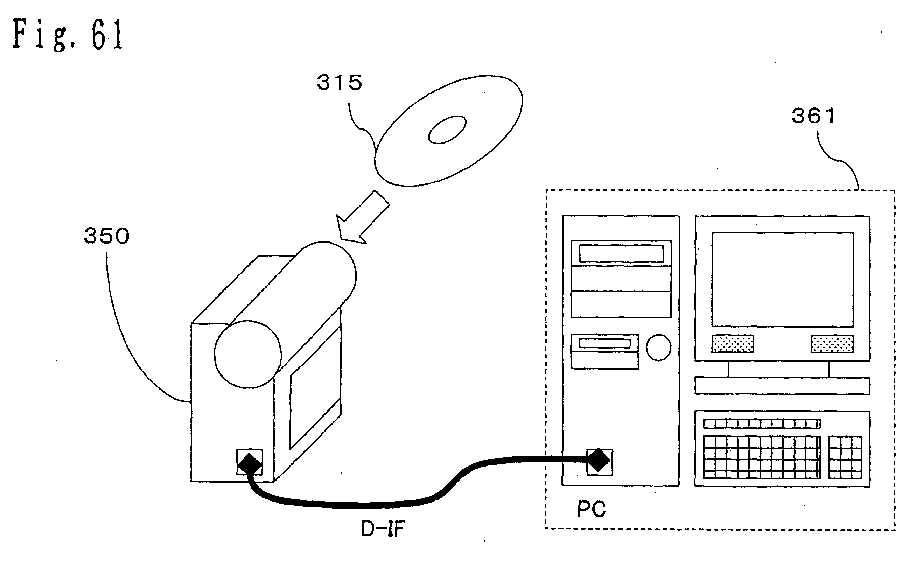

FIG. 61 is a view showing the configuration of the apparatus in the case when a DVD-RAM disk is inserted into the DVD-RAM drive of the DVD camcorder and accessed from a personal computer;

FIG. 62 is a view showing a DVD-RAM disk 301 in which plural still image files (DSC objects) are stored;

FIG. 63 (a) is a view showing a DVD-RAM disk on which DCF Basic files are recorded and also showing operation at the time when thumbnail display or DCF Basic file retrieval is carried out by reading the DVD-RAM disk in the conventional example; and

FIG. 63 (b) is a view showing the DVD-RAM disk on which DCF Basic files are recorded and also showing operation at the time when image display is carried out by reading the DVD-RAM disk in the conventional example.

(Explanation of numerals)

100 DVD-RAM disk
101, 201 optical pickup
10-2, 202 ECC processing section
103, 203, 220 track buffer
104, 210 switch
105, 214 encoder
106, 205, 206, 218 decoder
207 audio decoder
208 still image decoder
211 control section
212 system control section
213 analog broadcasting tuner
215 digital broadcasting tuner
216 analyzing section
217 display section
219 digital I/F section
221 drive
222 user I/F section
223 camera section
224 still image encoder

THE BEST MODE FOR CARRYING OUT THE INVENTION

Embodiments in accordance with the present invention will be described below by referring to the drawings.

(First embodiment)

A first embodiment in accordance with the present invention will be described below by using FIGS. 21 to 26, FIG. 53, FIG. 54, etc.

FIG. 21 is a view showing a data structure in the case when program management information has an extended information area. In this case, the management information of a given program (program 1) is recorded in the forms of the general information of the program 1, the AV data designation information of the program 1 and the extended information of the program 1. The extended information in this case is available as detailed program information (genre, cast, description of contents, etc.) obtained from EPG, recording setting (setting of recording bit rate and the like) in the case of self-recording, actual data of a still image (thumbnail) indicating one scene of the program, a file name in the case when said thumbnail is used as an external file, setting as a reproduction prohibition program, setting as a candidate for an automatic deletion program, recording of information indicating that contents are those recorded automatically by an apparatus, information indicating the user who carried out recording, etc. Furthermore, in the case when one program is deleted, the management information of the program is also deleted simultaneously, whereby its extended information is also deleted.

FIG. 22 is a view showing a data structure in the case when Entry Point management information has an extended information area.

In this case, Entry Point type information indicating the presence or absence of extended information, information specifying a position in the program and the extended information are recorded as Entry Point management information.

The extended information is available as information indicating the change point of PSI/SI, information indicating data carousel start point, information indicating the in-point to CM, information indicating the out-point from CM, special event information (designation of jumping to another reproduction position, startup of external application on a PC, startup of HTML from an embedded URL, etc.), links (DCF objects, JPEG thumbnails, etc.) to related external files and the reproduction conditions (reproduction time and the like) of the external files, etc.

The position of the Entry Point management information may be Cell management information or AV data management information. In this case, however, the position specifying information should only be able to designate a given position in the management information.

The Entry Point type information may not be required.

The Entry Point type may an item other than indicate the presence or absence of the extended information.

FIG. 23 is a view showing a data structure in the case when Section Marker management information has an extended information area.

As shown in FIG. 23, Section Marker is information designating a given zone in a program by using two points, the start and end points, and the information is recorded in the program management information.

In this case, Section Marker type information indicating the presence or absence of extended information, information specifying the start position of Section Marker in the program, information specifying the end position of Section Marker in the program and extended information are recorded as the Section Marker management information; and information indicating CM zones, information indicating the effective zones of data broadcasting, information indicating special effect areas, links (DCF objects, JPEG thumbnails, etc.) to related external files and the reproduction conditions (reproduction time and the like) of the external files, etc. can be recorded as the extended information.

The position of the Section Marker management information may be Cell management information or AV data management information, instead of program management information. In this case, the position specifying information should only be able to designate a given position in the management information.

The Section Marker type information may not be required.

The Section Marker type may indicate an item other than the presence or absence of the extended information.

FIG. 24 shows the basic data structure of the extended information. The extended information comprises IT_DATA_Ns indicating the number of pieces of the extended information and IT_DATA_SET indicating a set of extended information, and IT_DATA_SET comprises IT_DATA_Header and IT_DATA_Body, the number of which is designated by IT_DATA_Ns.

In IT_DATA_Header, Extension ID (including common Extension ID being common in all apparatus makers) used to identify an apparatus maker, the type of the extended information, etc. and IT_DATA_Body_Size indicating the size of IT_DATA_Body are recorded.

IT_DATA_Body comprises IT_TY_SZ indicating the type and size of DATA, and DATA serving as the main body of the extended information, these being used in a pair, in which such information as shown in FIG. 24 is recorded..

The examples of the information are the title of the program, cast, producer, broadcasting station, genre, recording date and time, recording source, other additional information, program content information, names of external files, URL (these are common in common Extension ID and inherent Extension ID), extended information (in the case when inherent Extension ID is used) being original to apparatus maker, etc. These types are designated by IT_TY, and the size of each piece of DATA is designated by IT_SZ.

The broadcasting station, genre, recording data and time, recording source, etc., taken as the above-mentioned examples, may be constant, regardless of IT_SZ.

FIG. 25 is a view showing a data structure in the case (FIG. 25 (a)) when link information to external extended information is recorded in extended information. In FIG. 25 (b), an external extended information file name designating the file name of an external extended information file and an extended information start address and an extended information end address indicating offset addresses in the file are recorded in the external extended information link information.

FIG. 26 is a view showing another data structure in the case when link information to external extended information is recorded in extended information. In FIG. 26 (a), an external extended information file name designating the file name of an external extended information file and an extended information start address indicating an offset address in the file and extended information size indicating the size of the extended information are recorded in external extended information link information. Furthermore, in FIG. 26 (b), an external extended information file name designating the file name of an external extended information file and extended information index number indicating the index number of the extended information from the head of the file are recorded in the external extended information link information. In this case, the size of a piece of extended information may be fixed, a search pointer corresponding to each index number may be present at the head of the external extended information file, and at the head of each piece of external extended information in the external extended information file, the size of the information itself may be recorded so that the address of the external extended information corresponding to the index number can be calculated

In any forms shown in FIGS. 25 (b), 26 (a) and 26 (b), the external extended information can be designated and may have any form.

FIG. 53 shows an example of the configuration of the external extended information file illustrated in FIGS. 25 and 26. In this external extended information file, APP1 (application data segment 1) included in a recorded DCF Basic file is stored. APP1 is recorded from the head of the logical sector; in the case when the end of APP1 does not coincide with the end of the logical sector, padding data is recorded therebetween. Any value may be used as the padding data. This APP1 includes metadata, such as photographing time, aperture value, etc. In addition, a thumbnail image of 160 pixels x 120 pixels is included definitely. APP1 is also referred to as Exif annexed information.

The external extended information file shown in FIG. 53 is made reference to by Entry Point of FIG. 22 shown in the first embodiment and third, fourth or sixth embodiment described later or Section Marker of FIG. 23. In other words, the extended information in this Entry Point or the extended information in the Section Marker includes the external extended information link information shown in FIG. 25 or FIG. 26, and the external extended information link information includes the file name of the external extended information file shown in FIG. 53 as the external extended information file name. In addition, in the case when the external extended information link information has an extended information start address, an offset address up to the head of APP1 in the file is stored. Furthermore, in the case when the external extended information link information has an extended information index number, the identification number of the APP1 in the file is stored.

FIG. 54 shows the data of the head portion of a DCF Basic file. The head portion of the DCF Basic file begins in the sequence of SOI (Start Of Image) and APP1. SOI is formed of only an SOI marker (OxFFD8). The contents of the APP1 are recorded in the sequence of an APP1 marker (OxFFE1), the data size of APP1 (excluding the data size of the APP1 marker) and the contents of the APP1. The maximum value of the data length field of the APP1 is 65535.

FIG. 56 shows the detailed data structure of a DCF Basic file 321. The DCF Basic file 321 comprises SOI322, APP1 (323), JPEG-compressed DCF Basic Primary image (324) and EOI (End Of Image) 325.

APP1 (323) comprises annexed information 326 mainly relating to DCF Basic Primary image and the thumbnail data 327 of the DCF Basic Primary image 324. The annexed information 326 relating to DCF Basic Primary image comprises 0th IFD, EXif IFD, Int. IFD (interoperability IFD) and 1st IFD. The thumbnail data 327 comprises SOI, JPEG-compressed thumbnail images and EOI. 0th IFD includes image resolution and the like. EXif IFD includes an aperture value, shutter speed value, maker note, comment, etc. The maker note is a field that can be set originally by the maker.

Each IFD is formed of a common data structure referred to as a tag. The DCF Basic file 321 is a subset obtained by limiting the EXif image file.

FIG. 57 shows the detailed data structure of a TIFF file 331 conforming to the EXif standard. The TIFF file 331 comprises a TIFF header 332, annexed information 333 conforming to the EXif standard, thumbnail images (uncompressed) 334 and image data (uncompressed) 355. The annexed information 333 conforming to the EXif standard comprises 0th IFD, EXif IFD, Int. IFD and 1st IFD, just as in the case shown in FIG. 56. In the DCF standard, the TIFF file 331 is treated as a DCF extended image file. In addition, in the case when the DCF extended image file is recorded, the recording of a DCF thumbnail file 336 is recommended. The DCF thumbnail file 336 comprises SOI 337, APP1 (however, record option) 338, JPEG-compressed thumbnail images 339 and EOI 340. APP1 (338) includes 0th IFD, EXif IFD, Int. IFD and 1st IFD, serving as annexed information conforming to the EXif standard.

FIG. 58 shows the physical locations of data on the DVD-RAM disk 315. The external extended information file is recorded in the area 309 on the inner circumference side, and the DCF Basic file 321 or the DCF extended image file 331 is recorded in the area 310 on the outer circumference side. It is assumed that the area 309 on the inner circumference side has been reserved as a recording area in which the external extended information file is recorded by a recorder in advance.

In other words, the area 310 on the outer circumference side is a user area in which data used by the user, such as the DCF Basic file 321, the DCF extended image file 331 and other animated image data, is recorded. In addition, the area 309 on the inner circumference side is a management area in which management information for managing data recorded in the area 310 on the outer circumference side is recorded.

FIG. 59 shows a DVD-RAM disk 315 on which the DCF Basic files 321 are recorded. In FIG. 59 (a), the left side on the page corresponds to the inner circumference side of the DVD-RAM disk 315, and the right side corresponds to the outer circumference side of the DVD-RAM disk 315. The annexed information portion of each DCF Basic file 321 is recorded in the area 309 on the inner circumference side, and the DCF Basic file 321 comprising annexed information and compressed data is recorded in the area 310 on the outer circumference side of the DVD-RAM disk 315. In other words, the DCF Basic file 321 is recorded in the area 310 on the outer circumference side of the DVD-RAM disk 315, and the copy of the annexed information is recorded in the area 309 on the inner circumference side of the DVD-RAM disk 315. The compressed data in FIG. 59 (a) corresponds to the DCF Basic Primary image 324 and EOI (325) of FIG. 56. In addition, in FIG. 59 (a), the annexed information corresponds to APP1 (323) and SOI (322) of FIG. 56.

As described above, in the area 309 on the inner circumference side of the DVD-RAM disk 315, pieces of annexed information constituting the DCF Basic file 321 are recorded collectively, and in the area 310 on the outer circumference side of the DVD-RAM disk 315, the annexed information and compressed data constituting the DCF Basic file 321 are recorded. For example, with respect to the DCF Basic file 321 comprising annexed information (311b) and compressed data 311c, the annexed information (311b) and compressed data 311c have been recorded in the area 310 on the outer circumference side of the DVD-RAM disk 315, and annexed information (311a), that is, the copy of the annexed information (311b), has been recorded in the area 309 on the inner circumference side of the DVD-RAM disk 315.

Thumbnail display by using the DVD-RAM disk 315 is carried out by only sequentially reading the annexed information (311a), the annexed information (312a) and the annexed information (313a) stored in the area 309 on the inner circumference side of the DVD-RAM disk 315 in the direction from the inner circumference side to the outer circumference side of the disk, for example. Hence, long-time seek operation in the case of the conventional DVD-RAM disk 301 shown in FIG. 62 does not generate. As described above, in accordance with the first embodiment, thumbnail display can be attained quickly even if large amounts of the DCF Basic files 321 have been recorded on the DVD-RAM disk 315. Furthermore, in the case when the DCF Basic files 321 are retrieved by using the date information and the like stored in the annexed information portion, as indicated by the arrows shown in FIG. 59 (a), just as in the case of thumbnail display, each piece of the annexed information can be accessed by fewer seek operations, whereby the retrieval can be attained quickly.

FIG. 59 (b) shows the operation in the case when the still images of the DCF Basic files 321 are displayed. In the case when the still images of the DCF Basic files 321 are displayed, it is necessary to access both the annexed information and compressed data constituting the DCF Basic file 321. In this case, for example, the annexed information (311b) and compressed data 311c recorded in the area 310 on the outer circumference side of the DVD-RAM disk 315 are accessed. In other words, the annexed information stored in the area 309 on the inner circumference side of the DVD-RAM disk 315 is not accessed. Hence, it is not necessary to alternately access the area 309 on the inner circumference side and the area 310 on the outer circumference side of the disk, whereby seek operation hardly occurs as indicated by the arrows shown in FIG. 59 (b). In other words, the still image data of the. DCF Basic file 321 can thus be displayed quickly.

The case wherein the DCF Basic file is recorded on the DVD-RAM disk 315 has been described above; however, without being limited to this, even in the case when the TIFF file 331 is recorded on the DVD-RAM disk 315, similar descriptions can be applied. However, in the case when the TIFF file 331 is recorded on the DVD-RAM disk 315, it is assumed that the annexed information 333 conforming to the EXif standard and the DCF thumbnail file 336 have been recorded in the area 309 on the inner circumference side of the DVD-RAM disk 315, and that the TIFF file 331 and the DCF thumbnail file 336 have been recorded in the area 310 on the outer circumference side of the DVD-RAM disk 315.

In this embodiment, it has been described that all the copies of the annexed information are recorded in the area 309 on the inner circumference side of the DVD-RAM disk 315; however, the configuration is not limited to this. It may be possible to use a configuration wherein some of the copies of the annexed information are recorded in the area 3099 on the inner circumference side of the DVD-RAM disk 315. More specifically, in the case when all the copies of the annexed information are recorded in the area 309 on the inner circumference side of the DVD-RAM disk 315, all of the APP1 (323) and SOI (322) shown in FIG. 56 are copied; in the case when some of the copies are recorded, the SOI (322) shown in FIG. 56 is not recorded but the whole of the APP1 (323) or the excerpt information thereof is recorded, for example. In the case when the excerpt information of the APP1 (323) is recorded, information excluding the APP1 marker shown in FIG. 54 or information further excluding the APP1 data length is recorded, for example.

In other words, recording may be carried out in the area 309 on the inner circumference side of the DVD-RAM disk 315 by using SOI and APP1 shown in FIG. 54 as units, or recording may also be carried out by using only the APP1 as a unit, or recording may also be carried out by using the portion obtained by excluding the first two bytes (APP1 marker) from APP1 as a unit, or recording may also be carried out by using the portion obtained by excluding the first four bytes (APP1 marker and APP1 data length) from APP1 as a unit. However, in the case when the first four bytes are excluded, the data size may be recorded separately.

Briefly speaking, at least the copies of thumbnail images or the copies of retrieval information for retrieving image information should only be recorded in the area 309 on the inner circumference side of the DVD-RAM disk 315.

The DCF Primary image 324 in accordance with this embodiment is an example of image information in accordance with the present invention; the area 309 on the inner circumference side in accordance with this embodiment is an example of the second area in accordance with the present invention; and the area 310 on'the outer circumference side in accordance with this embodiment is an example of the first area in accordance with the present invention.

When still images are photographed by a recorder (for example, a DVD camcorder) and DCF Basic files are recorded, information regarding the recording sequence of the still images is stored by recording Entry Point and Section Marker simultaneously, as indicated in the first embodiment and third, fourth or sixth embodiment described later.

In addition, in the case when the recorded still images are displayed by index (for example, in the case when the thumbnails of nine still images recorded are displayed on one screen), a thumbnail file is read in advance and placed on the memory, and index display is carried out quickly by using the thumbnail data on the memory. Since the data amount of the thumbnail data is about 8 KBytes for one piece, many thumbnails can be placed on the memory. Furthermore, even in the case when the total of the still images is large and when all of the thumbnail data cannot be placed on the memory, if annexed information is arranged in the sequence of recording, by carrying out display while sequentially reading the external extended information files in the sequence of recording, display can be carried out quickly in comparison with the case wherein the thumbnail data on the outer circumference side is read.

In the case when the still images generated by self-encoding in the recorder in accordance with the above-mentioned configuration, the APP1s generated at the time of recording the DCF Basic files can be directly recorded in external extended information file in accordance with the first embodiment, whereby external extended information can be created easily.

On the other hand, in the case when the DCF Basic files are received from a digital still camera connected to a recorder (for example, the DVD camcorder shown in FIG. 60) via a digital interface and recorded on a DVD-RAM disk on the DVD camcorder side, the sequence of the recording can be stored similarly by recording Entry Point or Section Marker.

Furthermore, in the case when a recorder (for example, the DVD camcorder 350 shown in FIG. 60) has a memory card interface 354, the DCF Basic files having been recorded in a memory card can be stored on the DVD-RAM disk 315 via the memory card interface 354. In this case, the sequence of the recording can be stored similarly by recording Entry Point or Section Marker.

At this time, the external extended information file generation section 352 of the recorder (the DVD camcorder 350) reads the first six bytes of the DCF Basic file having been received and recorded, detects the data size of APP1 recorded at the last two bytes, reads its data portion, and copies the whole of the APP1 portion having been read as the result to the inside of the external extended information file. Then, external extended information link information is recorded inside the extended information of Entry Point or Section Marker.

In accordance with the above-mentioned configuration, even in the case when an outside-encoded DCF Basic file is fetched and recorded, thumbnail data can be additionally recorded easily into the external extended information file.

In addition, image index display can be carried out quickly by using the thumbnail images recorded in APP1.

Furthermore, even in the case when metadata, such as recording time and aperture value, recorded in APP1 is retrieved, quick retrieval can be attained by using the external extended information file. In the case of an optical disk, such as a DVD-RAM disk in particular, no seek is generated, whereby the effect of using the external extended information file is significant.

Still further, since all the DCF Basic files, separate from the external extended information file, are recorded on the outer circumference side of the DVD-RAM disk 315, even in the case when the DVD-RAM disk 315 is inserted into the DVD-RAM drive of the DVD camcorder 350 as shown in FIG. 61 and accessed from a personal computer 361, one still image can be accessed quickly and reproduced.

Still further, in the first embodiment, both of the metadata and thumbnail data are stored in one external extended information file; however, either of them may be stored.

Still further, in the first embodiment, APP1 included in the DCF Basic file having been outside-recorded is directly stored in the external extended information file; however, in the case when the data size of APP1 is too large, part thereof may be extracted and then stored. However, even in this case, the internal data structure of APP1 should conform to the DCF standard. For example, in the case when the data size of the maker note field (maker note tag) in Exif IFD of APP1 is larger than a predetermined data size, this field is omitted or subjected to other processing.

Still further, in the first embodiment, APP1 is directly copied and stored into the external extended information file; however, the thumbnail data may be separated from metadata inside APP1, and separate external extended information files may be created, and reference may be carried out from Entry Point or Section Marker. However, in this case, more detailed internal data structure analysis of APP1 is required. In the case when thumbnail data is extracted from the inside of APP1 to generate compact metadata, it is necessary to consider recalculation of metadata value expression types (eight types: BYTE, ASCII, SHORT, LONG, RATIONAL, UNDEFINED, SLOG and SRATIONAL) and pointer information, whereby processing becomes complicated.

Still further, although the thumbnail data is separated from the metadata, they may be included in one file, instead of being included in separate external extended information files.

Still further, in the first embodiment, although only the DCF Basic file is explained as a target, the thumbnail data and metadata regarding other still image files (for example, JPEG2000 file, bitmap file and photo CD file) may be stored in the extended information file.

Still further, in the first embodiment, although only the DCF Basic file is explained as a target, a DCF extended image file may be included. The DCF thumbnail file recorded simultaneously with the DCF extended image file may be directly stored as thumbnail data in the external extended information file. However, in this case, the DCF thumbnail file does not necessarily include metadata (annexed information conforming to the Exif standard) owing to the regulations of the DCF standard. Hence, it is necessary to add metadata so that APP1 becomes similar to that in the case of the DCF Basic file. For example, when a DCF extended image file is a TIFF file conforming to the Exif standard, metadata conforming to the Exif standard is stored in the TIFF file, whereby the copy of this data may be added.

Still further, in the first embodiment, although only the DCF Basic file is explained as a target, a TIFF file conforming to the Exif standard may be included. In this case, annexed information stipulated by the Exif standard is included in the TIFF file. The copy of this annexed information may be stored in the external extended information file. However, in this case, the thumbnail data is not necessarily be included in the TIFF file owing to the regulations of the Exif standard. In addition, the thumbnail data included in the TIFF file is determined to be uncompressed wing to the regulations of the Exif standard. Hence, with respect to thumbnail data, it is desirable that thumbnail data subjected to JPEG compression or the like should be stored in the external extended information file.

Still further, in the first embodiment, the thumbnail data of animated images may be mixed with the thumbnail data of a still image file to form one external extended information file.

Still further, in the first embodiment, the metadata of animated images may be mixed with the metadata of a still image file to form one external extended information file.

Still further, in the first embodiment, although it is assumed that APP1 is stored in an external extended information file made reference to from Entry Point or Section Marker, other data may be made reference to, instead of files made reference to from Entry Point or Section Marker.

Still further, in the first embodiment, although it is assumed that APP1 is stored in an external extended information file, it is not necessary to include an APP1 marker and an APP1 data length.

(Second embodiment)

Next, a second embodiment will be described.
It is assumed that this embodiment is similar to the first embodiment with respect to the configurations shown in FIGS. 21 to 26 and explained in the first embodiment.
FIG. 27 is a view showing the data structure of an extended information ID (Extension ID).
In FIG. 27 (a), the extended information ID has a character string representing external extension; it is assumed that the range of data just before the string end code is effective data. Furthermore, in FIG. 27 (b), the extended information ID designates a character string representing external extension; a conversion table of the designated ID and the character string representing external extension is provided separately, and the extension information can be represented by referring to the conversion table.
In both of the forms shown in FIGS. 27 (a) and 27 (b), external extension can be designated, whereby it is assumed that both forms can be taken.
FIGS. 28 and 29 are views showing data structures with respect to the descriptions of an extended information set (IT_DATA_SET). The figures show the details and other forms of the structure explained in FIG. 24. It is assumed that any of the data structures illustrated in FIGS. 28 (a), 28 (b), 29 (a) and 29 (b) may be used.
FIG. 30 shows extended information sub_ID and extended information copyright information in extended information, and the extended information sub_ID indicates extended information type identification information shown in FIG. 30 (a). In addition, the extended information copyright information in FIG. 30 (a) is information recorded for copyright protection as shown in FIG. 30 (b).
FIG. 31 is a view showing a data structure in the case when the extended information area of program management information has a pointer to a thumbnail. In this case, "FILE NAME" representing an external file name is selected as IT_TY of the extended information, and "MEI/s0001.JPG" serving as the still image file name of one scene of program 1 for example is recorded as DATA. As for a file structure, a directory for each apparatus maker may be created in the VIDEO_RT directory (FIG. 31). This can solve problems due to overlapping of file names among apparatus makers.

FIG. 32 is a view showing a data structure in the case when the Entry Point extended information area is provided with pointers to thumbnail data. By providing the external file name of a still image at each Entry Point as shown in FIG. 32 as extended information, such a program selection menu screen as shown in FIG. 32 can be created. As for a file structure, a directory for each apparatus maker may be created in the VIDEO_RT directory (FIG. 32). This can solve problems due to overlapping of file names among apparatus makers.

FIG. 33 is a view showing a data structure in the case when a still image display zone is recorded in the Section Marker management information (a Section Marker designating a still image display zone in this way is hereafter referred to as a Still Section Marker). On the other hand, FIG. 34 is a view showing the state of display in the case when the program shown in FIG. 33 is reproduced.

As shown in FIG. 33, by providing a Still Section Marker in the management information of a program and by recording the name of a still image file to be reproduced, the reproduction time of the still image file and the like as extended information required for still image display, high-precision still image display can be carried out in the period of a designated reproduction time from a start time designated on the apparatus side or the like, as shown in FIG. 34, even in the case when no still image data is included in the MPEG stream.

Furthermore, by automatically recording Still Section Markers on the recording apparatus during recording of still images, sequence information of photographing by the user can be stored; during reproduction, not only the respective reproduction of animated images and still images but also the reproduction of the sequence of their recording can be carried out.

Although the file names of still images are recorded in the extended information of Still Section Marker, the name of the directory in which the still image files are stored, for example, a DCF directory name, may also be recorded. In this case, the still image files under the designated directory are reproduced sequentially. As the reproduction time of the still image files in this case, the reproduction time information of each still image file or the total reproduction time information of all the files under the directory may be stored in the extended information of Still Section Marker.

Furthermore, the reference information to the external extended information file, in which the list of the names of still image files are stored, may be recorded in the extended information of Still Section Marker. In other words, the list of still image file names and directory names to be displayed may be stored in the external extended information of the external extended information file shown in FIG. 25 or 26. In this case, information regarding the reproduction times of still image files may also be stored in the external extended information file.

The information to be stored in the extension information of Still Section Marker is similar to that used in the following embodiments.

FIG. 35 is a view illustrating another display example of Still Section Marker.

In FIG. 35 (a), information specifying the start position of SM in a program and information specifying the end position of SM in the program are recorded to specify the display positions of Still Section Markers, and FIG. 35 (b) shows the state of the display of the program.

Both of the methods shown in FIGS. 33 and 35 may be used to specify the display position of Still Section Markers.

The Still Section Marker addition method shown in FIG. 33 will be described by using the flowchart shown in FIG. 36.

In FIG. 36, first, loop 1 from step 501 to step 505 is carried out from the start of recording operation to the end of the recording. In the loop 1, a recording object is generated by a recording apparatus (at step 502), and the recording object is recorded (at step 503). Then, object information and time map information for the object generated at step 502 are generated (at step 504). After the end of loop 1, the object information and time map information generated at step 504 are recorded (at step 506), then, reproduction path information is generated and recorded (at step 507). In the end, Section Marker information is generated and recorded in the zone wherein recording is carried out (at step 508), whereby the recording operation is ended.

If still image recording is carried out by instructions or the like of the user during the loop 1 operation from step 501 to step 505, Still Section Markers are generated and recorded at step 508. Still Section Markers are generated so that a program is reproduced in the sequence wherein animated images and still images are recorded.

The generation may be carried out in a desired different reproduction sequence at the time of later reproduction in the case when the user or system intends to do so.

Even during operations other than recording operation, Section Marker information may be generated and recorded at desired timing.

Section Marker information may not be recorded during recording operation.

A method of reproducing a program to which Section Markers shown in FIG. 33 are added will be explained by using the flowchart shown in FIG. 37. In FIG. 37, the reproduction path information recorded on the disk is read (at step 601). Next, on the basis of the reproduction path information recorded at step 601, data to be reproduced is selected (at step 602), and the time map information of the target data determined at step 602 is read (at step 603), and the Section Marker information is read (at step 604). While the data to be reproduced is present, it is assumed that loop 1 from step 605 to step 609 is carried out. In loop 1, the object to be reproduced is read (at step 606). Next, a judgment is made as to whether the object to be reproduced is in the zone designated by the Section Marker information or not (at step 607); in the case when the object is in the zone, a judgment is made as to whether the reproducing apparatus corresponds to the Section Marker ID or not (at step 610). In the case when the reproducing apparatus corresponds to the Section Marker ID, a further judgment is made as to whether Section Markers are Still Section Markers or not (at step 611). In the case when Section Markers are Still Section Markers, the corresponding still images are read and reproduced (at step 612). In the case when the Section Markers are not Still Section Markers, extended information is executed (at step 613), and reproduction is carried out (at step 608). In the case when the reproducing apparatus corresponds to the Section Marker ID at step 610, only reproduction is carried out (at step 608). After all of data to be reproduced are reproduced, the loop 1 is ended, whereby reproduction operation is ended.

FIG. 38 is a view illustrating a method of recording a program including only still images by using Still Section Markers.

In this example, a main part not including actual reproduction image data is set in the program, and the reproduction time of the main part is set at 0, whereby a program including only still images is formed.

Furthermore, by setting Entry Points or Section Markers so that reproduction of the main part is skipped and by preventing reproduction of the main part, a program including only still images may also be formed.

Even in the case when the setting of the main part is essential in the formation of a program, by using the above-mentioned methods, a program including only still images can be formed.

FIG. 39 is a view illustrating a method of recording a user-defined program to which the Still Section Markers shown in FIG. 33 are added.

Just as in the case of this example, by using a method wherein information is fetched from the Still Section Markers of program 1 and then new Still Section Markers are set, the user-defined program can have a configuration wherein reproduction starts or stops in the middle of the display time of still images in the program.

(Third embodiment)

A third embodiment in accordance with the present invention will be described below by using FIGS. 39 to 44.

In the second embodiment, when a still image display zone is designated by Still Section Markers, a difference may occur in some cases in the display time of a program between a reproducing apparatus conforming to still images and a reproducing apparatus not conforming to still images as shown in FIG. 40. In the embodiment described next, the display time becomes the same even in the case of the reproducing apparatus not conforming to still images.

FIG. 41 is a view illustrating a method wherein a Still Section Marker is provided during recording of each still image and data obtained by MPEG-encoding the same image as the still image is recorded in the main part corresponding to the display period of the still image.

FIG. 42 is a view illustrating display in the case when the program to which Still Section Markers shown in FIG. 41 are added is processed in accordance with the flowchart shown in FIG. 37.

FIG. 42 (a) is a view in the case when the program to which Still Section Markers are added is reproduced by the reproducing apparatus conforming to still image display, and FIG. 42 (b) is a view in the case when the program to which Still Section Markers are added is reproduced by the reproducing apparatus not conforming to still image display.

In 42 (a), a still image file designated by Still Section Markers is displayed in the periods designated by the Still Section Markers; however, in 42 (b), Still Section Markers are ignored by the reproducing apparatus, and a reproduction object is coded directly. As a result, still images having been MPEG-encoded are displayed.

By designating still image display zones by using Still Section Markers as designated above, and by recording data obtained by MPEG-encoding the same image as the still image in the main part, the reproducing apparatus conforming to still images and the reproducing apparatus not conforming to still images can have the same program display time, whereby the user is not confused even when reproduction environment is different.

FIG. 43 is a view illustrating the case when a program including only still images is recorded by using Still Section Markers. Also in this example, just as in the case shown in FIG. 41, a program including only still images is formed by the method wherein a Still Section Marker is provided during recording of each still image and data obtained by MPEG-encoding the same image as the still image is recorded in the main part corresponding to the display period of the still image.

By using the above-mentioned method, the reproducing apparatus conforming to still images and the reproducing apparatus not conforming to still images can have the same program display time; furthermore, even in the case when the setting of the main parts is essential in the formation of a program, a program including only still images can be formed without preparing special dummy data.

In addition, even the reproducing apparatus not conforming to still images can reproduce a program including only still images, except that reproduction quality is low; hence, the user is not confused even when reproduction environment is different.

Furthermore, when the same image as a still image is MPEG-encoded in a main part, the image may be encoded at a resolution higher than those in other main parts. For example, in the case when a main part has standard definition (SD), encoding may be carried out at high definition (HD) in the still image zone. By carrying out encoding at HD, images can be displayed at higher definition by the reproducing apparatus not conforming to still images.

FIG. 44 is a view illustrating a method of recording a user-defined program in the case when the program is a program to which Still Section Markers shown in FIG. 41 are added.

Just as in the case of this example, by using a method wherein the main parts of program 1 are made reference to respectively, information is fetched from Still Section Markers of program 1 and new Still Section Markers are set, the user-defined program can have a configuration wherein reproduction starts or stops in the middle of the display time of still images in the program.

By using the above-mentioned method, the reproducing apparatus conforming to still images and the reproducing apparatus not conforming to still images can have the same program display time, even in the case of this user-defined program 1. (Fourth embodiment)

A fourth embodiment in accordance with the present invention will be described below by using FIGS. 45 to 48.

FIG. 45 is a view illustrating a method wherein Still Section Markers are set during recording of still images and information for referring to special data is recorded in program management information in the zone corresponding to a still image display period. In FIG. 45, it is assumed that the special data in FIG. 45 is data having a reproduction time sufficiently longer than the duration time designated by the Still Section Marker. In addition, all of the special data made reference to by the program management information may be the same data, or respectively different data may also be made reference to. By sharing the same data, the amount of data to be recorded on the disk can be reduced.

Furthermore, the special data may be stored in a file different from the file in which program data is stored.

FIG. 46 is a view illustrating display in the case when the program to which Still Section Markers shown in FIG. 45 are added is processed in accordance with the flowchart shown in FIG. 37.

FIG. 46 (a) is a view in the case when the program to which Still Section Markers are added is reproduced by the reproducing apparatus conforming to still image display, and FIG. 46 (b) is a view in the case when the program to which Still Section Markers are added is reproduced by the reproducing apparatus not conforming to still image display. In FIG. 46 (a), a still image file designated by Still Section Markers is displayed in the periods designated of Still Section Markers; however, in FIG. 46 (b), the decoded contents of the special data are displayed during the still image display periods designated by Still Section Markers.

By designating still image display zones by using Still Section Markers as designated above, and by recording the special data, the reproducing apparatus conforming to still images and the reproducing apparatus not conforming to still images can have the same program display time.

The special data may be data obtained by MPEG-encoding error messages or blue back indicating that still image data is corresponded to this zone.

FIG. 47 is a view illustrating the case when a program including only still images is recorded by using Still Section Markers. Also in this example, just as in the case shown in FIG. 45, a program including only still images is formed by the method wherein a Still Section Marker is set during recording of each still image and special data is recorded in the main part corresponding to the display period of the still image.

By using the above-mentioned method, the reproducing apparatus conforming to still images and the reproducing apparatus not conforming to still images can have the same program display time.

FIG. 48 is a view illustrating a method of recording a user-defined program in the case when the program is a program to which Still Section Markers shown in FIG. 45 are added. Just as in the case of this example, by using a method wherein the main parts of program 1 are made reference to respectively, information is fetched from Still Section Markers of program 1 and new Still Section Markers are set, the user-defined program can have a configuration wherein reproduction starts or stops in the middle of the display time of still images in the program.

By using the above-mentioned method, the reproducing apparatus conforming to still images and the reproducing apparatus not conforming to still images can have the same program display time, even in the case of this user-defined program 1.

(Fifth embodiment)

A fifth embodiment in accordance with the present invention will be described below by using FIGS. 49 to 50.

FIG. 49 is a view illustrating a Still Section Marker, in the extended information of which overlay attribute information in addition to a still image file name is described.

In this case, the overlay attribute information shown in FIG. 49 has the presence/absence of an overlay instruction, an overlay instruction, etc. A reproducing apparatus conforming to overlay can display a still image external file while a designated overlay method is carried out in still image display zones wherein Still Section Markers are set.

FIG. 50 is a view illustrating the display at the time when the data shown in FIG. 49 is displayed. FIG. 50 (a) is a display at the time when data to which Section Markers having the overlay attribute information as shown in FIG. 49 is added is reproduced by an apparatus conforming to overlay, and 50 (b) is a display at the time when data to which no Section Marker is added in FIG. 49 is reproduced. In FIG. 50 (a), a still image is displayed while the overlay instruction contents in the overlay attribute information are carried out at the portion wherein main part 2 is displayed.

The contents of the overlay instruction at this time are the designation of sound reproduction/non-reproduction of main parts, the designation of still image location information (centering, moving upward, etc.), the designation of still image scaling information (reduction to 80% or the like), the designation of main part image displaying/non-displaying in the remaining area at the time when the still image is subjected to scaling down or centering, the designation of transition effects, etc.

In this example, although Section Markers are set for the main parts, they may also be set at the periods corresponding to the main parts 1'/2' shown in FIGS. 41 and 45 (the periods during which still images are MPEG-encoded and recorded or the recording periods of the special data).

Furthermore, in this case, information indicating the type (still image, special data, etc.) of the periods corresponding to the main parts 1'/2' shown in FIGS. 41 and 45 may be added.

(Sixth embodiment)

A sixth embodiment in accordance with the present invention will be described below by using FIGS. 51 and 52.

FIG. 51 is a view showing another structure of the Section Marker; unlike the structure shown in FIG. 23, the pointer to the thumbnail data corresponding to the Section Marker is held as a common data structure.

In this case, the pointer information to thumbnail data shown in FIG. 51 has the name of an external file serving as still images, just as explained in FIGS. 31 and 32. In addition, in the still image display zones wherein Still Section Markers are set by the reproducing apparatus not conforming to still images, still image external files made reference to as thumbnail data, instead of still image files, can be displayed.

At this time, by setting the data format of the still image external file so as to have the data structure common to other program information and the thumbnail data of Entry Point shown in FIGS. 31 and 32, the system for thumbnail recording and reproduction can be shared, whereby an efficient system can be configured.

In addition, the information to the pointer to thumbnail data may be the external extended information file explained in FIGS. 25 and 26; in this case, each piece of thumbnail data is stored as each piece of external extended information in the external extended information file.

In addition, just like Section Marker, the pointer to the thumbnail data corresponding to Entry Point may have a common data structure. FIG. 52 shows the data structure obtained at this time. Hence, in the case when a still image reproduction zone is managed by using Entry Point, the thumbnail data, instead of the still image file, can be displayed in the still image display zone by the reproducing apparatus not conforming to still images.

Furthermore, the format of the extended information in accordance with the embodiments is not limited to those explained by using FIGS. 24, 28, 29, etc., but the format may have a predetermined data structure corresponding to the type information of Entry Point and Section Marker.

In the embodiments described above, although examples wherein the still image reproduction zones are indicated by using Section Markers are explained, similar still image reproduction zones may be managed by using the Entry Points explained in FIG. 22.

The embodiment in this case will be described by using FIG. 55. As shown in FIG. 55, the Entry Point type information indicates that its Entry Points correspond to still image reproduction zones, position specifying information in the program indicates the start positions of the still image reproduction zones, and reference information to still image files and the reproduction times of the still image files are stored in the extended information.

Just as in the cases of the embodiments described already, data obtained by MPEG-encoding the same image as the still image in the main part corresponding to the still image display period may be recorded, information for making reference to special data may recorded in the management information of the program, or nothing particular may be recorded.

In the embodiments described above, only examples wherein one Section Marker is located in the same position of a program is shown; however, as extended information, processing conditions in the case wherein plural Section Markers are set at the same position of a program can also be described. As an example of this case, in the case when two Section Markers, SM1 and SM2, have been set at the same position of the program, if SM1 is instructed in the extended information of SM1, the fact that other Section Markers are not made reference to is described, for example.

Furthermore, although it is mentioned that all Section Markers are ignored in the above description, it is possible to have a configuration wherein the IDs of Section Markers to be executed and the IDs of Section Markers to be ignored are described separately.

Although explanations are given assuming that a DVD-RAM disk is taken as an information recording medium in the embodiments described above, other optical disks, hard disk drives, other magnetic recording media, semiconductor memories, etc. may also be used instead of the DVD-RAM disk.

In accordance with this embodiment, a program wherein animated images and still images are mixed can be attained.

In accordance with this embodiment, a program comprising only still images can be attained.

In accordance with this embodiment, even in the case when the program is reproduced by using the reproducing apparatus not conforming to still images (Still Section Markers), reproduction of similar still images can be attained, except that the quality of reproduced images is low.

In accordance with this embodiment, the reproduction time for the program can be made identical regardless of the conformity/nonconformity of the reproducing apparatus to the still images. Furthermore, in the case when data obtained by MPEG-encoding an error message indicating that still image data is related thereto is recorded in this zone, a notification that the zone is a zone wherein still images should be reproduced can be given to the user who reproduced the program by using the reproducing apparatus not conforming to still images.

In accordance with this embodiment, overlay of a still image on the main part of the program can be attained.

By the present invention, it is possible to easily create a file of thumbnail images for the recorded still image file.

The program in accordance with the present invention is a program that carries out the functions of all or part of the means (or apparatuses, devices, etc.) of the above-mentioned recording apparatus of the present invention by using a computer and operates in cooperation with the computer.

Furthermore, the program in accordance with the present invention is a program that carries out the functions of all or part of the means (or apparatuses, devices, etc.) of the above-mentioned reproducing apparatus of the present invention by using a computer and operates in cooperation with the computer.

Still further, the recording medium of the present invention is a recording medium having a program that carries out all or part of the functions of all or part of the means (or apparatuses, devices, etc.) of the above-mentioned recording apparatus of the present invention by using a computer, the medium is readable by the computer, and said program having been read is used to carry out the above-mentioned functions in cooperation with the above-mentioned computer.

Still further, the recording medium of the present invention is a recording medium having a program that carries out all or part of the functions of all or part of the means (or apparatuses, devices, etc.) of said reproducing apparatus of the present invention by using a computer, the medium is readable by the computer and said program having been read is used to carry out said functions in cooperation with said computer.

The above-mentioned "part of the means (or apparatuses, devices, etc.)" of the present invention is one or several means in the plural means thereof, and the above-mentioned "part of the steps (or processes, operations, actions, etc.)" of the present invention is one or several steps in the plural steps thereof.

Still further, the above-mentioned "the functions of the means (or apparatuses, devices, etc.)" of the present invention are all or part of the functions of said means, and the above-mentioned "the operations of the steps (or processes, operations, actions, etc.)" of the present invention are all or part of said steps.

Still further, one utilization form of the program of the present invention may be an embodiment that is recorded on a recording medium readable by a computer and operates in cooperation with the computer.

Still further, another utilization form of the program of the present invention may be an embodiment that is transmitted through a transmission medium, is read by a computer and operates in cooperation with the computer.

Still further, the data structure of the present invention includes database, data format, data table, data list, data type, etc.

Still further, the recording medium includes ROM and the like, and the transmission medium includes a transmission medium, such as the Internet, light, electric wave, sound wave, etc.

Still further, the above-mentioned computer in accordance with the present invention is not limited to pure hardware, such as a CPU, but may include firmware, OS and peripheral devices.

Still further, as described above, the configuration of the present invention may be attained by software or by hardware.

INDUSTRIAL APPLICABILITY

As clarified by the above-mentioned descriptions, the present invention can provide a recording medium capable of increasing the processing speed at the time when still images are retrieved by designating aperture, shutter speed, etc. during recording.

Still further, the present invention can provide a recording medium capable of increasing the speed of displaying the indexes of thumbnails.

Still further, the present invention can provide a recording medium capable of increasing the speed of importing still image files.

Still further, the present invention can provide a recording medium capable of increasing the speed of displaying still image files.

Still further, the present invention can provide a recording medium capable of attaining smooth coordinated reproduction of animated image data and still image data recorded on a DVD-RAM disk.

Still further, in the coordinated reproduction of animated image data and still image data, the present invention can provide a recording medium capable of attaining the reproduction of AV data without confusing the user even in the case when the coordinated reproduction of animated image data and still image data is carried out by using an apparatus other than that used for recording.

**Claims**

1. A recording medium on which plural image files having image information and annexed information relating to said image information are recorded, wherein
   said plural image files are recorded in a first area, and
   the whole copy or plural partial copies of said annexed information respectively corresponding to said plural image files are recorded in a second area different from said first area.

2. A recording medium in accordance with claim 1, wherein
   said annexed information includes at least the thumbnail image information of said image information or retrieval information for retrieving said image information, and
   the whole copy or partial copies of said annexed information include at least the copies of the thumbnail image information of said image information or the whole copy or partial copies of the retrieval information for retrieving said image information.

3. A recording medium in accordance with claim 1, wherein
   said first area is a user area in which data used by the user can also be recorded, and
   said second area is a management area in which management information for managing said data is recorded.

4. A recording medium in accordance with claim 3, wherein only said annexed information is recorded in said second area.

5. A recording medium in accordance with claim 1, wherein
   said image file is an Exif image file,
   said image information is an Exif Primary image and EOI (end of image) included in said Exif image file,
   said annexed information is APP1 (application data segment 1) and SOI (start of image) included in said Exif image file, and
   the whole copy or partial copies of said annexed information are said APP1 and SOI, or said APP1, or the portion obtained by excluding the first two bytes from said APP1, or the portion obtained by excluding the first four bytes from said APP1.

6. A recording medium in accordance with claim 1, wherein
   said image file is a DCF Basic file,
   said image information is an Exif Primary image and EOI (end of image) included in said DCF Basic file,
   said annexed information is APP1 (application data segment 1) and SOI (start of image) included in said DCF Basic file, and
   the whole copy or partial copies of said annexed information are said APP1 and SOI, or said APP1, or the portion obtained by excluding the first two bytes from said APP1, or the portion obtained by excluding the first four bytes from said APP1.

7. A recording medium in accordance with claim 1, wherein
   said image file is a TIFF file conforming to the Exif standard and a DCF thumbnail file serving as reduced image information corresponding to said TIFF file
   said image information is TIFF image information included in said TIFF file, and
   said annexed information is annexed information conforming to the Exif standard and included in said TIFF file, and said DCF thumbnail file.

# Fig. 1

Analog broadcasting  Digital broadcasting

TV

PC

Video signal

STB

Digital signal

Video signal

Audio

Video

DVD-RECORDER

DVD camcorder

Still image

Remote controller    DVD

EP 1 494 232 A1

# Fig. 2

encoder 105 ← Video signal

decoder 106 → Video signal

→ Digital signal

104

ECC processing section 102

track buffer 103

101

100

1 sector=2KB

1 ECC block = 16 sectors

EP 1 494 232 A1

EP 1 494 232 A1

# Fig. 3 (a)

Seek

Volume

| | Continuous area A1 | | Continuous area A1 | |

0    a1              a2   a3              a4

# Fig. 3 (b)

Amount of data storage in track buffer

$B$

$B(t2)$

$Va - Vb$

$-Vb$

$t1$          $t2$    $t3$          $t$

Reading of continuous area A1       Seek

# Fig. 4

Storage control section

Semiconductor memory

Hard disk drive

104

105 encoder ← Video signal

106 decoder → Video signal

DVD-RAM drive

102 ECC processing section

103 track buffer

Digital signal

101

100

1 sector = 2KB

1 ECC block = 16 sectors

# Fig. 5 (a)

100

Lead-in area

Data area

Lead-out area

Zone 0

Zone 1

Zone 23

# Fig. 5 (b)

Lead-in area          Data area          Lead-out area

| Zone 0 | Zone 1 | | Zone 23 | |
|--------|--------|---|---------|---|

| | User area 0 | | User area 1 | | ... | User area 23 | | |
|---|---|---|---|---|---|---|---|---|

Alternative area 0

Alternative area 1

Alternative area 23

DMA

Unused area

Unused area

DMA

EP 1 494 232 A1

EP 1 494 232 A1

# Fig. 6 (a)

| User area 0 | User area 1 | ... | User area 23 |
|---|---|---|---|

0 ———————— LSN ————————➤ LastLSN

Volume space

◄—————————————————————➤

# Fig. 6 (b)

0 ———————————— LSN ————————————➤

Volume space

◄—————————————————————➤

File structure and file

Volume structure information          Volume structure information

Inner side ———————— Partition space ————————➤ Outer side

0 ———————————— LBN ————————————➤ LastLBN

EP 1 494 232 A1

## Fig. 7 (a)

```
ROOT
  |—— VIDEO_RT
  |         |———— VIDEO Manager
  |         |———— PS_VOB
  |         |———— TS1_VOB
  |         |———— TS2_VOB
  |         |———— AOB
  |         |———— POB
  |         |———— MNF
```

## Fig. 7 (b)

| Lead-in | Volume | | Lead-out |
|---------|--------|---|----------|

131

135

133

100

Fig. 8

Audio stream

Video stream

GOP GOP GOP GOP

A A A A A

V V V V V V V V V V V V V V

V V V A V V A V V A V V V A V

VOBU VOBU VOBU VOBU

Video Object (MPEG System Stream)

# Fig. 9

Program stream

Pack

Pack header

Packet

Packet header

Transport stream

TS packet header

TS packet

PES packet

| V#1 | | V#2 | | A#1 | | V#3 | | A#2 | | |

Video stream

| I-picture | B-picture | B-picture | P- picture | B-picture |

Audio stream

| Audio frame | Audio frame | Audio frame | Audio frame | Audio frame | Audio frame | Audio frame | |

EP 1 494 232 A1

Fig. 10 (a)

MPEG-TS stream

Adaptation field

TS packet header

Fig. 10 (b)

TS packet

| PID | PCR | Payload | | | Payload | | | Payload |

PES packet

PES packet

PES header

Fig. 10 (c)

| PTS DTS | Video/Audio | | | Video/Audio |

Fig. 11 (a)    MPEG-PS stream

...

Pack

Fig. 11 (b)

... | SCR StreamID |

Pack header

PES packet          PES packet

PES header

Fig. 11 (c)    ... | PTS DTS | Video/Audio |    | | Video/Audio |    ...

EP 1 494 232 A1

# Fig. 12 (a)

TS packet

... | | | | Pay-load | | | | | Pay-load | | | | | Pay-load | | | | | Pay-load | | | | | Pay-load | ...

# Fig. 12 (b)

| header | Adaptation field | Payload |
| --- | --- | --- |

# Fig. 12 (c)

| | Random access indication | | PCR | | Stuffing byte |
| --- | --- | --- | --- | --- | --- |

This indicates head of video/audio frame used as Entry Point.

# Fig. 12 (d)

| | Unit start in-dication | | PID | | Adaptation field control | |
| --- | --- | --- | --- | --- | --- | --- |

This indicates type and attribute of stream.

This indicates start of new PES packet

EP 1 494 232 A1

Fig. 13 (a)

| ... | TS packet | ... | TS packet | ... | TS packet | ... |

PID = 0 PAT table

PID = MMM001 PMAP table #1

PID = MMM002 PMAP table #2

Fig. 13 (b)

PAT table

| Pro-gram 1 | PMAP table #1 |
| Pro-gram 2 | PMAP table #2 |
| ... | ..... |
| Pro-gram n | PMAP table #n |

Fig. 13 (c1)

PMAP table #1

| Video | PID=vv001 |
| Audio | PID=aa002 |

Fig. 13 (c2)

PMAP table #2

| Video | PID=vv002 |
| Audio | PID=aa001 |

Fig. 14 (a)

100

1 sector = 2KB

1 ECC block = 16 sectors

Fig. 14 (b)

2000

PS-VOB

2001

| PS Pack (2KB) | PS Pack (2KB) | PS Pack (2KB) | PS Pack (2KB) | ... | ... | PS Pack (2KB) |
|---|---|---|---|---|---|---|

Fig. 14 (c)

1000

TS1-VOB/TS2-VOB.

1001

| Capsule (8KB) | Capsule (8KB) | Capsule (8KB) | Capsule (8KB) | ... | Capsule (8KB) | Capsule (8KB) |
|---|---|---|---|---|---|---|

| Capsule header (18 B) | ATS (6 B) | TS packet (188B) | ATS (2B) | TS packet (188B) | ... | ATS (2B) | TS packet (188B) |
|---|---|---|---|---|---|---|---|

1002    1003    1004

43 TS packets / Capsule

# Fig. 15 (a)

Video management
information
(Video Manager)

| General information |
|---|
| Object information |
| Reproduction control information |

| PS-VOB information table |
|---|
| TS1-VOB information table |
| TS2-VOB information table |
| User-defined reproduction path information table |
| Original reproduction path information table |
| Title search pointer |

| PS-VOB#1 information |
|---|
| PS-VOB#2 information |
| ⋮ |
| PS-VOB#n information |

| General information |
|---|
| Attribute information |
| Map management information |
| Access map |

| TS1-VOB#1 information |
|---|
| TS1-VOB#2 information |
| ⋮ |
| TS1-VOB#n information |

| General information |
|---|
| Attribute information |
| Map management information |
| Access map |

| TS2-VOB#1 information |
|---|
| TS2-VOB#2 information |
| ⋮ |
| TS2-VOB#n information |

| General information |
|---|
| Attribute information |
| Map management information |
| Access map |

# Fig. 15 (b)

| Map management information |
|---|

| Map effectiveness information |
|---|
| Self-encoding flag |

| Access point information flag |
|---|
| Time access information flag |

EP 1 494 232 A1

# Fig. 16 (a)

Video management information
(Video Manager)

| General information |
|---|
| PS-VOB information table |
| TS1-VOB information table |
| TS2-VOB information table |
| Original reproduction path information table |
| User-defined reproduction path information table |
| Title search pointer |

| O-PGC#1 information |
|---|
| O-PGC#2 information |
| ⋮ |
| O-PGC#n information |

| U-PGC#1 information |
|---|
| U-PGC#2 information |
| ⋮ |
| U-PGC#n information |

| General information |
|---|
| O-CELL#1 information |
| O-CELL#2 information |
| ⋮ |
| O-CELL#n information |

Reproduction sequence ↓

| General information |
|---|
| U-CELL#1 information |
| U-CELL#2 information |
| ⋮ |
| U-CELL#n information |

Reproduction sequence ↓

# Fig. 16 (b)

Reproduction path information
(PGC)

Sequence →

| CELL#1 | CELL#2 | CELL#3 |

| VOB#1 | | VOB#2 | | VOB#3 |

EP 1 494 232 A1

# Fig. 17 Video management information
## (Video Manager)

Original PGC information

O-CELL information#1

| 60a | Type |
| 60b | Object ID |
| 60c | Start_PTM |
| 60d | End_PTM |
| 60e | |

Entry Point information

O-CELL information#2
O-CELL information#3
O-CELL information#4

61  62  63

50  60

User-defined PGC information

U-CELL information#1
U-CELL information#2

70

80

Object information (ObjectI)

| General information | 80a |
| Attribute information | 80b |
| Access map Time area Address area | 80c |

VOB

Sector

Cell

EP 1 494 232 A1

# Fig. 18

EP 1 494 232 A1

Fig. 19

DVD-RAM 100

drive 221

track buffer 220

system control section 212

user I/F section 222

encoder 214

analyzing section 216

decoder 218

digital I/F section 219

still image encoder 224

analog broadcasting tuner 213

digital broadcasting tuner 215

display section 217

IEEE1394 223

camera section

# Fig. 20

ROOT ── DCIM ──┬── 100ABCDE ──┬── ABCD0001.JPG
               │              ├── ABCD0002.JPG
               │              ├── ABCD0003.JPG
               │              ├── ABCD0003.THM
               │              ├── ABCD0003.WAV
               │              ├── ABCD0004.JPG
               │              ├── ABCD0005.TIF
               │              ├── ABCD0005.THM
               │              ├── ABCD0006.JPG
               │
               └── 101ABCDE

DCF directory

DCF object

Files relating to still images

| Extension | Contents of file |
|-----------|------------------|
| JPG | DCF Basic file |
| THM | DCF thumbnail file |
| WAV | Audio file |
| TIF | Other still image file (an example of DCF extended image file) |

EP 1 494 232 A1

EP 1 494 232 A1

Fig. 21

| Program 1 | Program 2 | Program 3 | ... |

Management information of program 1

| General information of program 1 |
| AV data designation information of program 1 |
| Extended information of program 1 |

Management information of program 2

| General information of program 2 |
| AV data designation information of program 2 |
| Extended information of program 2 |

Management information of program 3

| General information of program 3 |
| AV data designation information of program 3 |
| Extended information of program 3 |

⇨ Program 2 is deleted

| Program 1 | Program 3 | ... |

Management information of program 1

| General information of program 1 |
| AV data designation information of program 1 |
| Extended information of program 1 |

Management information of program 3

| General information of program 3 |
| AV data designation information of program 3 |
| Extended information of program 3 |

49

Fig. 22

Program 1  Program 2

EP1  EP2  EP3  EP4

Management information of program

General information of program

Management information of cell

Management information of cell

Management information of Entry Point

Management information of Entry Point

Extended information of program

Management information of Entry Point

Type information of Entry Point

Information specifying position in program

Extended information of Entry Point

This indicates presence/absence of extended information

# Fig. 23

| Start position | End position | Program 1 | | Program 2 | . . . |

SM1    SM2    SM3

| Management information of program |
| --- |
| General information of program |
| Management information of cell |
| ⋮ |
| Management information of cell |
| Management information of Section Marker |
| ⋮ |
| Management information of Section Marker |
| Extended information of program |

| Management information of Section Marker |
| --- |
| Type information of Section Marker |
| Information specifying start position of SM in program |
| Information specifying end position of SM in program |
| Extended information of Section Marker |

This indicates presence/absence of extended information

# Fig. 24

Extended information

IT_DATA_Ns
Number of Item Data

IT_DATA_SET
Sets of Item Data

Extension ID
IT_DATA_Body Size

| IT_DATA_Header #1 | IT_DATA_Body #1 |
| --- | --- |
| IT_DATA_Header #n | IT_DATA_Body #n |

IT_TY_SZ #1
DATA type & size #1

DATA #1
DATA #1

IT_TY_SZ #m
DATA type & size #m

DATA #m
DATA #m

IT_TY
Data Type

IT_SZ
Data Size

In the case of
common Extension ID

- TITLE
- CAST
- CHANNEL
- GENRE
- RECORDING TIME
- SOURCE
- OTHERS
- FILE NAME
- URL
- END CODE
- one of the above

In the case of
inherent Extension ID

- TITLE → Character Code + Title Text Data
- CAST → Character Code + Cast Text Data
- CHANNEL → Channel Code
- GENRE → Genre Code
- RECORDING TIME → Recording time Data
- SOURCE → Source Code
- OTHERS → Character Code + Other Text Data
- FILE NAME → External File Name
- URL → URL text data
- END CODE → Not Exist
- one of the above or other → Not Specified

inherent
extended
information

# Fig. 25 (a)

| Extended information ID |
|---|
| Extended information body |

| Extended information type |
|---|
| External extended information link information |

| Extended information type |
|---|
| Separately defined given data |

# Fig. 25 (b)

Designation of file name

External extended information file

| External extended information link information |
|---|

| External extended information file name |
|---|
| Extended information start address |
| Extended information end address |

Offset address in file

| External extended information_1 |
|---|
| External extended information_2 |
| External extended information_3 |
| External extended information_4 |
| ⋮ |

Extended information made reference to from link information

EP 1 494 232 A1

# Fig. 26 (a)

Designation of file name

External extended information file

| External extended information link information | → | External extended information file name | Offset address in file |
| | | Extended information start address | |
| | | Extended information size | → Size of the corresponding extended information |

External extended information file:
- External extended information_1
- External extended information_2
- External extended information_3
- ⋮

Extended information made reference to from link information

# Fig. 26 (b)

Designation of file name

External extended information file

| External extended information link information | → | External extended information file name | |
| | | Extended information index number | |

Extended information index number from head of file

External extended information file:
- External extended information_1
- External extended information_2
- External extended information_3
- ⋮

Extended information made reference to from link information

# Fig. 27 (a)

Extended information ID is a character string representing external extension

Extended information ID="MEI_DRS_NAVI_V100"

Blank character

| Extended information ID |
|---|
| Extended information body |

→ | M | E | I | _ | D | R | S | _ | N | A | V | I | _ | V | 1 | 0 | 0 | | ▨ | ··· | ▨ |

String end code

# Fig. 27 (b)

Extended information ID is ID number
external extension converted from a character string representing external extension

Conversion table of character string representing external extension and ID number

| Extended information ID |
|---|
| |

Extended information ID=0002

Extended information body

| | |
|---|---|
| Extended information ID=0001 | "MEI_DRS_EXT_MENU" |
| Extended information ID=0002 | "MEI_DRS_NAVI_V100" |
| Extended information ID=0004 | "XXXX_EXT_DATA" |

EP 1 494 232 A1

# Fig. 28 (a)

Number of extended information in extended information set

| Number of extended information sets |
| Extended information set 1 |
| : |
| Extended information set n |

| Extended information ID |
| |
| Extended information 1 |
| : |
| Extended information r |

| Extended information length |
| Extended information body |

# Fig. 28 (b)

| Number of extended information sets |
| Extended information set 1 |
| : |
| Extended information set n |

| Extended information ID |
| Extended information length |
| Extended information body |

EP 1 494 232 A1

# Fig. 29 (a)

| Number of extended information sets |
|---|
| Extended information set search information 1 |
| ⋮ |
| Extended information set search information n |
| Extended information set 1 |
| ⋮ |
| Extended information set n |

| Offset address to extended information set |
|---|

| Extended information ID |
|---|
| Extended information body |

# Fig. 29 (b)

| Number of extended information sets |
|---|
| Extended information set search information 1 |
| ⋮ |
| Extended information set search information n |
| Extended information set 1 |
| ⋮ |
| Extended information set n |

| Extended information ID |
|---|
| Offset address to extended information set |

| Extended information body |
|---|

EP 1 494 232 A1

# Fig. 30 (a)

| General information of program |
|---|
| AV data designation information of program |
| Extended information of program |

| Number of extended information sets |
|---|
| Extended information set 1 |
| ⋮ |
| Extended information set n |

| Extended information ID |
|---|
| Extended information sub ID |
| |
| Extended information length |
| Extended information body |

Extended information copyright information

Extended information type identification information
- Thumbnail data
- HTML document
- URL
- EPG detailed information
- External file link information
- Link information to thumbnail file
- Computer program
- Extended navigation information

# Fig. 30 (b)

| Extended information copyright information |
|---|

| Copy Control Information | ◄— Never Copy/ Copy free/No more Copy/ 1th copy permitted |
|---|---|
| Scrambling flag | ◄— Scrambled/ not Scrambled |
| Scrambling Control Information | ◄— Scramble-type specifying information |
| key information for de-scrambling | |

EP 1 494 232 A1

# Fig. 31

| Program 1 | Program 2 | Program 3 | ... |
|---|---|---|---|

| General information of program 1 |
|---|
| AV data designation information of program 1 |
| Extended information of program 1 |

| General information of program 2 |
|---|
| AV data designation information of program 2 |
| Extended information of program 2 |

| General information of program 3 |
|---|
| AV data designation information of program 3 |
| Extended information of program 3 |

IT_TY: FILE NAME
DATA: still image file name
    of one scene of program 1
      "MEI/s0001.jpg"

IT_TY: FILE NAME
DATA: still image file name of
    one scene of program 2
      "MEI/s0002.jpg"

...

```
ROOT
  |
  |--- VIDEO_RT
  |      |------ VIDEO Manager
  |      |------ TS1_VOB
  |      |------ TS2_VOB
  |      |------ MNF
  |      |
  |      |------ MEI
  |              |------ s0001.jpg
  |              |------ s0002.jpg
  |              |------ s0003.jpg
```

EP 1 494 232 A1

Fig. 32

| Program 1 | Program 2 | ... |

EP1  EP2  EP3  EP4  ...

Extended informa-
tion of EP1

Extended
information
of EP 2

Extended information
of EP3

External file name
of still image ob-
tained at EP1
"MEI/s0001.jpg"

External file name
of still image ob-
tained at EP2
"MEI/s0002.jpg"

External file name
of still image ob-
tained at EP3
"MEI/s0003.jpg"

...

Selected screen of recorded
program

Program selection

Sunday
afternoon  7/3 13:00~14:00

Good morning
news  6/28 7:00~8:00

Professional
baseball  6/30 19:00~21:00

Program name and recording
time information of general
information of program

This indicates still image
file at Entry Point in
program

Program name and recording
time information of general
information of program

Program name and recording
time information of general
information of program

ROOT

├── VIDEO_RT
│   ├── VIDEO Manager
│   ├── TS1_VOB
│   ├── TS2_VOB
│   ├── MNF
│   └── MEI
│       ├── s0001.jpg
│       ├── s0002.jpg
│       └── s0003.jpg

EP 1 494 232 A1

# Fig. 33

Program 1 | Program 2

Main part 1 | Main part 2

SM1  SM2

Reference

Tst1[time]  Tst2[time]

Still image file 1

Still image file 2

Management information of program
- General information of program
- Management information of cell
- ...
- Management information of cell
- Management information of Section Marker
- ...
- Management information of Section Marker
- Extended information of program

Management information of Section Marker
- Type information of Section Marker
- Information specifying start position of SM in program (Tst)
- Still image display time information (duration)
- Extended information of Section Marker

ID indicating Section Marker (=Still Section Marker) designating display period of still image

Still image file name or the like

Fig. 34

EP 1 494 232 A1

| Program 1 | | | | | Program 2 |
|---|---|---|---|---|---|
| Main part 1 | Still image 1 | Main part 2 | Still image 2 | Main part 2 (continued) | |

SM1 ◁

SM2 ◁

Reference

· · ·

duration1[time]

Tst1[time]

duration2[time]

Tst2[time]

Still image file 1

Still image file 2

# Fig. 35 (a)

| Management information of program |
|---|
| General information of program |
| Management information of cell |
| ⋮ |
| Management information of cell |
| Management information of Section Marker |
| ⋮ |
| Management information of Section Marker |
| Extended information of program |

| Management information of Section Marker |
|---|
| Type information of Section Marker ◄ |
| Information specifying start position of SM in program (Tst) |
| Information specifying end position of SM in program (Ted) |
| Extended information of Section Marker ◄ |

ID indicating Section Marker (=Still Section Marker) designating display period of still image

Still image file name or the like

# Fig. 35 (b)

| Program 1 | | | | | Program 2 |
|---|---|---|---|---|---|
| Main part 1 | Still image 1 | Main part 2 | Still image 2 | Main part 2 (continued) | |

SM1 △

SM2 △

Reference

Tst1[time]   Ted1[time]  Tst2[time]   Ted2[time]

| Still image file 1 |
|---|

| Still image file 2 |
|---|

...

EP 1 494 232 A1

# Fig. 36

```
                    ┌──────────────┐
                    │    Start     │
                    └──────┬───────┘
                           │
              ┌────────────┴────────────┐
              │  ┌────────────────────┐ │    Step 501
              │  │  Start of loop 1   │ │
              │  └────────────────────┘ │
              └────────────┬────────────┘
                           │
         ┌─────────────────┴─────────────────┐   Step 502
         │  Generation of recording object   │
         └─────────────────┬─────────────────┘
                           │
         ┌─────────────────┴─────────────────┐   Step 503
         │   Recording of recording object   │
         └─────────────────┬─────────────────┘
                           │
         ┌─────────────────┴─────────────────┐   Step 504
         │  Generation of object information │
         │     and time map information      │
         └─────────────────┬─────────────────┘
                           │
              ┌────────────┴────────────┐
              │  ┌────────────────────┐ │    Step 505
              │  │   End of loop 1    │ │
              │  └────────────────────┘ │
              └────────────┬────────────┘
                           │
         ┌─────────────────┴─────────────────┐   Step 506
         │   Recording of object information │
         │     and time map information      │
         └─────────────────┬─────────────────┘
                           │
         ┌─────────────────┴─────────────────┐   Step 507
         │     Generation and recording of   │
         │     reproduction path information  │
         └─────────────────┬─────────────────┘
                           │
         ┌─────────────────┴─────────────────┐   Step 508
         │     Generation and recording of   │
         │      Section Marker information    │
         └─────────────────┬─────────────────┘
                           │
                    ┌──────┴───────┐
                    │     End      │
                    └──────────────┘
```

# Fig. 37

```
                                                          Start
                                                            │      ⌐ Step 601
                                            Reading of reproduction path information
                                                            │
       Step 610                             Selection of data to be reproduced   ⌐ Step 602
                                                            │
            Apparatus                       Reading of time map information       ⌐ Step 603
  No     corresponding to                                   │
          Section Marker                    Reading of Section Marker information
              ID?                                           │
                                                                                   ⌐ Step 604
                        Yes                         Start of loop 1
       Step 611                                             │         ⌐ Step 605

                                            Reading of object to be reproduced
  No     Section Marker ID                                  │
         =Still-Section-Marker?                                       Step 606
                                                                Zone
       Step 613          Yes     Step 612           Yes     designated by
                                                            Section Marker
   Execution of       Reading and                           information?     ⌐ Step 607
   extended           reproduction of
   information        still images                          │ No

                                                    Reproduction          ⌐ Step 608
                                                            │
                                                    End of loop 1         ⌐ Step 609
                                                            │
                                                           End
```

# Fig. 38

| Program 1 | | | |
|---|---|---|---|
| Main part<br>(dummy data) | Still image<br>zone 1 | Still image<br>zone 2 | Still image<br>zone 3 |

SM1
SM2
SM3

duration1[time]     duration2[time]     duration3[time]

Ts1[time]

Reference

| Still<br>image<br>file 1 | Still<br>image<br>file 2 | Still<br>image<br>file 3 |
|---|---|---|

Reproduction time is set at 0 or SM for skipping reproduction of main part is set

EP 1 494 232 A1

Fig. 39

EP 1 494 232 A1

User-defined program 1

| Still image zone 1 | | Still image zone 2 |

SM1'

Reference to main part 2 of program 1

SM2'

※ Information is fetched from SM1/2, and SM1'/2' are newly set

Duration1'[time]

Tst1'[time]

Duration2'[time]

Tst2'[time]

| Program 1 | | | | | Program 2 |

| Main part 1 | Still image zone 1 | Main part 2 | Still image zone 2 | Main part 2 (continued) |

SM1

SM2

duration1[time]

Tst1[time]

duration2[time]

Tst2[time]

# Fig. 40 (a)

Display by using a reproducing apparatus conforming to still images

| Program 1 | | | | | | Program 2 |
|---|---|---|---|---|---|---|
| Main part 1 | Still image 1 | Main part 2 | Still image 2 | Main part 2 (continued) | | |

SM1

Td1[time]

SM2  Ts2[time]

Ts1[time]

Td2[time]

# Fig. 40 (b)

Display by using a reproducing apparatus not conforming to still images

| Program 1 | | Program 2 |
|---|---|---|
| Main part 1 | Main part 2 | |

※ Difference in display time

EP 1 494 232 A1

# Fig. 41

The same still image as still
image 1 is MPEG-encoded

The same still image
as still image 2
is MPEG-encoded

| Program 1 | | | | | Program 2 |
|---|---|---|---|---|---|
| Main part 1 | Main part 1' | Main part 2 | Main part 2' | Main part 2 (continued) | |

SM1

SM2

Reference

duration1[time]

duration2[time]

Tst1[time]

Tst2[time]

Still image file 1

Still image file 2

· · ·

# Fig. 42 (a)

Display by using
a reproducing
apparatus con-
forming to
still images

| | Program 1 | | | | | Program 2 |
|---|---|---|---|---|---|---|
| Main part 1 | Still image 1 | Main part 2 | Still image 2 | Main part 2 (continued) | | |

SM1      Td1[time]      SM2      Td2[time]

— Ts1[time]      — Ts2[time]

# Fig. 42 (b)

Display by using
a reproducing
apparatus not con-
forming to
still images

| | Program 1 | | | | Program 2 |
|---|---|---|---|---|---|
| Main part 1 | The same MPEG-decoded image as still image 1 | Main part 2 | The same MPEG-decoded image as still image 2 | Main part 2 (continued) | |

EP 1 494 232 A1

# Fig. 43

EP 1 494 232 A1

The same still image as still image 1 is MPEG-encoded

The same still image as still image 2 is MPEG-encoded

The same still image as still image 3 is MPEG-encoded

Program 1

| Main part 1 | Main part 2 | Main part 3 |

SM1

SM2

SM3

duration2[time]

duration3[time]

Ts1[time]

duration1[time]

Ts2[time]

Ts3[time]

Reference

| Still image file 1 | Still image file 2 | Still image file 3 |

# Fig. 44

The same still image
as still image 1 is
MPEG-encoded

※ Information is fetched
from SM1/2, and SM1'/2'
are newly set

**User-defined program 1**

| Reference to main part 1' of program 1 | Reference to main part 2'of program 1 |

Reference to main part 2
of program 1

SM1'

SM2'

Duration1'[time]

Duration2'[time]

Tst1'[time]

Tst2'[time]

| Program 1 | | | | | Program 2 |
|---|---|---|---|---|---|

| Main part 1 | Main part 1' | Main part 2 | Main part 2' | Main part 2 (continued) | |

· · ·

SM1

The same still image as still image 1 is MPEG-encoded

duration1[time]

Tst1[time]

SM2

The same still image as still image 2 is MPEG-encoded

duration2[time]

Tst2[time]

EP 1 494 232 A1

# Fig. 45

# Fig. 46 (a)

Display by using a reproducing apparatus conforming to still images

| Program 1 | | | | | Program 2 |
|---|---|---|---|---|---|
| Main part 1 | Still image 1 | Main part 2 | Still image 2 | Main part 2 (continued) | |

SM1  Td1[time]  SM2  Td2[time]

Ts1[time]  Ts2[time]

# Fig. 46 (b)

Display by using a reproducing apparatus not conforming to still images

| Program 1 | | | | | Program 2 |
|---|---|---|---|---|---|
| Main part 1 | Decoded image of special data | Main part 2 | Decoded image of special data | Main part 2 (continued) | |

# Fig. 47

Special data

Program 1

Main part 1

SM1  SM2  SM3

duration2[time]

duration3[time]

Ts1[time]  Ts2[time]  Ts3[time]

duration1[time] Reference

| Still image file 1 | Still image file 2 | Still image file 3 |

# Fig. 48

The same still image
as still image 1 is
MPEG-encoded

※ Information is fetched
from SM1/2, and
SM1'/2' are newly
set

| User-defined program 1 | | Reference to main part 2 of program 1 |
|---|---|---|
| Reference to main part 1' of program 1 | Reference to main part 2' of program 1 | |

SM1'                 SM2'

Duration1'[time]        Duration2'[time]

Tst1'[time]             Tst2'[time]

| Program 1 | | | | | Program 2 |
|---|---|---|---|---|---|
| Main part 1 | Main part 1' | Main part 2 | Main part 2' | Main part 2 (continued) | |

SM1        Special data      SM2        Special data

duration1[time]              duration2[time]

Tst1[time]                   Tst2[time]

Fig. 49

Program 1 | Program 2

Main part 1 | Main part 2

SM

Tst[time] Ted[time]

Reference

Still image file

Management information of program
General information of program
Management information of cell
...
Management information of cell
Management information of Section Marker
...
Management information of Section Marker
Extended information of program

Management information of Section Marker
Type information of Section Marker
Information specifying start position of SM in program (Tst)
Information specifying end position of SM in program (Ted)
Extended information of Section Marker

ID indicating Section Marker (=Still Section Marker) designating display period of still image

Still image file name or the like
Overlay attribute information
Presence/absence of overlay designation
Overlay designation

# Fig. 50 (a)

In the case when SM having overlay attribute information is added

Display of still image file in accordance with designation of overlay method
  Example: Still image is displayed while sound in this period is reproduced

| | Program 1 | | | | Program 2 | |
|---|---|---|---|---|---|---|
| | | | Still image | | Program 2 | ... |
| Main part 1 | Main part 2 | Still image | Main part 2 | | | |

Tst[time]          Ted[time]

# Fig. 50 (b)

In the case when SM having overlay attribute information is not added

| Program 1 | | Program 2 | |
|---|---|---|---|
| Main part 1 | Main part 2 | | ... |

EP 1 494 232 A1

# Fig. 51

Management information of program

| |
| --- |
| General information of program |
| Management information of cell |
| : |
| Management information of cell |
| Management information of Section Marker |
| : |
| Management information of Section Marker |
| Extended information of program |

Management information of Section Marker

| |
| --- |
| Type information of Section Marker |
| Information specifying start position of SM in program (Tst) |
| Information specifying end position of SM in program (Ted) |
| Pointer to thumbnail data |
| Extended information of Section Marker |

ID indicating Section Marker
(=Still Section Marker)
designating display period
of still image

Still image file
name or the like

# Fig. 52

| Management information of program |
|---|
| General information of program |
| Management information of Cell |
| ⋮ |
| Management information of cell |
| Management information of Entry Point |
| ⋮ |
| Management information of Entry Point |
| Extended information of program |

| Management information of Entry Point |
|---|
| Type information of Entry Point |
| Information specifying position in program |
| Pointer to thumbnail data |
| Extended information of Entry Point |

ID indicating Entry Point (=Still Entry Point) designating display period of still image

Still image file name, display time information (duration), etc.

EP 1 494 232 A1

Fig. 53

EP 1 494 232 A1

# Fig. 54

| Recording position [byte] | Value | Meaning | |
|---|---|---|---|
| 0 | 0xFF | SOI marker | SOI |
| 1 | 0xD8 | | |
| 2 | 0xFF | APP1 marker | APP1 |
| 3 | 0xE1 | | |
| 4 | Len | APP1 data length | |
| 5 | | | |
| ⋮ | | Contents of APP1 | |

Len

EP 1 494 232 A1

Fig. 55

Program 1    Program 2

EP1    EP2    EP3    EP4

Management information of program

| General information of program |
| Management information of cell |
| ... |
| Management information of cell |
| Management information of Entry Point |
| ... |
| Management information of Entry Point |
| Extended information of program |

Management information of Entry Point

| Type information of Entry Point |
| Information specifying position in program |
| Extended information of Entry Point |

ID indicating Entry Point (=Still Entry Point) designating display period of still image

Still image file name, display time information (duration), etc.

# Fig. 56

DCF Basic thumbnail

EP 1 494 232 A1

# Fig. 57

TIFF header — 332

Annexed information conforming to Exif standard — 333

APP1 marker and the like

0th IFD

Exif IFD

Int. IFD

1st IFD

Thumbnail images (uncompressed) — 334

Image data (uncompressed) — 335

331

SOI — 337

APP1 (record option) — 338

Thumbnail image — 339

EOI — 340

336

EP 1 494 232 A1

Fig. 58

315

309    310    Hole

EP 1 494 232 A1

EP 1 494 232 A1

Fig. 59 (a)

Fig. 59 (b)

87

Fig. 60

350

- 315 — DVD-RAM
- 357 — Recording circuit
- 352 — External extended information file generation section
- 356
- 353 — Digital I/F section
- 354 — Memory card I/F section
- 355 — Still image encoder
- 351 — Camera section

Fig. 61

315

361

350

D-IF

PC

EP 1 494 232 A1

Fig. 62

Outer
circumference →

301

Inner
circumference →

302

Annexed
information①

Compressed
data ①

303

Annexed
information②

Compressed
data ②

304

Annexed
information③

Compressed
data ③

Fig. 63 (a)

Annexed information ①

Annexed information ②

Annexed information ③

307a 308a

309

310

Compressed data ①

306b

Compressed data ②

307b

Compressed data ③

308b

305

306a

Inner circumference →

→ Outer circumference

Seek

Read

Fig. 63 (b)

Annexed information ①

Annexed information ②

Annexed information ③

307a 308a 309

310

Compressed data ①

306b

Compressed data ②

307b

Compressed data ③

308b

305

306a

Inner circumference →

→ Outer circumference

## INTERNATIONAL SEARCH REPORT

| International application No. |
|---|
| PCT/JP03/04252 |

| A. CLASSIFICATION OF SUBJECT MATTER |
|---|
| Int.Cl$^7$ G11B20/12, G11B27/00, H04N5/91 |

According to International Patent Classification (IPC) or to both national classification and IPC

| B. FIELDS SEARCHED |
|---|

Minimum documentation searched (classification system followed by classification symbols)
Int.Cl$^7$ G11B20/12, G11B27/00, H04N5/91

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X<br>Y | JP 9-135412 A (Canon Inc.),<br>20 May, 1997 (20.05.97),<br>Full text; Figs. 1 to 13<br>(Family: none) | 1-4<br>5-7 |
| Y | JP 2002-41343 A (Canon Inc.),<br>08 February, 2002 (08.02.02),<br>Full text; Figs. 1 to 20<br>(Family: none) | 5-7 |

☐ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>22 May, 2003 (22.05.03) | Date of mailing of the international search report<br>03 June, 2003 (03.06.03), |
| Name and mailing address of the ISA/<br>Japanese Patent Office | Authorized officer |
| Facsimile No. | Telephone No. |

Form PCT/ISA/210 (second sheet) (July 1998)